(19) Europäisches Patentamt
European Patent Office
Office européen des brevets

(11) Veröffentlichungsnummer: **0 094 019**
**B1**

(12) # EUROPÄISCHE PATENTSCHRIFT

(45) Veröffentlichungstag der Patentschrift: **08.10.86**

(51) Int. Cl.⁴: **C 09 B 62/09**, C 09 B 62/513, D 06 P 3/66, D 06 P 3/10

(21) Anmeldenummer: **83104367.4**

(22) Anmeldetag: **04.05.83**

(54) **Wasserlösliche Disazoverbindungen, Verfahren zu deren Herstellung und ihre Verwendung als Farbstoffe.**

(30) Priorität: **08.05.82 DE 3217312**

(43) Veröffentlichungstag der Anmeldung: **16.11.83 Patentblatt 83/46**

(45) Bekanntmachung des Hinweises auf die Patenterteilung: **08.10.86 Patentblatt 86/41**

(84) Benannte Vertragsstaaten: **BE CH DE FR GB IT LI**

(56) Entgegenhaltungen:
**FR - A - 2 407 960**
**GB - A - 2 008 143**
**GB - A - 2 008 145**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Hoyer, Ernst, Dr., Eptingweg 3, D-6230 Frankfurt am Main 80 (DE)**
Erfinder: **Fass, Rudolf, Memelstrasse 28, D-6233 Kelkheim (Taunus) (DE)**

EP 0 094 019 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung liegt auf dem Gebiet der faserreaktiven Disazofarbstoffe.

Aus der Deutschen Offenlegungsschrift 27 48 929 sind als Farbstoffe geeignete Disazoverbindungen bekannt, die einen Chlortriazinylrest enthalten, an den über Aminogruppen zwei Reste von Azoverbindungen gebunden sind, die eine faserreaktive Gruppe der Vinylsulfonreihe und einen Pyrazolonrest als Kupplungskomponente enthalten.

Es wurden nunmehr neue wertvolle und vorteilhafte wasserlösliche Disazoverbindungen gefunden, die die allgemeine Formel (1)

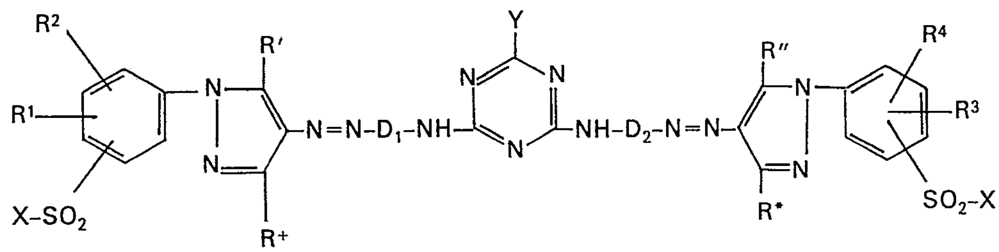

(1)

besitzen. In dieser bedeuten:

$D_1$ ist ein Phenylenrest, vorzugsweise ein m- oder p-Phenylenrest, oder ein Naphthylenrest, die durch einen oder zwei Substituenten substituiert sein können, die aus der Menge von einem Chloratom, einem Bromatom, zwei Sulfogruppen (entsprechend der allgemeinen Formel $-SO_3M$ mit M der nachstehend angegebenen Bedeutung), zwei Carboxygruppen (entsprechend der allgemeinen Formel -COOM mit M der nachstehend angegebenen Bedeutung), zwei Alkylgruppen von 1 bis 4 C-Atomen und zwei Alkoxygruppen von 1 bis 4 C-Atomen ausgewählt sind;

$D_2$ ist ein Phenylenrest, vorzugsweise ein m- oder p-Phenylenrest, oder ein Naphthylenrest, die durch einen oder zwei Substituenten substituiert sein können, die aus der Menge von einem Chloratom, einem Bromatom, zwei Sulfogruppen (entsprechend der allgemeinen Formel $-SO_3M$ mit M der nachstehend angegebenen Bedeutung), zwei Carboxygruppen (entsprechend der allgemeinen Formel -COOM mit M der nachstehend angegebenen Bedeutung), zwei Alkylgruppen von 1 bis 4 C-Atomen und zwei Alkoxygruppen von 1 bis 4 C-Atomen ausgewählt sind, wobei $D_1$ und $D_2$ zueinander gleiche oder voneinander verschiedene Bedeutung besitzen können;

M ist ein Wasserstoffatom oder das Äquivalent eines Metalls, vorzugsweise eines ein- oder zweiwertigen Metalls, wie Alkali- oder Erdalkalimetalls, insbesondere des Natriums, Kaliums oder Calciums;

R′ ist die Aminogruppe oder vorzugsweise die Hydroxygruppe;

R″ ist die Aminogruppe oder vorzugsweise die Hydroxygruppe, wobei R′ und R″zueinander gleiche oder voneinander verschiedene Bedeutungen besitzen können;

$R^+$ ist die Methylgruppe oder eine Carboxygruppe oder eine Carbalkoxygruppe von 2 bis 5 C-Atomen, wie die Carbäthoxygruppe und die Carbomethoxygruppe;

$R^*$ ist die Methylgruppe oder eine Carboxygruppe oder eine Carbalkoxygruppe von 2 bis 5 C-Atomen, wie die Carbäthoxygruppe und die Carbomethoxygruppe, wobei $R^+$ und $R^*$ zueinander gleiche oder voneinander verschiedene Bedeutungen besitzen können;

$R^1$ ist ein Wasserstoffatom, eine Alkylgruppe von 1 bis 4 C-Atomen, eine Alkoxygruppe von 1 bis 4 C-Atomen, ein Chloratom oder ein Bromatom;

$R^2$ ist ein Wasserstoffatom, eine Alkylgruppe von 1 bis 4 C-Atomen, eine Alkoxygruppe von 1 bis 4 C-Atomen oder ein Chloratom;

$R^3$ ist ein Wasserstoffatom, eine Alkylgruppe von 1 bis 4 C-Atomen, eine Alkoxygruppe von 1 bis 4 C-Atomen, ein Chloratom oder ein Bromatom;

$R^4$ ist ein Wasserstoffatom, eine Alkylgruppe von 1 bis 4 C-Atomen, eine Alkoxygruppe von 1 bis 4 C-Atomen oder ein Chloratom, wobei $R^1$, $R^2$, $R^3$ und $R^4$ zueinander gleiche oder voneinander verschiedene Bedeutungen besitzen können;

X ist die Vinylgruppe oder eine ß-Sulfatoäthyl-Gruppe (entsprechend der allgemeinen Formel $-CH_2-CH_2-OSO_3M$ mit M der obengenannten Bedeutung) oder eine ß-Thiosulfatoäthyl-Gruppe (entsprechend der allgemeinen Formel $-CH_2-CH_2-S-SO_3M$ mit M der obengenannten Bedeutung) oder die ß-Chloräthyl-Gruppe, wobei die beiden X in Formel (1) zueinander gleiche oder voneinander verschiedene Bedeutungen besitzen können;

Y ist ein Chlor-, Fluor- oder Bromatom oder eine Sulfogruppe oder eine Gruppe der Formel (2a), (2b) oder (2c)

$-O-R^5$ (2a)

$-S-R^6$ (2b)

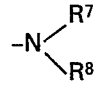

(2c)

in welchen bedeuten:

$R^5$ ist ein Wasserstoffatom, ein gegebenenfalls substituierter aliphatischer Rest oder ein gegebenenfalls substituierter Arylrest; vorzugsweise ist $R^5$ ein Wasserstoffatom oder eine Alkylgruppe von 1 bis 4 C-Atomen, die substituiert sein kann, beispielsweise durch einen oder zwei Substituenten, die der Gruppe Alkoxy von 1 bis 4 C-Atomen, Sulfo, Carboxy, Hydroxy, Sulfato (entsprechend

der allgemeinen Formel $-OCO_3M$ mit M der obengenannten Bedeutung), Phenyl, durch Alkyl von 1 bis 4 C-Atomen, Alkoxy von 1 bis 4 C-Atomen, Nitro, Sulfo, Carboxy und/oder Chlor substituiertes Phenyl, Naphthyl und durch Alkyl von 1 bis 4 C-Atomen, Alkoxy von 1 bis 4 C-Atomen, Nitro, Sulfo, Carboxy und/oder Chlor substituiertes Naphthyl angehören, oder ist der Phenylrest oder ein Naphthylrest oder ein durch Alkyl von 1 bis 4 C-Atomen, Alkoxy von 1 bis 4 C-Atomen, Nitro, Sulfo, Carboxy und/oder Chlor substituierter Phenylrest oder ein durch Alkyl von 1 bis 4 C-Atomen, Alkoxy von 1 bis 4 C-Atomen, Sulfo, Carboxy und/oder Chlor substituierter Naphthylrest;

$R^6$ ist ein gegebenenfalls substituierter aliphatischer Rest oder ein gegebenenfalls substituierter Arylrest oder ein aromatischer heterocyclischer Rest; $R^6$ ist vorzugsweise eine Alkylgruppe von 1 bis 4 C-Atomen, die substituiert sein kann, beispielsweise durch einen oder zwei Substituenten, die der Gruppe Alkoxy von 1 bis 4 C-Atomen, Sulfo, Carboxy, Hydroxy, Sulfato (entsprechend der allgemeinen Formel $-OSO_3M$ mit M der obengenannten Bedeutung), Phenyl, durch Alkyl von 1 bis 4 C-Atomen, Alkoxy von 1 bis 4 C-Atomen, Nitro, Sulfo, Carboxy und/oder Chlor substituiertes Phenyl, Naphthyl und durch Alkyl von 1 bis 4 C-Atomen, Alkoxy von 1 bis 4 C-Atomen, Nitro, Sulfo, Carboxy und/oder Chlor substituiertes Naphthyl angehören, oder ist der Phenylrest oder ein Naphthylrest oder ein durch Alkyl von 1 bis 4 C-Atomen, Alkoxy von 1 bis 4 C-Atomen, Nitro, Sulfo, Carboxy und/oder Chlor substituierter Phenylrest oder ein durch Alkyl von 1 bis 4 C-Atomen, Alkoxy von 1 bis 4 C-Atomen, Sulfo, Carboxy und/oder Chlor substituierter Naphthylrest oder ist der Benzthiazol-2-yl-Rest, der im carbocyclischen Teil durch eine Alkylgruppe von 1 bis 4 C-Atomen, eine Alkoxygruppe von 1 bis 4 C-Atomen, ein Chloratom oder eine Sulfogruppe substituiert sein kann;

$R^7$ ist ein Wasserstoffatom, ein gegebenenfalls substituierter aliphatischer Rest oder ein gegebenenfalls substituierter cycloaliphatischer Rest; vorzugsweise ist $R^7$ ein Wasserstoffatom oder eine Alkylgruppe von 1 bis 4 C-Atomen, die substituiert sein kann, beispielsweise durch einen oder zwei Substituenten, die der Gruppe Alkoxy von 1 bis 4 C-Atomen, Sulfo, Carboxy, Hydroxy, Sulfato, Phenyl und durch Alkyl von 1 bis 4 C-Atomen, Alkoxy von 1 bis 4 C-Atomen, Sulfo, Carboxy und/oder Chlor substituiertes Phenyl angehören, oder ist ein gegebenenfalls durch 1 bis 3 Methylgruppen substituierter Cyclopenthyl- oder Cyclohexylrest;

$R^8$ ist ein Wasserstoffatom, ein gegebenenfalls substituierter aliphatischer Rest oder ein gegebenenfalls substituierter Arylrest; vorzugsweise ist $R^8$ ein Wasserstoffatom oder eine Alkylgruppe, die substituiert sein kann, beispielsweise durch einen oder zwei Substituenten, die der Gruppe Alkoxy von 1 bis 4 C-Atomen, Sulfo, Carboxy, Hydroxy, Sulfato, Phenyl und durch Alkyl von 1 bis 4 C-Atomen, Alkoxy von 1 bis 4 C-Atomen, Sulfo, Carboxy und/oder Chlor substituiertes Phenyl angehören, oder ist der Phenylrest, der durch einen oder zwei Substituenten substituiert sein kann, die der Gruppe Hydroxy, Carboxy, Sulfo, Alkyl von 1 bis 4 C-Atomen, Alkoxy von 1 bis 4 C-Atomen und Chlor angehören, oder ist ein Naphthylrest, der durch einen, zwei oder drei Substituenten aus der Gruppe Hydroxy, Carboxy, Sulfo, Alkyl von 1 bis 4 C-Atomen, Alkoxy von 1 bis 4 C-Atomen und Chlor substituiert sein kann, oder ist die Hydroxygruppe oder eine gegebenenfalls substituierte Aminogruppe, wie die Aminogruppe selbst oder die Phenylaminogruppe oder eine Alkylaminogruppe mit einem Alkylrest von 1 bis 4 C-Atomen, wobei

$R^7$ und $R^8$ zueinander gleiche oder voneinander verschiedene Bedeutungen besitzen können, oder $R^7$ und $R^8$ bilden zusammen mit dem Stickstoffatom einen 5-, 6- oder 7-gliedrigen gesättigten heterocyclischen Ring mit gegebenenfalls einem oder zwei weiteren Heteroatomen, wie beispielsweise einem Stickstoff-, Sauerstoff- oder Schwefelatom, wie insbesondere den Morpholin-, Piperidin- oder Piperazin-Ring.

Ganz allgemein können die in der allgemeinen Formel (1) befindlichen Formelglieder ($R^+$, $R^*$, $R^1$, $R^2$, $R^3$, $R^4$, X Y, $R^5$, $R^6$, $R^7$, $R^8$, $R'$ und $R''$) zueinander gleiche oder voneinander verschiedene Bedeutungen besitzen.

$R^+$ und $R^*$ sind jeweils bevorzugt die Methylgruppe, die Carboxygruppe oder die Carbomethoxygruppe.

$R^1$ und $R^3$ sind jeweils bevorzugt ein Wasserstoffatom oder eine Alkoxygruppe von 1 bis 4 C-Atomen oder ein Chlor- oder ein Bromatom.

$R^2$ und $R^4$ sind jeweils bevorzugt ein Wasserstoffatom, eine Alkylgruppe von 1 bis 4 C-Atomen oder eine Alkoxygruppe von 1 bis 4 C-Atomen.

$D_1$ und $D_2$ sind jeweils vorzugsweise ein meta- oder para-Phenylenrest, die durch einen oder zwei Substituenten substituiert sein können, die aus der Menge von einem Chloratom, einer Carboxygruppe, zwei Alkylgruppen von 1 bis 4 C-Atomen, zwei Alkoxygruppen von 1 bis 4 C-Atomen und zwei Sulfogruppen ausgewählt sind, oder ein Naphthylenrest, der durch eine oder zwei Sulfogruppen substituiert sein kann.

Bevorzugt ist $R^5$ insbesondere ein Wasserstoffatom, eine Alkylgruppe von 1 bis 4 C-Atomen und der Phenylrest. $R^6$ ist bevorzugt insbesondere eine Alkylgruppe von 1 bis 4 C-Atomen, die ß-Hydroxyäthyl-Gruppe, die Carboxymethylgruppe, der Phenylrest oder ein Dinitrophenylrest. Von den Substituenten $R^7$ sind bevorzugt das Wasserstoffatom, eine Alkylgruppe von 1 bis 4 C-Atomen, die ß-Hydroxyäthyl-, die ß-Sulfatoäthyl-, die ß-Sulfoäthyl-, die ß-Methoxyäthyl- und die Carboxymethyl-Gruppe, ebenso die Carboxyäthylgruppen, der Phenylrest und Phenylreste, die durch Carboxy- und/oder Sulfogruppen substituiert sind. Von $R^8$ ist insbesondere bevorzugt das Wasserstoffatom, die Alkylgruppen von 1 bis 4 C-Atomen, die ß-Hydroxyäthyl-Gruppe und die ß-Methoxyäthyl-Gruppe.

Von den Alkylgruppen von 1 bis 4 C-Atomen,

die in den Verbindungen der allgemeinen Formel (1) enthalten sein können, ist die Äthylgruppe und insbesondere die Methylgruppe bevorzugt. Von den Alkoxygruppen von 1 bis 4 C-Atomen, die in den Verbindungen der allgemeinen Formel (1) enthalten sein können, ist die Äthoxygruppe und insbesondere die Methoxygruppe bevorzugt.

Für den Formelrest Y sind neben der Sulfogruppe und dem Chlor-, Brom- oder Fluoratom die folgenden Reste entsprechend den allgemeinen Formeln (2a), (2b) und (2c) hervorzuheben (die Reste sind in Form der freien Säure geschrieben):

$-O-CH_3$, $-O-C_2H_5$, $-O-CH_2-CH_2-CH_3$, $-OH$, 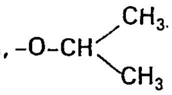, 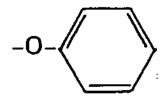, $-S-CH_2-CH_2-OH$,

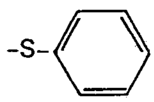, 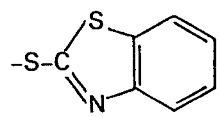, $-S-CH_2-COOH$, 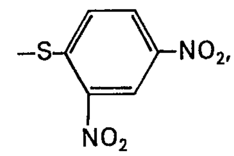, 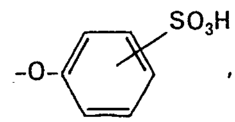,

$-NH_2$, $-NH-CH_3$, $-NHC_2H_5$, $-NHC_3H_7$, 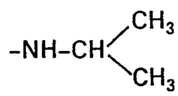, $-NH-CH_2-CH_2-OH$, $-NH-CH_2-CH_2-OSO_3H$,

$-NH-CH_2-CH_2-O-CH_3$, 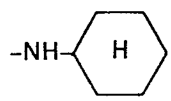, $-NH-CH_2-CH_2-SO_3H$, $-NH-CH_2-COOH$,

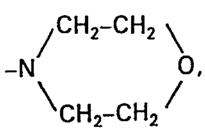 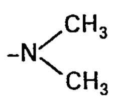, 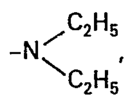, 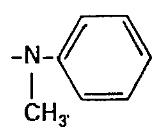, 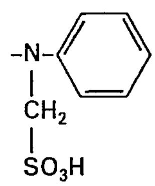,

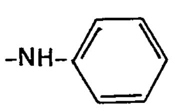, 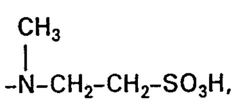, 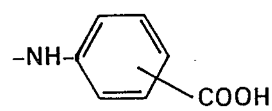, 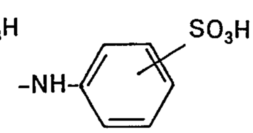,

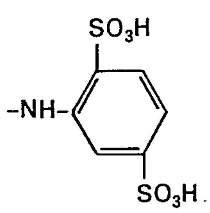, 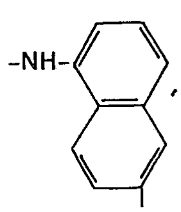, 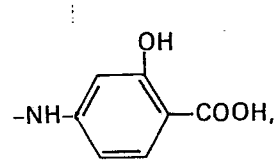, $-NH-OH$, $-NH-NH_2$,

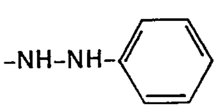, 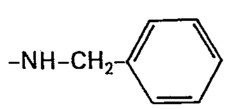, 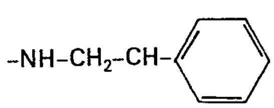.

Bevorzugt ist jedoch Y ein Fluoratom und insbesondere ein Chloratom.

Von dem Formelglied X ist als bevorzugt die Vinylgruppe und insbesondere die ß-Sulfatoäthyl-Gruppe hervorzuheben.

Die erfindungsgemässen Disazoverbindungen können in Form ihrer freien Säure und in Form ihrer Salze, insbesondere neutralen Salze, vorliegen; bevorzugt sind sie in Form ihrer Salze, von denen insbesondere die Alkalimetall- und Erdalkalimetallsalze, so beispielsweise die Natrium-, Kalium- und Calciumsalze, zu nennen sind. Die neuen Verbindungen finden bevorzugt in Form dieser Salze ihre Verwendung zum Färben oder Bedrucken von hydroxy- und/oder carbonamidgruppenhaltigem Material, vorzugsweise Fasermaterial.

Die vorliegende Erfindung betrifft weiterhin Verfahren zur Herstellung dieser erfindungsgemässen Disazoverbindungen. Diese sind dadurch gekennzeichnet, dass man eine Diaminoverbindung der allgemeinen Formel (3)

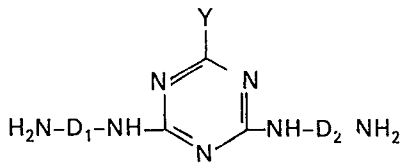

(3)

in welcher $D_1$, $D_2$ und Y die obengenannten Bedeutungen haben, tetrazotiert und mit einer als Kupplungskomponente dienenden Verbindung der allgemeinen Formel (4a) und mit einer als Kupplungskomponente dienenden Verbindung der allgemeinen Formel (4b)

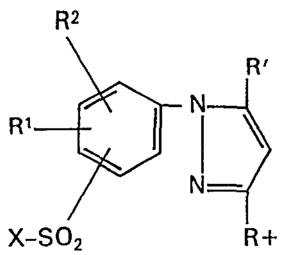

(4a)

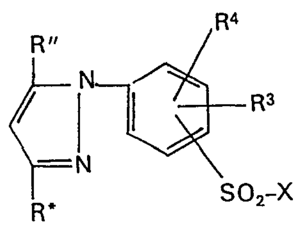

(4b)

in welchen $R^+$, $R^*$, $R'$, $R''$, $R^1$, $R^2$, $R^3$, $R^4$ und die beiden X die obengenannten Bedeutungen haben und hierbei zueinander gleiche oder voneinander verschiedene Bedeutungen besitzen können, somit mit zwei identischen oder voneinander verschiedenen Kupplungskomponenten, in äquivalenten Mengen umsetzt (kuppelt),
oder dass man eine Aminoazoverbindung der allgemeinen Formel (5a) und eine Aminoazoverbindung der allgemeinen Formel (5b)

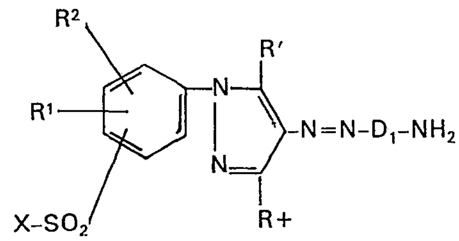

(5a)

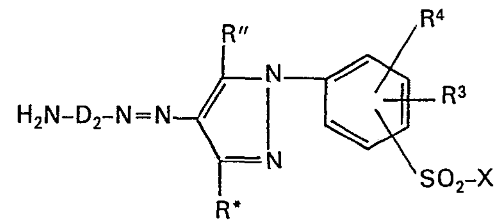

(5b)

in welchen $D_1$, $D_2$, $R'$, $R''$, $R^+$, $R^*$, $R^1$, $R^2$, $R^3$ und $R^4$ sowie die beiden X die obengenannten Bedeutungen haben und zueinander gleiche oder voneinander verschiedene Bedeutungen besitzen können, somit zwei identische oder voneinander verschiedene Aminoazoverbindungen in äquivalenten Mengen mit einer Trihalogeno- oder einer Dihalogenotriazin-Verbindung der allgemeinen Formel (6)

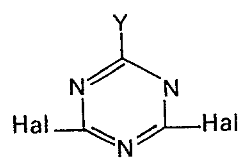

(6)

in welcher Y die obengenannte Bedeutung besitzt und Hal jeweils ein Chlor-, Brom- oder Fluoratom bedeuten, umsetzt (kondensiert),
oder dass man eine Aminoazoverbindung der allgemeinen Formel (7)

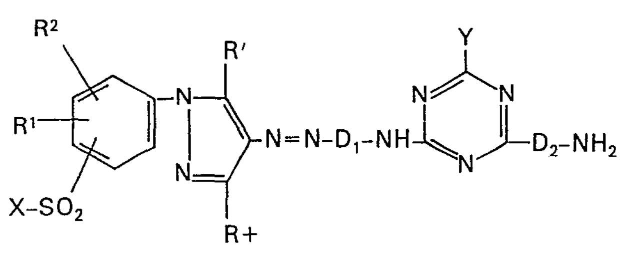

(7)

in welcher $D_1$, $D_2$, $R'$, $R^+$, $R^1$, $R^2$, Y und X die oben genannten Bedeutungen haben, diazotiert und mit einer Verbindung der oben genannten und definierten allgemeinen Formel (4b), in welcher die Formelglieder $R^*$, $R''$, $R^3$, $R^4$ und X jeweils zu den entsprechenden Formelgliedern in Formel (7) gleiche oder voneinander verschiedene Bedeutungen besitzen können, kuppelt.

Die Diaminoverbindungen der allgemeinen Formel (3) sind beispielsweise aus den deutschen Patentschriften 436 179 und 485 185 bekannt. Gleichfalls sind die Kupplungskomponenten der allgemeinen Formel (4a) und (4b) in der Literatur für faserreaktive Farbstoffe der Vinylsulfonreihe zahlreich beschrieben. Die Aminoazoverbindungen der allgemeinen Formeln (5a) und (5b) sind gleichfalls bekannt und lassen sich analog bekannter Verfahrensweise durch Monodiazotierung eines Diamins der allgemeinen Formel $H_2N-D_1-NH_2$ bzw. $H_2N-D_2$ mit $D_1$ und $D_2$ der obenge-

nannten Bedeutung und Kupplung mit einer Kupplungskomponente der obigen Formel (4a) bzw. (4b) herstellen.

Ebenso sind die Tri- bzw. Dihalogenotriazin-Verbindungen der allgemeinen Formel (6) bekannt, und ihre Herstellung ist in der Literatur vielfach beschrieben. Eine Übersicht ist in Firmenschrift «Produktstudie Cyanurchlorid» der Firma Süddeutsche Kalkstickstoff-Werke (SKW), Trostberg, Oktober 1976 (1. Auflage), zu finden.

Sofern die in den obigen Verfahrensvarianten verwendeten Kupplungskomponenten der allgemeinen Formel (4a) und (4b) verschieden sind, können sie im Gemisch miteinander oder nacheinander mit dem Diamin der allgemeinen Formel (3) umgesetzt werden. Sofern in den obigen Verfahrensvarianten die Aminoazoverbindungen der allgemeinen Formel (5a) und (5b) voneinander verschieden sind, können diese im Gemisch miteinander oder nacheinander mit der Tri- bzw. Dihalogenotriazin-Verbindung der allgemeinen Formel (6) umgesetzt werden. Führt man diese Umsetzungen mit Gemischen dieser Verbindungen (4a) und (4b) bzw. (5a) und (5b) durch, so erhält man Mischungen von drei erfindungsgemässen, der allgemeinen Formel (1) entsprechenden Verbindungen, d.h. zwei symmetrischen Verbindungen und einer unsymmetrischen Verbindung der allgemeinen Formel (1).

Die Diazotierung und Tetrazotierung der Amino- und Diaminoverbindungen der allgemeinen Formel (7) bzw. (3) und die sich daran anschliessenden Kupplungsreaktionen der oben beschriebenen erfindungsgemässen Verfahrensweisen erfolgen nach allgemein bekannten Methoden. Bei der Kupplungsreaktion ist jedoch zu beachten, dass die Ausgangs- und Endprodukte bei der Verarbeitung keinen stärker alkalischen Bedingungen unterworfen werden, um die faserreaktiven Gruppen nicht zu schädigen. Die Kupplung der diazotierten Amine mit den Kupplungskomponenten der Formeln (4) erfolgt bevorzugt in einem pH-Bereich zwischen 3 und 7 und einer Temperatur zwischen −5°C und +30°C.

Die Kondensationsreaktionen, die nach erfindungsgemässer Verfahrensweise durchgeführt werden können, erfolgen ebenfalls analog bekannten Verfahrensweisen, so vorzugsweise in wässriger Lösung, gegebenenfalls in Anwesenheit von organischen Lösemitteln bei Raumtemperatur (15 bis 25°C) oder erhöhter Temperatur (bis 120°C) gemäss der dem Fachmann bekannten und geläufigen Weise. Organische Lösemittel, die bei diesen Kondensationsreaktionen benutzt werden können, sind beispielsweise Aceton oder Toluol. Kondensationsreaktionen, bei denen ein Cyanurhalogenid selbst der Reaktionspartner ist, werden bevorzugt bei einer Temperatur zwischen 0 und 20°C und bei einem pH-Wert zwischen 2 und 6 durchgeführt. Dihalogeno-triazin-Verbindungen der allgemeinen Formel (6), in denen Y nicht für ein Halogenatom steht, werden unter Austausch des zweiten Halogenatomes mit einer Aminoazoverbindung der allgemeinen Formel (5a) bzw. (5b) vorzugsweise bei einer Temperatur zwischen 15 und 70°C und bei einem pH-Wert zwischen 4 und 5,5 umgesetzt.

Die als Ausgangsverbindungen dienenden aromatischen Diamine der oben erwähnten allgemeinen Formeln $H_2N-D_1-NMH_2$ und $H_2N-D_2-NH_2$ sind beispielsweise 1,4-Diamino-benzol-2-sulfonsäure, 1,4-Diamino-benzol-2,5-disulfonsäure, 1,3-Diamino-benzol-4-sulfonsäure, 1,4-Diamino-benzol-2,6-disulfonsäure, 1,3-Diamino-2-methyl-benzol-5-sulfonsäure, 1,4-Diaminobenzol, 1,3-Diaminobenzol, 1,3-Diamino-4-chlor-benzol, 1,3-Diamino-4-methyl-benzol, 2,6-Diamino-naphthalin-4,8-disulfonsäure, 1,5-Diamino-naphthalin-3,7-disulfonsäure, 1,3-Diamino-benzol-4-carbonsäure, 1,3-Diamino-4-methoxy-benzol, 2-Chlor-1,3-diaminobenzol-5-sulfonsäure, 2-Chlor-1,4-diaminobenzol-6-sulfonsäure, 2,5-Diaminotoluol-4-sulfonsäure, 2,4-Diaminotoluol-6-sulfonsäure, 2,4-Diaminotoluol-5-sulfonsäure und 1,3-Diaminobenzol-4,6-disulfonsäure.

Von den ebenso als Ausgangsverbindungen dienenden Diaminoverbindungen der allgemeinen Formel (3) sind beispielsweise die folgenden Verbindungen von technischem Interesse:

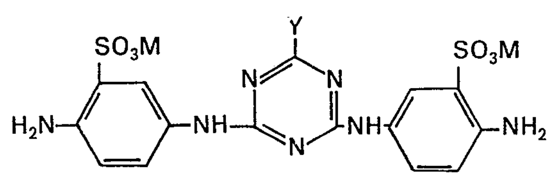

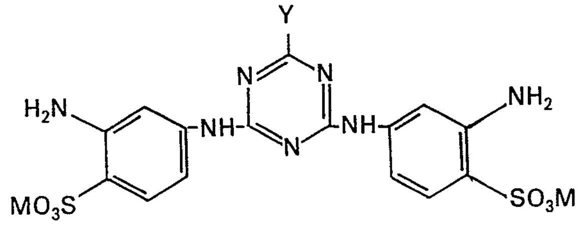

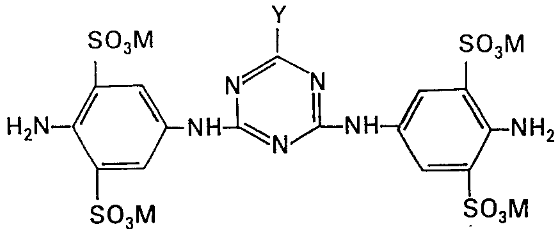
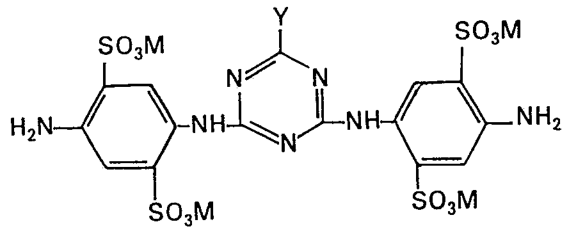

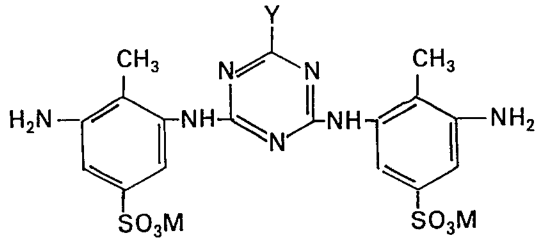
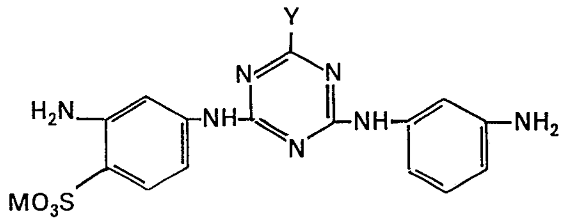

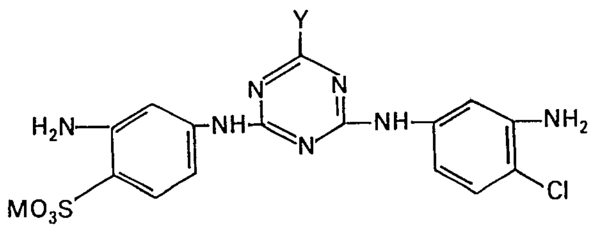
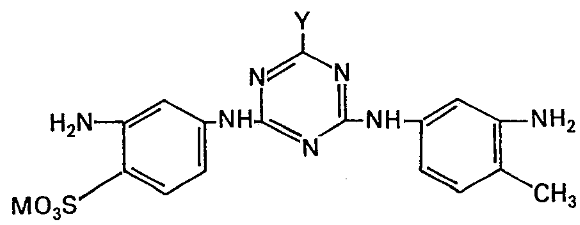

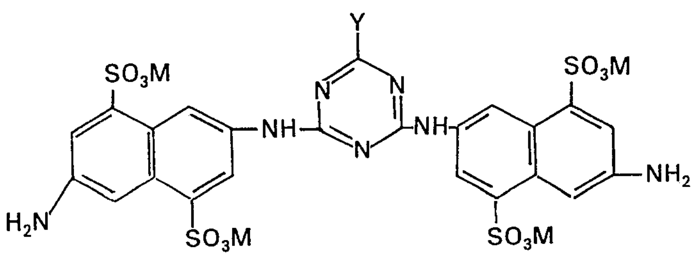
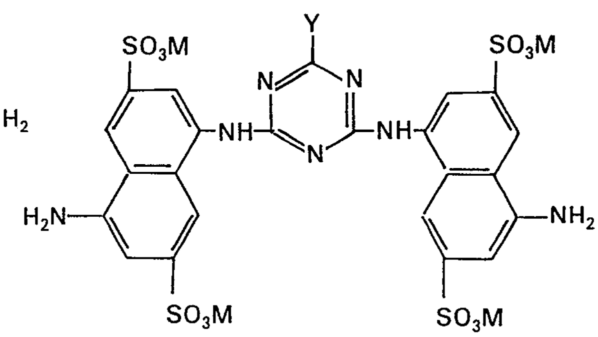

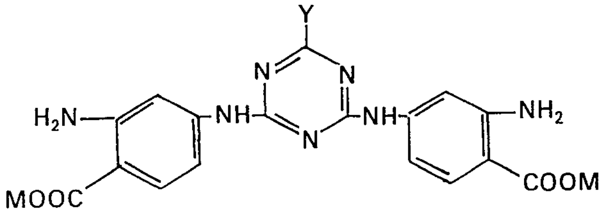
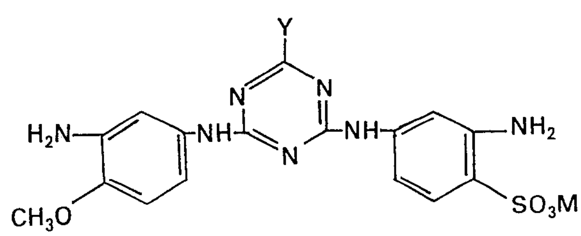

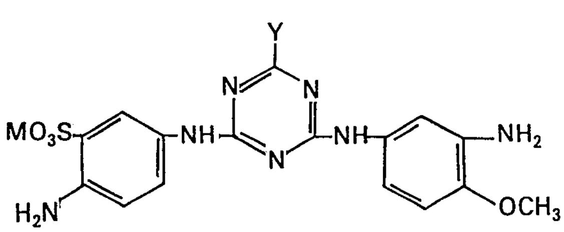
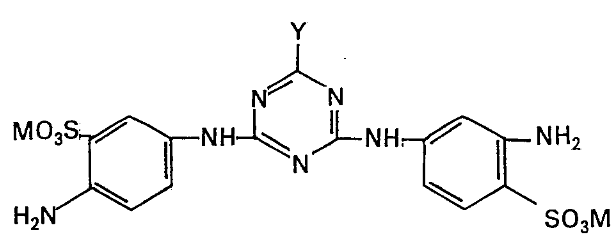

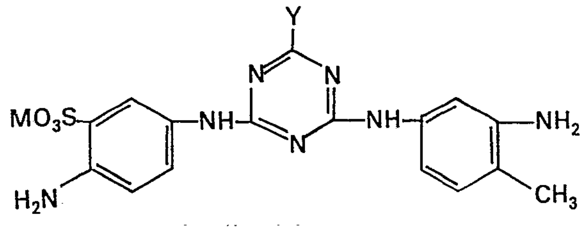

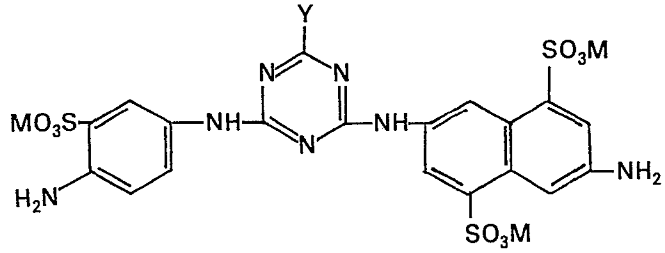

In diesen Formeln haben M und Y die obengenannten, insbesondere bevorzugten Bedeutungen.

Kupplungskomponenten von besonderem Interesse entsprechend den allgemeinen Formeln (4a) und (4b), die als Ausgangsverbindungen zur Synthese der erfindungsgemässen Disazoverbindungen dienen können, sind beispielsweise 1-(4′-β-Sulfatoäthylsulfonyl-phenyl)-3-methyl-pyrazol-5-on, 1-(4′-β-Sulfatoäthylsulfonyl-phenyl)-3-carboxy-pyrazol-5-on, 1-(4′-β-Sulfatoäthylsulfonyl-phenyl)-3-carbomethoxy-pyrazol-5-on, 1-(4′-β-Sulfatoäthylsulfonyl-phenyl)-3-carbäthoxy-pyrazol-5-on, 1-(2′-Brom-4′-β-sulfatoäthylsulfonyl-phenyl)-3-carboxy-pyrazol-5-on, 1-(2′-Chlor-5′-β-sulfatoäthylsulfonyl-phenyl)-3-carbomethoxy-pyrazol-5-on, 1-(2′-Methoxy-4′-β-sulfatoäthylsulfonyl-phenyl)-3-carboxy--pyrazol-5-on, 1-(2′-Methoxy-5′-methyl-4′-β-sulfatoäthylsulfonyl-phenyl)-3-carbomethoxy-pyrazol-5-on, 1-(2′-Methyl-5′-β-sulfatoäthylsulfonyl-phenyl)-3-methyl-pyrazol-5-on, 1-(2′,5′-Dimethoxy-4′-β-sulfatoäthylsulfonyl-phenyl)-3-carboxy-pyrazol-5-on, 2-(3′-β-Sulfatoäthylsulfonyl-phenyl)-3-carboxy-pyrazol-5-on, 1-(4′-Methoxy-3′-β-sulfatoäthylsulfonyl-phenyl)-3-carboxy-pyrazol-5-on, 1-(2′-Methoxy-5′-β-sulfatoäthylsulfonyl-phenyl)-3-methyl-pyrazol-5-on und 1-(4′-β-Sulfatoäthylsulfonyl-phenyl)-3-methyl-5-amino-pyrazol sowie deren in der faserreaktiven Gruppe abgewandelten Derivate, in denen die β-Sulfatoäthylsulfonyl-Gruppe durch die Vinylsulfonyl-, die β-Chloräthylsulfonyl- oder β-Thiosulfatoäthylsulfonyl-Gruppe ersetzt ist.

Von den erfindungsgemässen Disazoverbindungen der Formel (1) können insbesondere diejenigen Disazoverbindungen entsprechend der allgemeinen Formel (1) hervorgehoben werden, in welcher die beiden Gruppen $-SO_2-X$ meta- oder paraständig zu dem Stickstoffatom des Pyrazolringes an den Benzolkern gebunden sind, $R^1$ und $R^3$ beide für ein Wasserstoffatom oder die Methoxygruppe stehen, $R^2$ und $R^4$ beide ein Wasserstoffatom sind, R′ und R″ beide für die Hydroxygruppe stehen, $R^+$ und $R^*$ beide die Methylgruppe oder bevorzugt die Carboxygruppe bedeuten, $D_1$ einen Rest der Formel (8a) oder (8b) und $D_2$ einen Rest der Formel (8c) oder (8d)

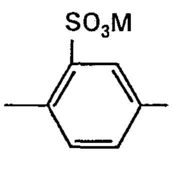

(8a)

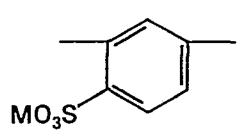

(8b)

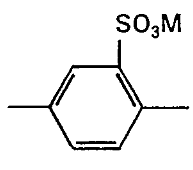

(8c)

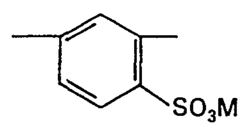

(8d)

mit M der obengenannten Bedeutung darstellen und Y, X und M die obengenannten, insbesondere bevorzugten Bedeutungen besitzen.

Weiterhin sind von den erfindungsgemässen Disazoverbindungen diejenigen als besonders bevorzugt zu nennen, die den allgemeinen Formeln (9), (10), (11), (12), (13) und (14) entsprechen:

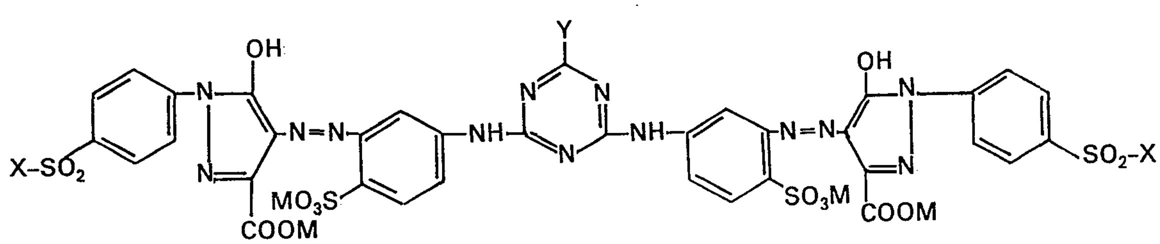

(9)

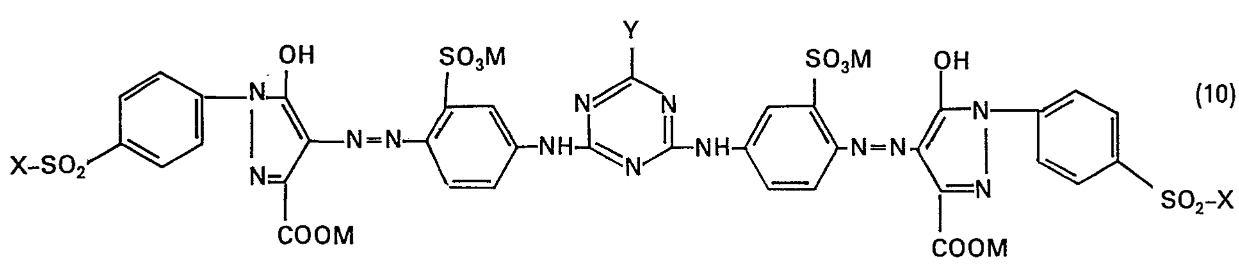

(10)

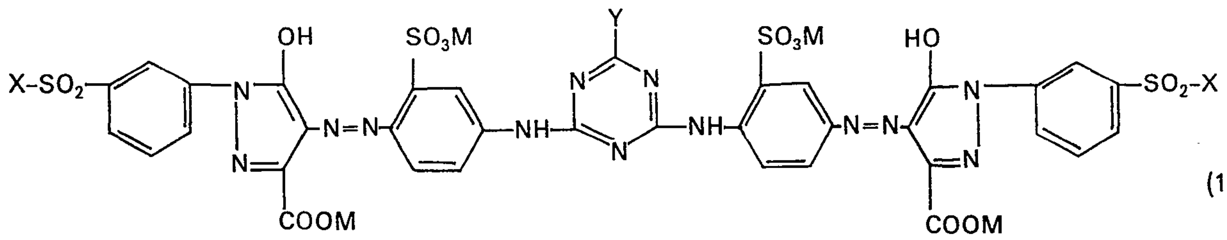

(11)

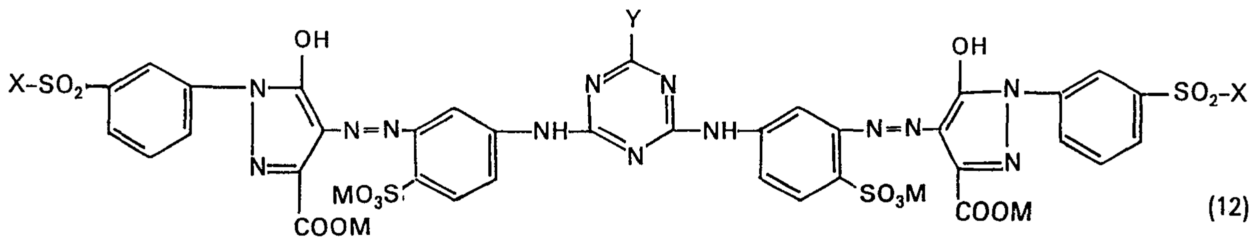

(12)

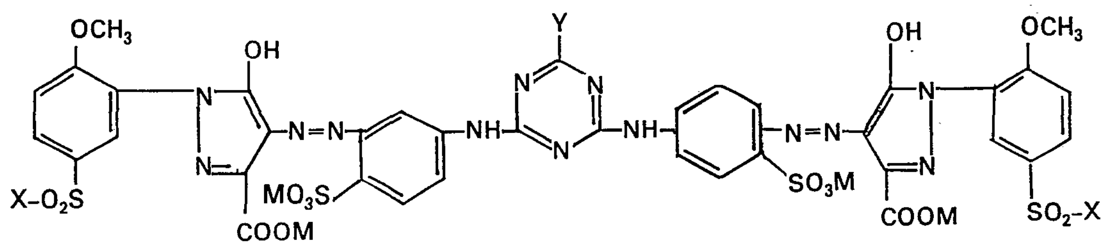

(13)

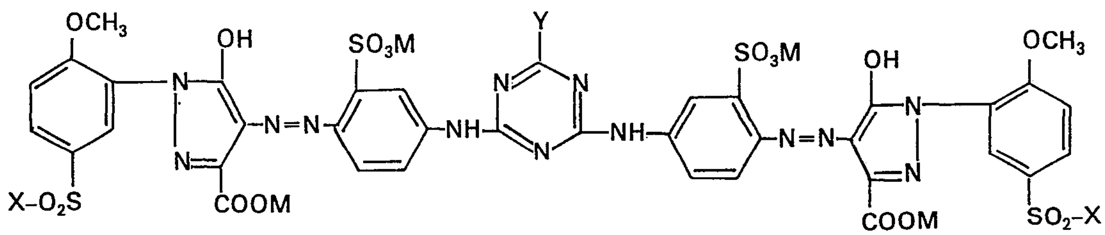

(14)

In diesen Formeln haben Y, X und M die obengenannten, insbesondere bevorzugten Bedeutungen.

Die Abscheidung und Isolierung der erfindungsgemäss hergestellten Verbindungen der allgemeinen Formel (1) aus den Syntheselösungen kann nach allgemein bekannten Methoden erfolgen, so beispielsweise durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz, wie beispielsweis ein Gemisch aus Mono- und Dinatriumphosphat, zugefügt werden kann. Gegebenenfalls können die Syntheselösungen auch, gegebenenfalls nach Zusatz einer Puffersubstanz und nach eventuellem Konzentrieren oder Verdünnen direkt als Flüssigpräparation der färberischen Verwendung zugeführt werden.

Die erfindungsgemässen Disazoverbindungen besitzen wertvolle Farbstoffeigenschaften und faserreaktive Eigenschaften.

Sie werden bevorzugt zum Färben (im allgemeinen Sinne, einschliesslich des Bedruckens) von hydroxy- und/oder carbonamidgruppenhaltigen Materialien, beispielsweise in Form von Flächengebilden, wie Papier und Leder oder von Folien, wie bspw. aus Polyamid, oder in der Masse, wie beispielsweise von Polyamid und Polyurethan, insbesondere aber von diesen Materialien in Faserform, verwendet. Die vorliegende Erfindung betrifft somit auch die Verwendung der Verbindungen der allgemeinen Formel (1) zum Färben (im obigen Sinne) dieser Materialien bzw. Verfahren zum Färben solcher Materialien in an und für sich üblichen Verfahrensweisen, bei welchen eine Verbindung der allgemeinen Formel (1) als Farbmittel eingesetzt wird. Bevorzugt kommen die Materialien in Form von Fasermaterialien zur Anwendung, insbesondere in Form von Textilfasern, wie Garnen, Wickelkörpern, Geweben und Gewirken.

Hydroxygruppenhaltige Materialien sind natürliche, regenerierte oder synthetische hydroxygruppenhaltige Materialien, wie beispielsweise Cellulosefasermaterialien oder Celluloseregeneratmaterialien und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische Polyamide, wie Polyamid-6,6, Polyamid-6, Polyamid-11 und Polyamid-4, und Polyurethane, insbesondere in Form der Fasern, oder natürliche Polyamide, beispielsweise Wolle und andere Tierhaare, Seide und Leder.

Die erfindungsgemässen Disazoverbindungen lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren.

So erhält man mit ihnen auf Cellulosefasern bspw. nach dem Ausziehverfahren aus langer Flotte unter Verwendung von verschiedensten säurebindenden Mitteln und gegebenenfalls unter Zugabe von neutralen Salzen, wie Natriumchlorid oder Natriumsulfat, Färbungen mit sehr hohen Farbausbeuten.

Nach dem Klotzverfahren werden auf Cellulosefasern ebenfalls ausgezeichnete Farbausbeuten erhalten, wobei durch Verweilen bei Raumtemperatur oder erhöhter Temperatur, beispielsweise bis zu 60°C, durch Dämpfen oder durch Trockenhitze in üblicher Weise fixiert werden kann.

Ebenfalls nach den üblichen Druckverfahren für Cellulosefasern, die einphasig – beispielsweise durch Bedrucken mit einer Natriumbicarbonat oder ein anderes säurebindendes Mittel enthaltenden Druckpaste und anschliessendes Dämpfen bei 100–103°C, – oder zweiphasig – beispielsweise durch Bedrucken mit neutraler oder schwach saurer Druckfarbe und anschliessender Fixierung entweder durch Hindurchführen durch ein heisses elektrolythaltiges alkalisches Bad oder durch Überklotzen mit einer alkalischen elektrolythaltigen Klotzflotte und anschliessendem Verweilen oder Dämpfen oder Behandlung mit Trockenhitze des überklotzten Materials, – durchgeführt werden können, erhält man farbstarke Drucke mit gutem Stand der Konturen und einem klaren Weissfond. Der Ausfall der Drucke ist von wechselnden Fixierbedingungen nicht oder nur wenig abhängig. Sowohl in der Färberei als auch in der Druckerei sind die mit den erfindungsgemässen Verbindungen erhaltenen Fixiergrade sehr hoch.

Die Echtheiten der auf Cellulosefasern mit den erfindungsgemässen Disazoverbindungen erhaltenen Färbungen und Drucke sind beachtlich. Dies gilt sowohl für die wichtigsten Fabrikationsals auch für die wichtigsten Gebrauchsechtheiten. Besonders zu erwähnen sind die Lichtechtheiten von trockenen sowie von mit Wasser oder mit saurer oder mit alkalischer Schweisslösung imprägnierten Färbungen und Drucken, weiterhin deren Nassechtheiten, wie die Waschechtheiten, einschliesslich die Peroxidwaschechtheit, die Walkechtheiten, die Wasserechtheit, die Seewasserechtheit, die Überfärbeechtheiten, die Schweissechtheiten, die Beständigkeit gegen chlorhaltige Lösungen (Chlorbadewasser- und Chlorbleichechtheiten), die Alkaliechtheit und die Säureechtheiten, ebenso die Abgasechtheit, die Plissierechtheit, Bügelechtheit und Reibechtheit.

Die Färbungen auf Polyamidfasern werden üblicherweise aus saurem Milieu ausgeführt. So kann man beispielsweise dem Färbebad Essigsäure oder Essigsäure und Ammoniumacetat zufügen, um den gewünschten pH-Wert zu erhalten. Zwecks Erreichung einer brauchbaren Egalität der Färbungen empfiehlt sich ein Zusatz an üblichen Egalisiermitteln, beispielsweise auf Basis eines Umsetzungsproduktes von Cyanurchlorid mit der dreifach molaren Menge einer Aminobenzol- und/oder einer Aminoaphthalinsulfonsäure oder auf Basis eines Umsetzungsproduktes von beispielsweise Stearylamin mit Äthylenoxid. Die Färbungen können sowohl bei Siedetemperatur als auch bei einer Temperatur bis zu 120°C ausgeführt werden.

Die nachstehenden Beispiele dienen zur Erläuterung der Erfindung. Die formelmässig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.

Die in den Beispielen genannten Teile sind Gewichtsteile, die Prozentangaben stellen Gewichtsprozente dar, sofern nicht anders vermerkt. Gewichtsteile stehen zu Volumenteilen im Verhältnis von Kilogramm zu Liter.

Beispiel 1

a) Eine Lösung mit einem pH-Wert von 5,0 bis 5,5 von 188 Teilen 1,3-Diaminobenzol-4-sulfonsäure in 3000 Teilen Wasser wird bei einer Temperatur von 0 bis 5°C unter gutem Rühren mit 101,9 Teilen Cyanurchlorid versetzt. Es wird noch eine Stunde bei 0 bis 5°C und bei einem pH-Wert zwischen 4,8 und 5,8, der durch portionsweise Zugabe von Natriumbicarbonat gehalten wird, weitergerührt. Danach erhöht man im Verlaufe einer Stunde die Temperatur auf 55 bis 60°C und führt die Umsetzung bei dieser Temperatur und einem pH-Wert zwischen 4,0 und 4,7 während 5 Stunden fort, kühlt danach den Reaktionsansatz auf 18 bis 19°C ab, rührt ihn bei dieser Temperatur einige Stunden weiter und stellt ihn sodann mittels Natriumbicarbonat auf einen pH-Wert von 5,8 bis 6,2 ein.

b) Zu der hier unter a) hergestellten Lösung des sekundären Kondensationsproduktes aus Cyanurchlorid und 1,3-Diaminobenzol-4-sulfonsäure gibt man 139 Volumenteile einer 40%igen Natriumnitritlösung hinzu und lässt diese Mischung in eine Mischung aus 260 Volumenteilen einer wässrigen 31%igen Salzsäure, 400 Teilen Wasser und 1600 Teilen Eis unter Rühren einfliessen. Es bildet sich eine gelbe gallertartige Tetrazoverbindung. Man rührt eine Stunde bei 2 bis 6°C weiter und zerstört sodann den geringen Überschuss an salpetriger Säure wie üblich mittels Amidosulfonsäure. Der Ansatz wird danach mit Natriumbicarbonat auf einen pH-Wert zwischen 5,5 und 6,0 eingestellt.

c) Getrennt hiervon wird als Kupplungskomponente die 1-(4'-β-Sulfatoäthylsulfonyl-phenyl)-pyrazol-5-on-3-carbonsäure hergestellt: 312 Teile (1-(4'-β-Hydroxyäthylsulfonyl-phenyl)-pyrazol-5-on-3-carbonsäure werden innerhalb von 5 Stunden bei einer Temperatur von 15 bis 20°C in 598 Volumenteile einer 95,5%igen wässrigen Schwefelsäure eingetragen; dieser Sulfatierungsansatz wird noch 10 Stunden bei 18 bis 20°C weitergerührt. Sodann rührt man dieses Reaktionsgemisch auf ein Gemisch aus 3500 Teilen Eis und 1000 Teilen Wasser und stellt im Verlaufe von 4 Stunden durch Einstreuen von 1165 Teilen Calciumcarbonat einen pH-Wert zwischen 5,2 und 6,0 ein, wobei man die Temperatur unter 10°C hält. Durch Einleiten von Wasserdampf erwärmt man den Ansatz auf 70°C und saugt sodann das ausgefallene Calciumsulfat ab. Der Rückstand wird in mehreren Portionen mit insgesamt 3000 Teilen Wasser gewaschen; das Filtrat und Waschwasser werden vereinigt und auf etwa 15°C abgekühlt.

d) Zu dieser hier unter c) beschriebenen Lösung der Kupplungskomponente gibt man die unter b) beschriebene Lösung des Tetrazoniumsalzes; man rührt den Ansatz mehrere Stunden bei etwa 10°C unter Einhaltung eines pH-Wertes von 5,5 bis 6,5 durch Zugabe von wenig Natriumbicarbonat, erwärmt ihn sodann auf 45°C, klärt ihn mittels 25 Teilen Kieselgur und filtriert ihn.

Aus dem Filtrat von d) wird die erfindungsgemässe Disazoverbindung durch Zugabe von 2900 Teilen Natriumchlorid ausgesalzen; nach etwa 3-stündigem Rühren saugt man den Niederschlag ab, trocknet ihn und mahlt ihn. Man erhält ein gelbes, Elektrolytsalze (vorwiegend Natriumchlorid) enthaltendes Pulver mit etwa 660 bis 670 Teilen des Natriumsalzes der Verbindung der Formel

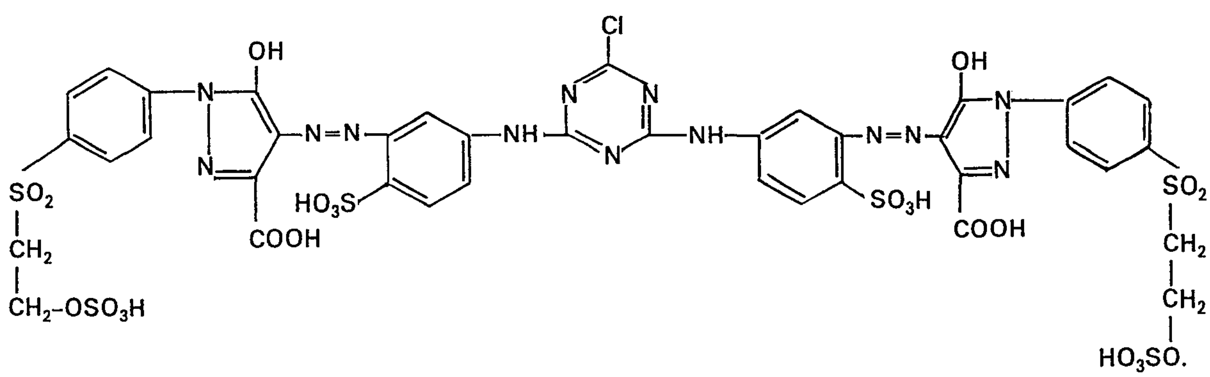

Diese erfindungsgemässe Disazoverbindung zeigt sehr gute faserreaktive Farbstoffeigenschaften und färbt nach den in der Technik üblichen und bekannten Applikations- und Fixiermethoden für faserreaktive Farbstoffe Cellulosefasermaterialien in grünstichig gelben Tönen mit ausgezeichneten Echtheiten, unter denen die Wasch-, Schweiss-, Licht-, Reib-, Wasser- und Meerwasserechtheiten besonders hervorgehoben werden können. Sowohl bei den Färbeverfahren als auch bei den Druckverfahren sind die erreichten Fixierraten auf Cellulosematerialien sehr hoch.

Beispiel 2

Zur Herstellung von erfindungsgemässen Disazoverbindungen verfährt man analog der Verfahrensweise des Beispieles 1, setzt jedoch anstelle der dort verwendeten Kupplungskomponente die Lösung eines Gemisches von 1-(4'-β-Sulfatoäthylsulfonyl-phenyl)-pyrazol-5-on-3-carbonsäure und 1-(3'-β-Sulfatoäthylsulfonyl-phenyl)-pyrazol-5-on-3-carbonsäure ein, die analog zum Beispiel 1 c) durch Sulfatierung eines Gemisches aus 198 Teilen 1-(4'-β-Hydroxyäthylsulfonyl-phenyl)-pyrazol-5-on-3-carbonsäure und 198 Teilen 1-(3'-β-Hydroxyäthylsulfonyl-phenyl)-pyrazol-5-on-3-carbonsäure erhalten wurde.

Nach Aufarbeitung gemäss Beispiel 1 erhält man ein Gemisch von drei erfindungsgemässen Disazoverbindungen, nämlich neben der in Beispiel 1 beschriebenen die beiden Disazoverbindungen der Formeln

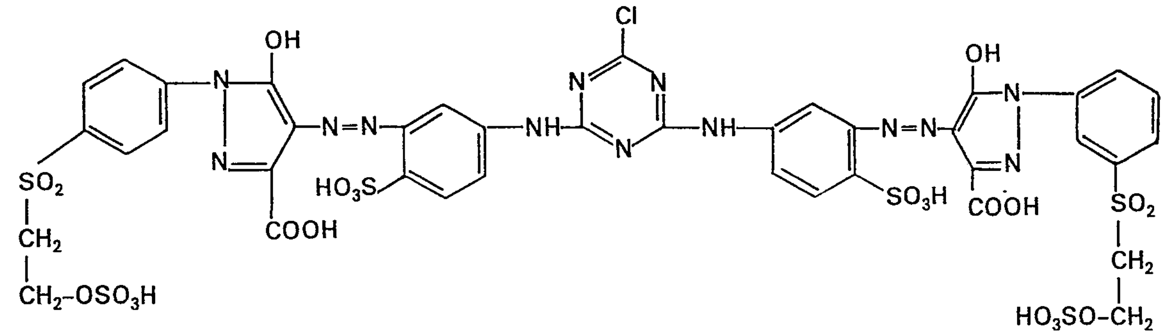

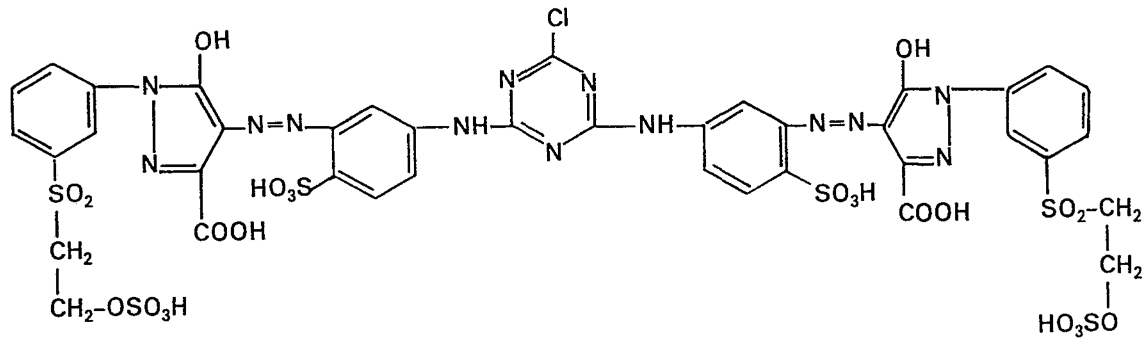

in Form ihrer Natriumsalze. Dieses Gemisch der erfindungsgemässen Disazoverbindungen zeigt ähnlich gute coloristische Eigenschaften wie die im Beispiel 1 beschriebene erfindungsgemässe Disazoverbindung.

Beispiel 3

759 Teile der Monoazoverbindung der Formel

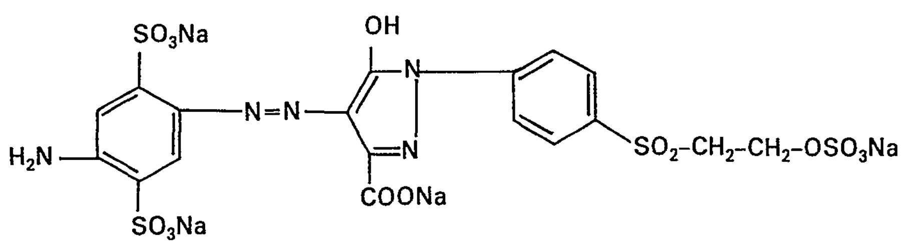

die in üblicher Weise durch Kupplung von monodiazotierter 1,4-Diaminobenzol-2,5-disulfonsäure mit 1-(4′-β-Sulfatoäthylsulfonyl-phenyl)-pyrazol-5-on-3-carbonsäure erhältlich ist werden in 4000 Teilen Wasser bei einem pH-Wert von 5,2 bis 5,7 gelöst. Die auf eine Temperatur von 10 bis 13°C abgekühlte Lösung wird mit 105 Teilen Cyanurchlorid versetzt; der Reaktionsansatz wird einige Stunden bei 10 bis 13°C und einem pH-Wert von 5,2 bis 5,7 weitergerührt und sodann auf 60 bis 65°C erwärmt und bei dieser Temperatur und einem pH-Wert von 5,0 bis 5,4 einige Stunden weitergerührt, bis dünnschichtchromatographisch die praktisch vollständige Umsetzung angezeigt wird.

Die Syntheselösung wird sodann geklärt und sprühgetrocknet. Man erhält ein gelbes, elektrolythaltiges Pulver mit etwa 770 bis 780 Teilen des Natriumsalzes der Verbindung der Formel

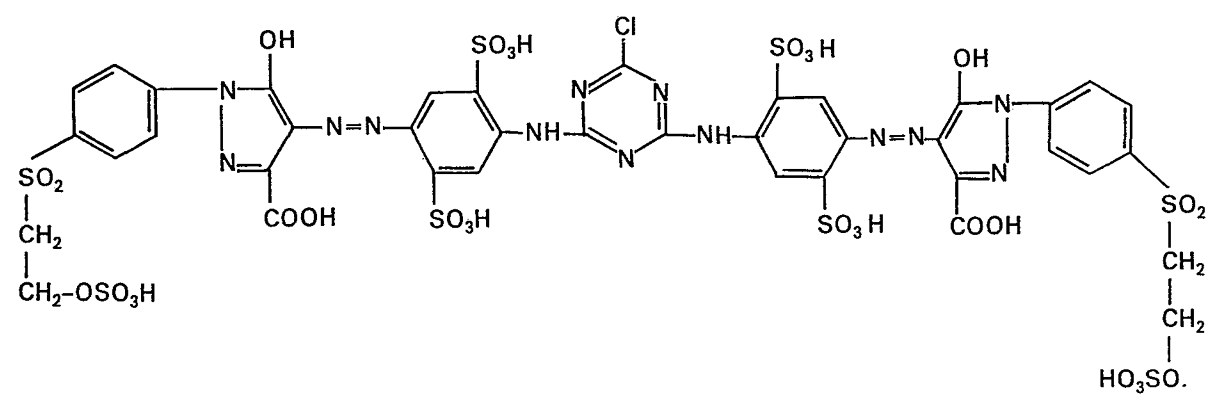

Diese erfindungsgemässe Disazoverbindung zeigt sehr gute faserreaktive Farbstoffeigenschaften und liefert beispielsweise auf Cellulosefasermaterialien nach den in der Technik üblichen Druck- und Färbeverfahren für faserreaktive Farbstoffe kräftige, rotstichig gelbe Drucke und Färbungen von ausgezeichneten coloristischen Eigenschaften; diese Drucke und Färbungen zeichnen sich insbesondere durch ihre Wasch-, Schweiss-, Licht-, Wasser-, Meerwasser- und Reibechtheiten aus.

Beispiel 4

a) Eine Lösung mit einem pH-Wert von 5,0 bis 5,5 von 94 Teilen 1,3-Diaminobenzol-4-sulfonsäure in 3000 Teilen Wasser wird bei einer Temperatur von 0 bis 5°C unter gutem Rühren mit 102 Teilen Cyanurchlorid versetzt; der Reaktionsansatz wird eine Stunde bei einer Temperatur von 0 bis 10°C und einem pH-Wert zwischen 4,8 und 5,8 weitergerührt. Sodann gibt man 94 Teile 1,4-Diaminobenzol-2-sulfonsäure hinzu, stellt mit Natriumbicarbonat einen pH-Wert zwischen 5,0 und 5,5 ein, erwärmt den Reaktionsansatz im Verlaufe einer Stunde auf 60°C und rührt bei einem pH-Wert von 4,5 bis 5,0 bei der angegebenen Temperatur mehrere Stunden weiter. Sodann lässt man den Reaktionsansatz unter Rühren auf Raumtemperatur abkühlen und rührt noch einige Stunden weiter und stellt anschliessend mit wenig Natriumbicarbonat einen pH-Wert zwischen 5,8 und 6,2 ein.

b) Zur Herstellung einer erfindungsgemässen Disazoverbindung tetrazotiert man das hier unter a) hergestellte sekundäre Kondensationsprodukt aus Cyanurchlorid, 1,3-Diaminobenzol-4-sulfonsäure und 1,4-Diaminobenzol-2-sulfonsäure und kuppelt es gemäss den Angaben des Beispieles 1b) ff. und isoliert die hergestellte erfindungsgemässe Disazoverbindung in üblicher Weise. Man erhält ein gelbes Pulver, das neben Elektrolytsalzen etwa 650 Teile des Natriumsalzes der erfindungsgemässen Disazoverbindung der Formel

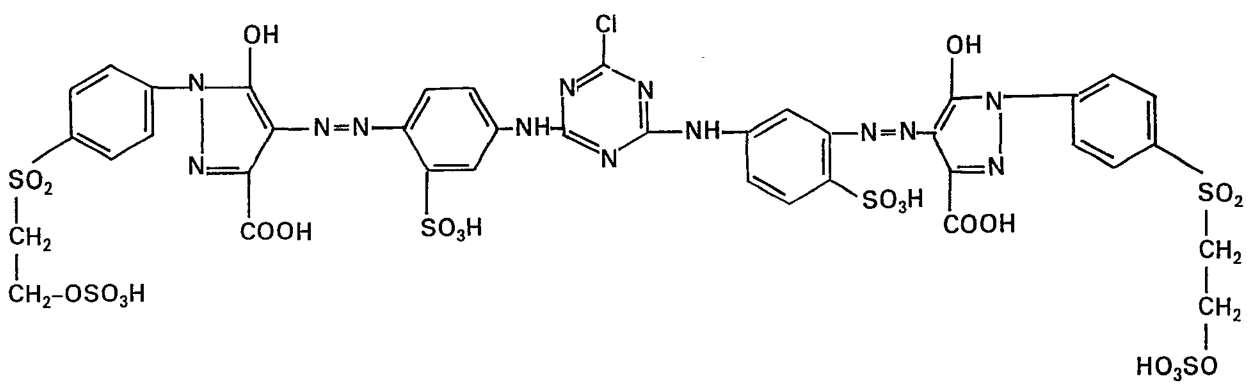

enthält. Diese erfindungsgemässe Verbindung zeigt sehr gute faserreaktive Farbstoffeigenschaften und liefert nach den für Reaktivfarbstoffe üblichen Methoden beispielsweise auf Cellulosefasermaterialien rotstichig gelbe Färbungen und Drucke von ausgezeichneten Echtheiten, unter denen die Wasch-, Schweiss-, Licht-, Wasser-, Meerwasser- und Reibechtheiten besonders hervorgehoben werden können.

Beispiel 5

379 Teile der im Beispiel 3 als Ausgangsverbindung formelmässig beschriebenen Monoazoverbindung werden in 2000 Teilen Wasser bei einem pH-Wert von 5,5 bis 5,7 gelöst. Bei einer Temperatur von 10 bis 15°C werden unter Rühren 105 Teile Cyanurchlorid hinzugegeben; man rührt bei dieser Temperatur und einem pH-Wert von 5,5 bis 5,7, der mittels Natriumbicarbonat gehalten wird, so lange weiter, bis dünnschichtchromatographisch die praktisch vollständige Umsetzung erkennbar ist.

Anschliessend gibt man eine Lösung (mit einem pH-Wert von 5,0 bis 5,5 und einer Temperatur von 10 bis 15°C) von 94 Teilen 1,3-Diaminobenzol-4-sulfonsäure in 1500 Teilen Wasser hinzu, erwärmt den Reaktionsansatz auf 55 bis 60°C und rührt ihn bei dieser Temperatur und einem pH-Wert von 5,0 bis 5,5 einige Stunden weiter, bis dünnschichtchromatographisch die praktisch vollständige Umsetzung angezeigt wird. Daraufhin wird der Reaktionsansatz mit 31%iger wässriger Salzsäure auf einen pH-Wert zwischen 0 bis 1 gestellt, auf 0 bis 5°C abgekühlt und unter Rühren durch Zugabe einer 40%igen wässrigen Natriumnitritlösung diazotiert. Überschüssige salpetrige Säure wird wie üblich mit wenig Amidosulfonsäure zerstört.

Zu dieser Diazoniumsalzlösung gibt man die Lösung von 1-(4'-β-Sulfatoäthylsulfonyl-phenyl)-pyrazol-5-on-3-carbonsäure, die gemäss den Angaben des Beispieles 1c) durch Sulfatierung von 156 Teilen der entsprechenden β-Hydroxyäthylsulfonyl-Verbindung hergestellt wird. Die Kupplungsreaktion erfolgt bei einem pH-Wert zwischen 6,1 und 6,5.

Die erfindungsgemässe Disazoverbindung wird aus dem Syntheseansatz in üblicher Weise isoliert. Es wird ein gelbes Pulver mit dem Natriumsalz der Verbindung der Formel

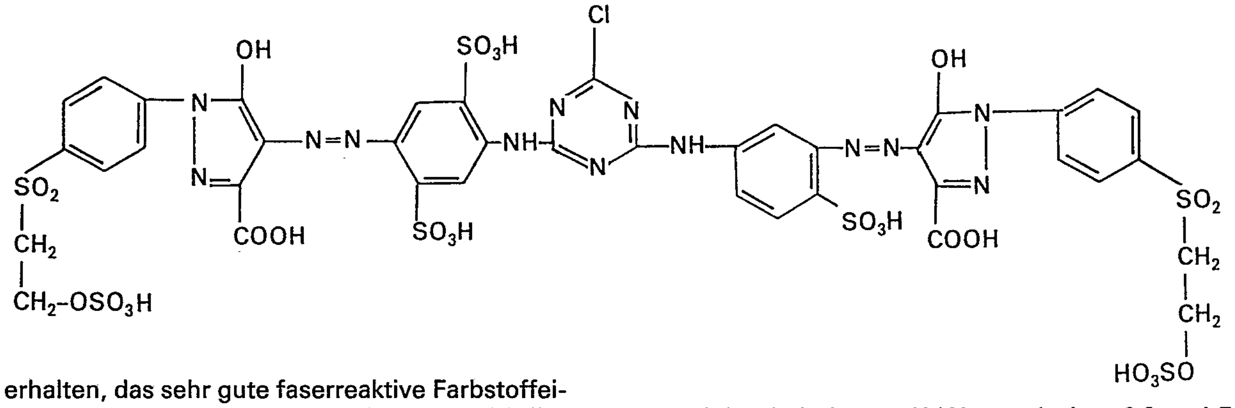

erhalten, das sehr gute faserreaktive Farbstoffeigenschaften besitzt und beispielsweise auf Cellulosefasermaterialien Färbungen und Drucke von einem vollen Gelb mit ausgezeichneten Allgemeinechtheiten liefert, von denen insbesondere die Wasch-, Wasser-, Meerwasser-, Schweiss-, Licht- und Reibechtheiten hervorgehoben werden können.

Beispiel 6

Gemäss den Angaben des Beispieles 1a) wird das sekundäre Kondensationsprodukt aus 1,3-Diaminobenzol-4-sulfonsäure und Cyanurchlorid hergestellt. Zu der Lösung dieses Kondensationsproduktes gibt man 86 Teile Anilin-3-sulfonsäure und setzt die dritte Kondensationsreaktion bei einem pH-Wert zwischen 6,8 und 7,8 und einer Temperatur zwischen 90 und 100°C unter Rühren solange fort, bis die Umsetzung praktisch vollständig ist.

Zur Herstellung einer erfindungsgemässen Disazoverbindung tetrazotiert man dieses tertiäre Kondensationsprodukt gemäss den Angaben des Beispieles 1b) und kuppelt es mit 1-(4'-β-Sulfatoäthylsulfonyl-phenyl)-pyrazol-5-on-3-carbonsäure gemäss den Angaben des Beispieles 1 d). Die hergestellte erfindungsgemässe Disazoverbindung wird in üblicher Weise, beispielsweise gemäss den Angaben des Beispieles 1, isoliert. Man erhält das Natriumsalz der Verbindung der Formel

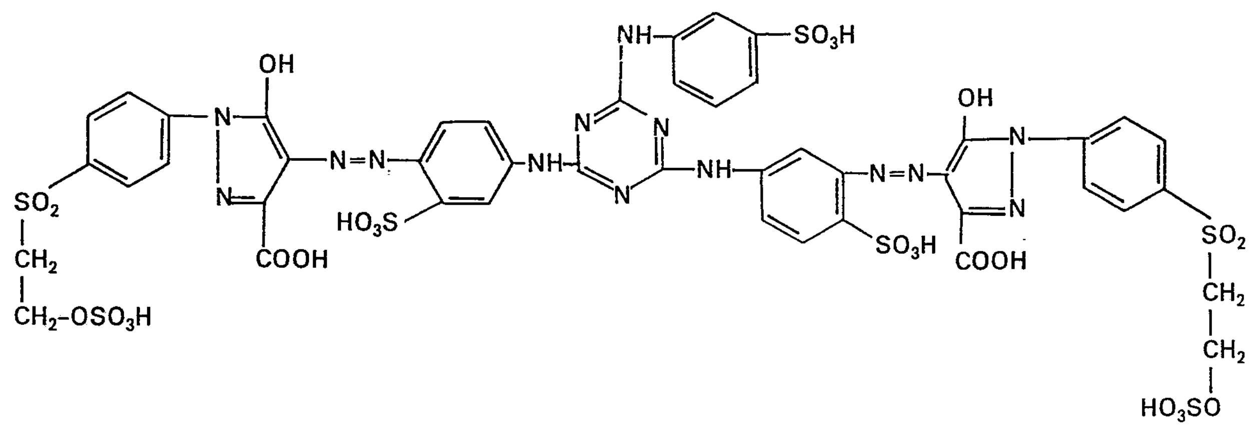

die sehr gute faserreaktive Farbstoffeigenschaften besitzt und beispielsweise Cellulosefasermaterialien nach den in der Technik üblichen Applikations- und Fixiermethoden für faserreaktive Farbstoffe in grünstichig gelben Tönen färbt. Diese Drucke und Färbungen zeigen sehr gute Allgemeinechtheiten, unter denen die Wasch-, Wasser-, Meerwasser-, Licht-, Reib-, Schweiss-, Säure- und Alkaliechtheiten besonders hervorgehoben werden können.

Beispiele 7 bis 93

In den nachfolgenden Tabellenbeispielen sind weitere erfindungsgemässe Disazoverbindungen mit Hilfe ihrer Komponenten durch die allgemeine Formel (1a)

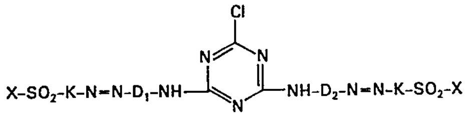

(1a)

beschrieben. Sie lassen sich in erfindungsgemässer Weise, beispielsweise analog einem der obigen Ausführungsbeispiele oder dem nachstehenden Beispiel 135, aus ihren Komponenten (Cyanurchlorid, den Diaminoverbindungen entsprechend den Formeln $H_2N-D_1-NH_2$ und $H_2N-D_2-NH_2$ und der Kupplungskomponente entsprechend der allgemeinen Formel $-K-SO_2-X$) herstellen. Sie besitzen sehr gute faserreaktive Farbstoffeigenschaften und liefern auf den in der Beschreibung genannten Materialien, wie insbesondere Cellulosefasermaterialien, nach den in der Technik üblichen Anwendungsmethoden in der Färberei und Druckerei, vorzugsweise nach den in der Technik üblichen Applikations- und Fixiermethoden für faserreaktive Farbstoffe, farbstarke Färbungen und Drucke mit guten Echtheiten in dem in dem jeweiligen Tabellenbeispiel angegebenen Farbton.

| Beispiel | $D_1$ | $D_2$ | $K-SO_2-X$ | Farbton |
|---|---|---|---|---|
| 7 | 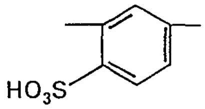 | 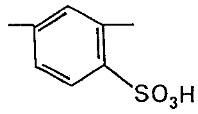 | 1-(4′-β-Sulfatoäthylsulfonyl-phenyl)-3-methyl-pyrazolon(5) | grünstichig gelb |
| 8 | 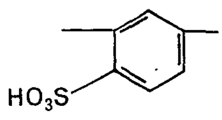 | 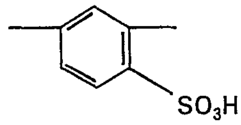 | 1-(2′-Methyl-5′-β-sulfatoäthylsulfonyl-phenyl)-3-methyl-pyrazolon(5) | grünstichig gelb |
| 9 | 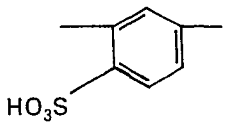 | 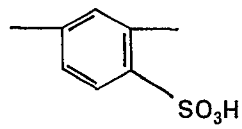 | 1-(4′-β-Sulfatoäthylsulfonyl-phenyl)-3-carbomethoxy-pyrazolon(5) | grünstichig gelb |
| 10 | 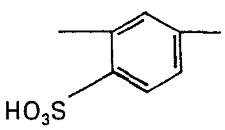 | 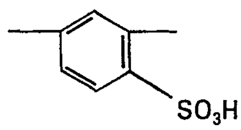 | 1-(2′-Methoxy-5′-β-sulfatoäthylsulfonyl-phenyl)-3-carboxy-pyrazolon(5) | grünstichig gelb |
| 11 | 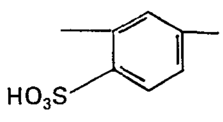 | 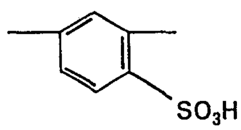 | 1-(2′-Methoxy-5′-β-sulfatoäthylsulfonyl-phenyl)-3-methyl-pyrazolon(5) | grünstichig gelb |
| 12 | 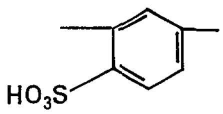 | 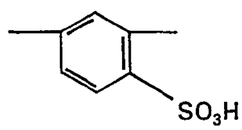 | 1-(2′-Methyl-5′-β-sulfatoäthylsulfonyl-phenyl)-3-carobxy-pyrazolon(5) | grünstichig gelb |
| 13 | 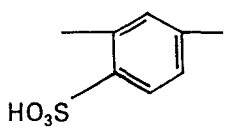 | 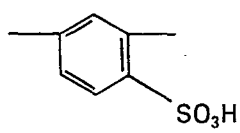 | 1-(2′-Brom-4′-β-sulfatoäthylsulfonyl-phenyl)-3-carboxy-pyrazolon(5) | grünstichig gelb |
| 14 | 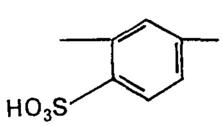 | 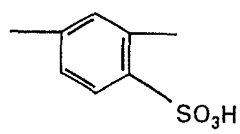 | 1-(2′-Chlor-5′-β-sulfatoäthylsulfonyl-phenyl)-3-carboxy-pyrazolon(5) | grünstichig gelb |
| 15 | 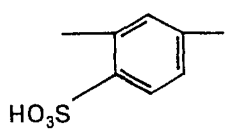 | 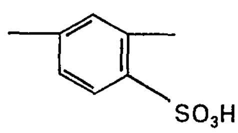 | 1-(2′-Methoxy-5′-methyl-4′-β-sulfato äthylsulfonyl-phenyl)-3-carboxy-pyrazolon(5) | grünstichig gelb |
| 16 | 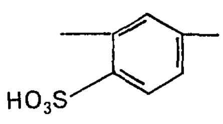 | 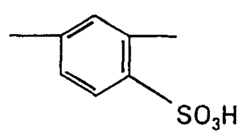 | 1-(2′,5′-Diemethoxy-4′-β-sulfatoäthyl-sulfonyl-phenyl)-3-carboxy-pyrazolon(5) | grünstichig gelb |
| 17 | 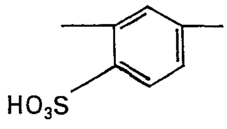 | 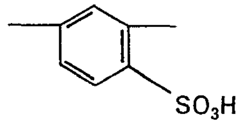 | 1-(3′-β-Sulfatoäthylsulfonyl-phenyl)-3-carbomethoxy-pyrazolon(5) | grünstichig gelb |
| 18 | 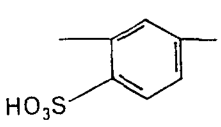 | 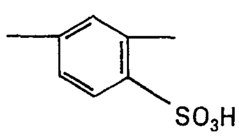 | 1-(2′-Brom-4′-β-sulfatoäthylsulfonyl-phenyl)-3-carbomethoxy-pyrazolon(5) | grünstichig gelb |
| 19 | 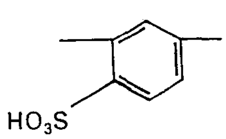 | 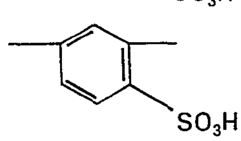 | 1-(2′-Chlor-5′-β-sulfatoäthylsulfonyl-phenyl)-3-carbomethoxy-pyrazolon(5) | grünstichig gelb |

| Beispiel | $D_1$ | $D_2$ | $K-SO_2-X$ | Farbton |
|---|---|---|---|---|
| 20 | 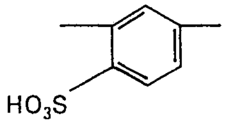 | 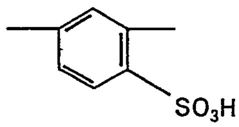 | 1-(2'-Methoxy-5'-methyl-4'-β-sulfato-äthylsulfonyl-phenyl)-3-carbomethoxy-pyrazolon(5) | grünstichig gelb |
| 21 | 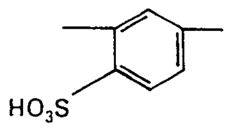 | 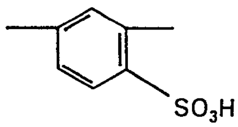 | 1-(2',5'-Dimethoxy-4'-β-sulfatoäthyl-sulfonyl-phenyl)-3-carbomethoxy -pyrazolon(5) | grünstichig gelb |
| 22 | 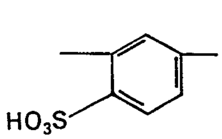 | 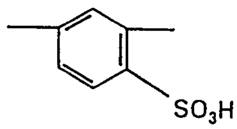 | 1-(4'-β-Sulfatoäthylsulfonyl-phenyl)-3-carbäthoxy-pyrazolon(5) | grünstichig gelb |
| 23 | 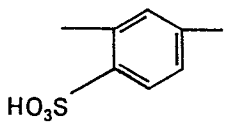 | 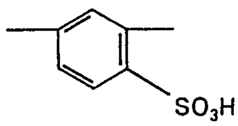 | 1-(2'-Methoxy-4'-β-sulfatoäthlsulfonyl-phenyl)-3-methyl-pyrazolon(5) | grünstichig gelb |
| 24 | 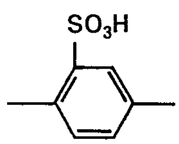 | 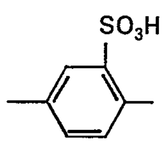 | 1-(4'-β-Sulfatoäthysulfonyl-phenyl)-3-carbomethoxy-pyrazolon(5) | rotstichig gelb |
| 25 | 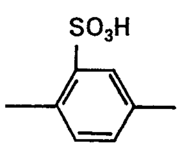 | 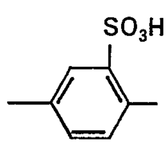 | 1-(3'-β-Sulfatoäthylsulfonyl-phenyl)-3-carboxy-pyrazolon(5) | rotstichig gelb |
| 26 | 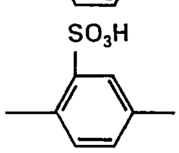 | 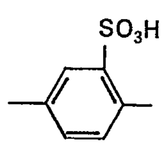 | 1-(2'-Methyl-5'-β-sulfatoäthylsulfonyl-phenyl)-3-carboxy-pyrazolon(5) | rotstichig gelb |
| 27 | 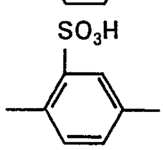 | 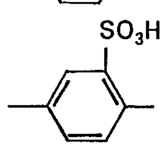 | 1-(2'-Brom-4'-β-sulfatoäthylsulfonyl-phenyl)-3-carboxy-pyrazolon(5) | rotstichig gelb |
| 28 | 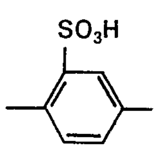 | 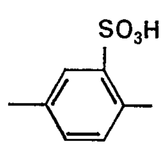 | 1-(2'-Chlor-5'-β-sulfatoäthylsulfonyl-phenyl)-3-carboxy-pyrazolon(5) | rotstichig gelb |
| 29 | 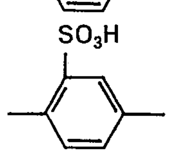 | 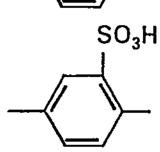 | 1-(2'-Methoxy-5'-β-sulfatoäthylsulfonyl-phenyl)-3-carboxy-pyrazolon(5) | rotstichig gelb |
| 30 | 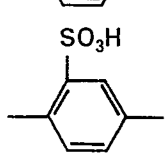 | 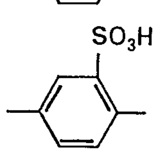 | 1-(2'-Methoxy-4'-β-sulfatoäthylsulfonyl-phenyl)-3-carboxy-pyrazolon(5) | rotstichig gelb |
| 31 | 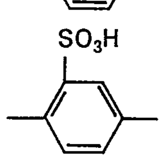 | 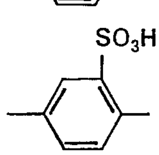 | 1-(2'-Methoxy-5'-methyl-4'-β-sulfato-äthylsulfonyl-phenyl)-3-carboxy-pyrazolon(5) | rotstichig gelb |

| Beispiel | $D_1$ | $D_2$ | K–$SO_2$–X | Farbton |
|---|---|---|---|---|
| 32 | 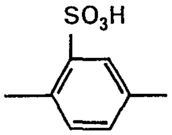 | 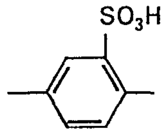 | 1-(2′,5′-Dimethoxy-4′-β-sulfatoäthylsulfonyl-phenyl)-3-carboxy-pyrazolon(5) | rotstichig gelb |
| 33 | 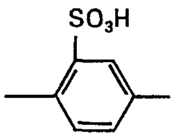 | 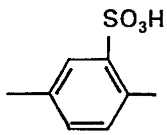 | 1-(3′-β-Sulfatoäthylsulfonyl-phenyl)-3-carbomethoxy-pyrazolon(5) | rotstichig gelb |
| 34 | 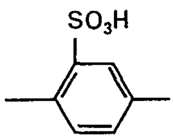 | 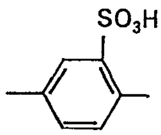 | 1-(2′-Brom-4′-β-sulfatoäthylsulfonyl-phenyl)-3-carbomethoxy-pyrazolon(5) | rotstichig gelb |
| 35 | 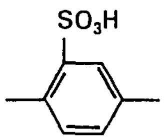 | 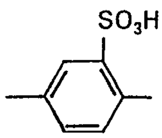 | 1-(2′-Chlor-5′-β-sulfatoäthylsulfonyl-phenyl)-3-carbomethoxy-pyrazolon(5) | rotstichig gelb |
| 36 | 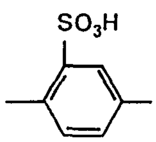 | 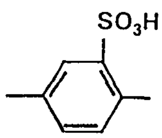 | 1-(2′-Methyl-5′-β-sulfatoäthylsulfonyl-phenyl)-3-carbomethoxy-pyrazolon(5) | rotstichig gelb |
| 37 | 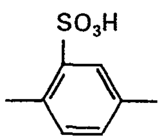 | 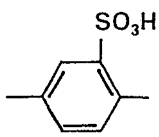 | 1-(2′-Methoxy-5′-β-sulfatoäthylsulfonyl-phenyl)-3-carbomethoxy-pyrazolon(5) | rotstichig gelb |
| 38 | 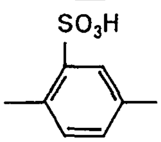 | 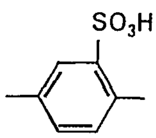 | 1-(2′-Methoxy-4′-β-sulfatoäthylsulfonyl-phenyl)-3-carbomethoxy-pyrazolon(5) | rotstichig gelb |
| 39 | 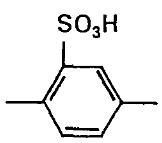 | 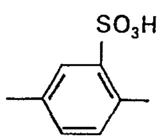 | 1-(2′-Methoxy-5′-methyl-4′-β-sulfato-äthylsulfonyl-phenyl)-3-carbo-methoxy-pyrazolon(5) | rotstichig gelb |
| 40 | 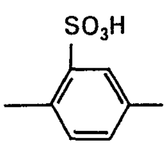 | 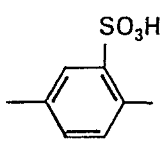 | 1-(4′-β-Sulfatoäthylsulfonyl-phenyl)-3-carbäthoxy-pyrazolon(5) | rotstichig gelb |
| 41 | 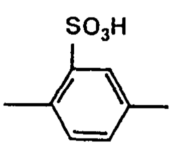 | 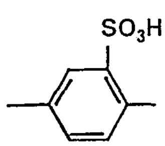 | 1-(4′-Sulfatoäthylsulfonyl-phenyl)-3-methyl-pyrazolon(5) | rotstichig gelb |
| 42 | 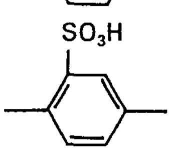 | 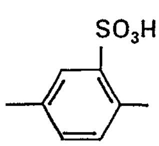 | 1-(2′-Methyl-5′-β-sulfatoäthylsulfonyl-phenyl)-3-methyl-pyrazolon(5) | rotstichig gelb |
| 43 | 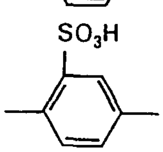 | 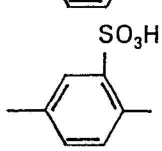 | 1-(2′-Methoxy-4′-β-sulfatoäthylsulfonyl-phenyl)-3-methyl-pyrazolon(5) | rotstichig gelb |

| Beispiel | $D_1$ | $D_2$ | $K-SO_2-X$ | Farbton |
|---|---|---|---|---|
| 44 | 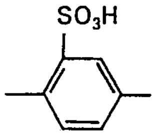 | 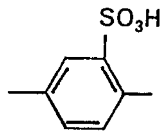 | 1-(2'-Methoxy-5'-β-sulfatoäthylsulfonyl-phenyl)-3-methyl-pyrazolon(5) | rotstichig gelb |
| 45 | 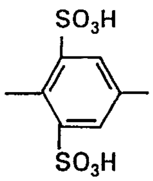 | 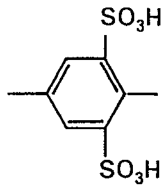 | 1-(4'-β-Sulfatoäthylsulfonyl-phenyl)-3-carbomethoxy-pyrazolon(5) | gelb |
| 46 | 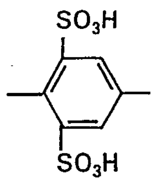 | 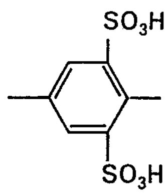 | 1-(4'-β-Sulfatoäthylsulfonyl-phenyl)-3-methyl-pyrazolon(5) | gelb |
| 47 | 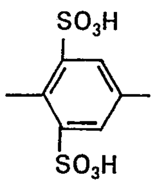 | 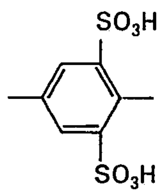 | 1-(4'-β-Chloräthysulfonyl-phenyl)-3-methyl-pyrazolon(5) | gelb |
| 48 | 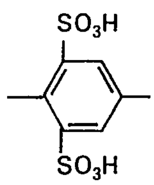 | 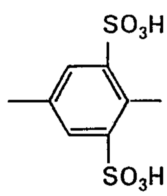 | 1-(4'-Vinylsulfonyl-phenyl)-3-carboxy-pyrazolon(5) | gelb |
| 49 | 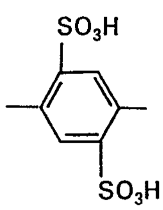 | 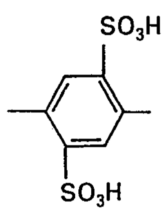 | 1-(4'-β-Sulfatoäthylsufonyl-phenyl)-3-methyl-pyrazolon(5) | gelb |
| 50 | 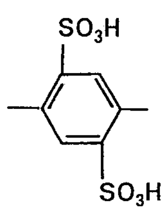 | 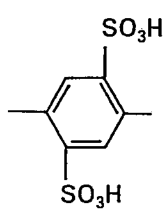 | 1-(2'-Methoxy-4'-β-sulfatoäthylsulfonyl-phenyl)-3-methyl-pyrazolon(5) | gelb |
| 51 | 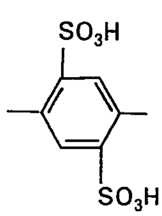 | 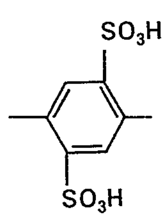 | 1-(2'-Methoxy-5'-β-sulfatoäthylsulfonyl-phenyl)-3-methyl-pyrazolon(5) | gelb |

| Beispiel | $D_1$ | $D_2$ | $K-SO_2-X$ | Farbton |
|---|---|---|---|---|
| 52 | 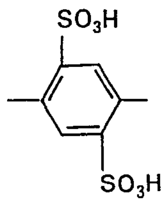 | 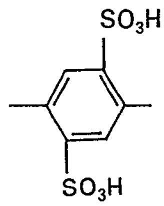 | 1-(2'-Methoxy-4'-β-sulfatoäthylsulfonyl-phenyl)-3-methyl-pyrazolon(5) | gelb |
| 52 | 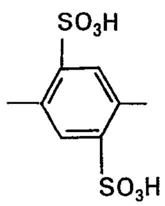 | 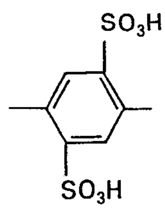 | 1-(2'-Methoxy-4'-β-sulfatoäthylsulfonyl-phenyl)-3-methyl-pyrazolon(5) | gelb |
| 53 | 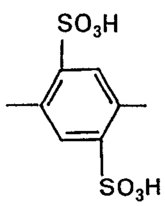 | 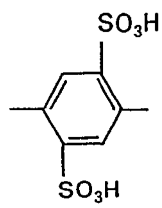 | 1-(4'-β-Sulfatoäthylsulfonyl-phenyl)-3-carbomethoxy-pyrazolon(5) | gelb |
| 54 | 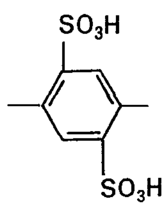 | 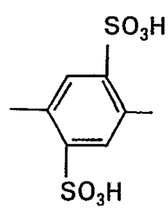 | 1-(3'-β-Sulfatoäthylsulfonyl-phenyl)-3-carbomethoxy-pyrazolon(5) | gelb |
| 55 | 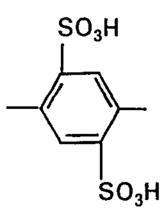 | 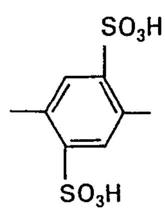 | 1-(2'-Methyl-5'-β-sulfatoäthylsulfonyl-phenyl)-3-carbomethoxy-pyrazolon(5) | gelb |
| 56 | 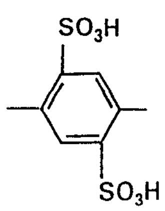 | 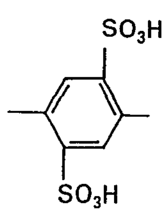 | 1-(2'-Methoxy-5'-β-sulfatoäthylsulfonyl-phenyl)-3-carbomethoxy-pyrazolon(5) | gelb |
| 57 | 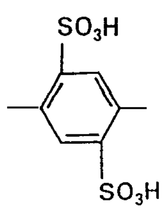 | 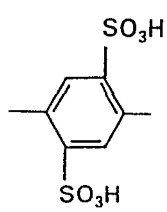 | 1-(2'-Methoxy-5'-methyl-4'-β-sulfato-äthylsulfonyl-phenyl)-3-carbomethoxy-pyrazolon(5) | gelb |
| 58 | 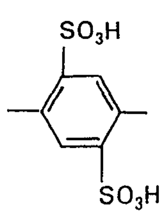 | 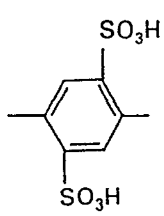 | 1-(2'-,5'-Dimethoxy-4'-β-sulfatoäthyl-sulfonyl-phenyl)-3-carbomethoxy-pyrazolon(5) | gelb |

| Beispiel | $D_1$ | $D_2$ | $K-SO_2-X$ | Farbton |
|---|---|---|---|---|
| 59 | 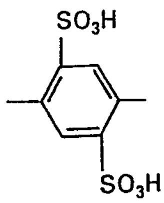 | 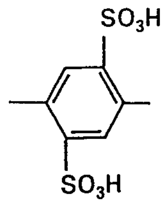 | 1-(2′-Brom-4′-β-sulfatoäthylsulfonyl-phenyl)-3-carbomethoxy-pyrazolon(5) | gelb |
| 60 | 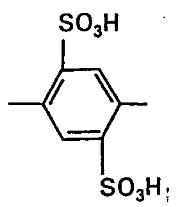 | 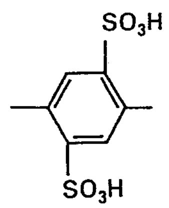 | 1-(2′-Chlor-5′-β-sulfatoäthylsulfonyl-phenyl)-3-carbomethoxy-pyrazolon(5) | gelb |
| 61 | 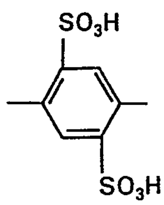 | 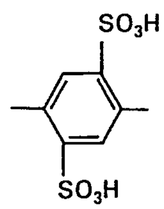 | 1-(4′-Vinylsulfonyl-phenyl)-3-methyl-pyrazolon(5) | gelb |
| 62 | 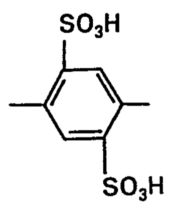 | 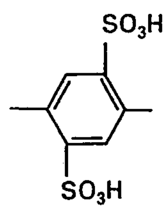 | 1-(4′-Vinylsulfonyl-phenyl)-3-carbo-methoxy-pyrazolon(5) | gelb |
| 63 | 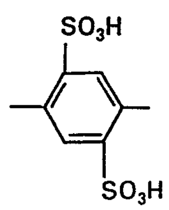 | 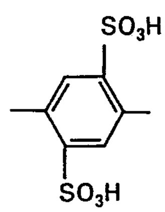 | 1-(4′-β-Chloräthylsulfonyl-phenyl)-3-carbäthoxy-pyrazolon(5) | gelb |
| 64 | 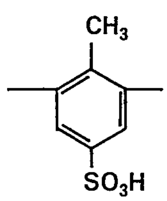 | 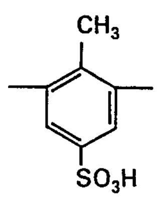 | 1-(4′-β-Sulfatoäthylsulfonyl-phenyl)-3-carboxy-pyrazolon(5) | gelb |
| 65 | 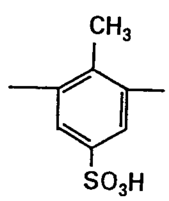 | 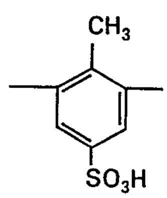 | 1-(3′-β-Sulfatoäthylsulfonyl-phenyl)-3-carboxy-pyrazolon(5) | gelb |
| 66 | 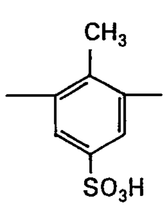 | 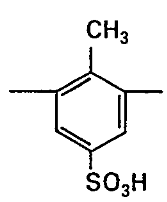 | 1-(2′-Methoxy-5′-β-sulfatoäthylsulfonyl-phenyl)-3-carboxy-pyrazolon(5) | gelb |

| Beispiel | $D_1$ | $D_2$ | $K-SO_2-X$ | Farbton |
|---|---|---|---|---|
| 67 | 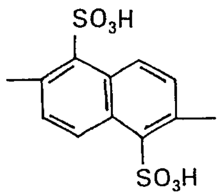 | 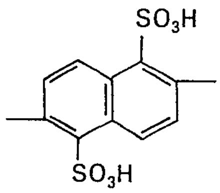 | 1-(4'-β-Sulfatoäthylsulfonyl-phenyl)-3-carboxy-pyrazolon(5) | gelb |
| 68 | 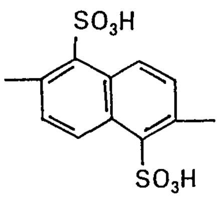 | 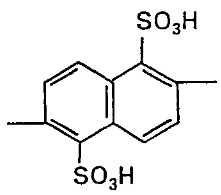 | 1-(4'-β-Sulfatoäthylsulfonyl-phenyl)-3-methyl-pyrazolon(5) | gelb |
| 69 | 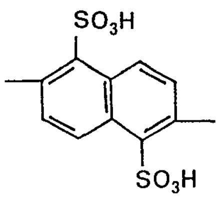 | 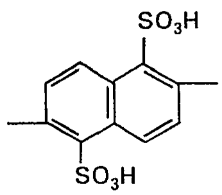 | 1-(4'-β-Sulfatoäthylsulfonyl-phenyl)-3-carbomethoxy-pyrazolon(5) | gelb |
| 70 | 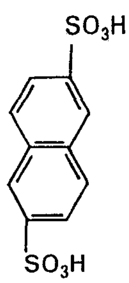 | 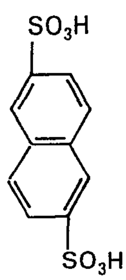 | 1-(4'-β-Sulfatoäthylsulfonyl-phenyl)-3-carboxy-pyrazolon(5) | gelb |
| 71 | 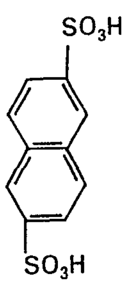 | 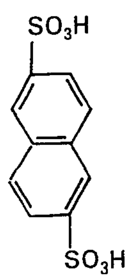 | 1-(4'-β-Sulfatoäthylsulfonyl-phenyl)-3-methyl-pyrazolon(5) | gelb |
| 72 | 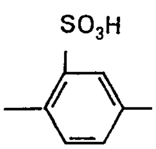 | 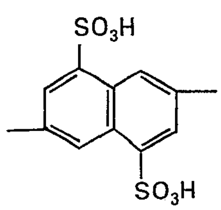 | 1-(4'-β-Sulfatoäthylsulfonyl-phenyl)-3-carboxy-pyrazolon(5) | gelb |
| 73 | 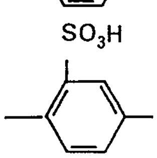 | 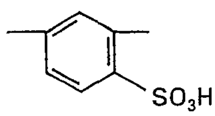 | 1-(4'-β-Sulfatoäthylsulfonyl-phenyl)-3-carbomethoxy-pyrazolon(5) | gelb |
| 74 | 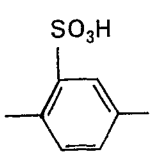 | 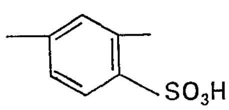 | 1-(4'-β-Sulfatoäthylsulfonyl-phenyl)-3-methyl-pyrazolon(5) | gelb |

| Beispiel | $D_1$ | $D_2$ | $K-SO_2-X$ | Farbton |
|---|---|---|---|---|
| 75 | 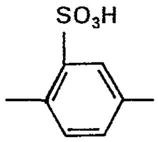 | 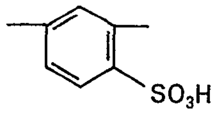 | 1-(2′-Methoxy-4′-β-sulfatoäthylsulfonyl-phenyl)-3-methyl-pyrazolon(5) | gelb |
| 76 | 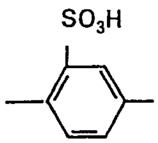 | 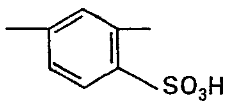 | 1-(2′-Methoxy-5′-β-sulfatoäthylsulfonyl-phenyl)-3-methyl-pyrazolon(5) | gelb |
| 77 | 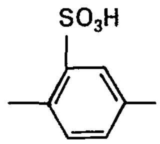 | 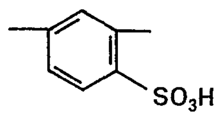 | 1-(2′-Methyl-5′-β-sulfatoäthylsulfonyl-phenyl)-3-methyl-pyrazolon(5) | gelb |
| 78 | 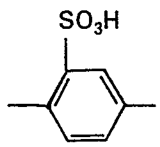 | 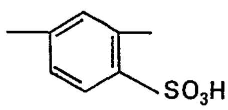 | 1-(3′-β-Sulfatoäthylsulfonyl-phenyl)-3-carboxy-pyrazolon(5) | gelb |
| 79 | 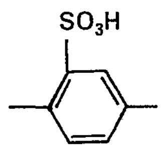 | 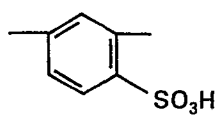 | 1-(2′-Methoxy-5′-methyl-4′-β-sulfato-äthylsulfonyl-phenyl)-3-carbomethoxy-pyrazolon(5) | gelb |
| 80 | 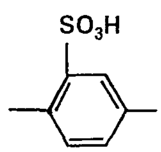 | 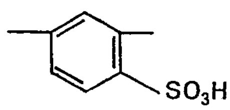 | 1-(2′-Brom-4′-β-sulfatoäthylsulfonyl-phenyl)-3-carbomethoxy-pyrazolon(5) | gelb |
| 81 | 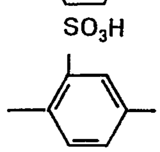 | 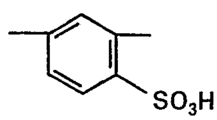 | 1-(4′-β-Thiosulfatoäthylsulfonyl-phenyl)-3-carbomethoxy-pyrazolon(5) | gelb |
| 82 | 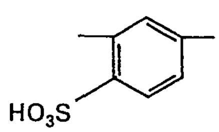 | 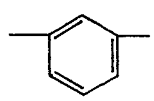 | 1-(4′-β-Sulfatoäthylsulfonyl-phenyl)-3-carboxy-pyrazolon(5) | gelb |
| 83 | 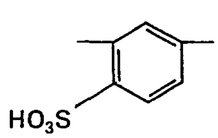 | 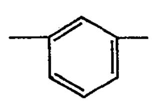 | 1-(4′-β-Sulfatoäthylsulfonyl-phenyl)-3-carbomethoxy-pyrazolon(5) | gelb |
| 84 | 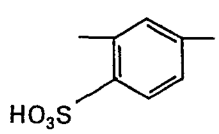 | 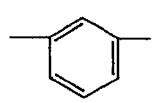 | 1-(4′-β-Sulfatoäthylsulfonyl-phenyl)-3-methyl-pyrazolon(5) | gelb |
| 85 | 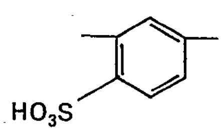 | 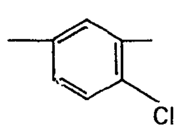 | 1-(4′-β-Sulfatoäthylsulfonyl-phenyl)-3-carboxy-pyrazolon(5) | gelb |
| 86 | 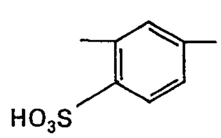 | 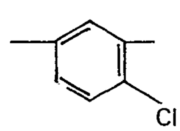 | 1-(4′-β-Sulfatoäthylsulfonyl-phenyl)-3-methyl-pyrazolon(5) | gelb |

| Beispiel | $D_1$ | $D_2$ | $K-SO_2-X$ | Farbton |
|---|---|---|---|---|
| 87 | 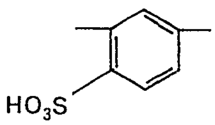 | 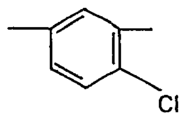 | 1-(3'-β-Thiosulfatoäthylsulfonyl-phenyl)-3-carbomethoxy-pyrazolon(5) | gelb |
| 88 | 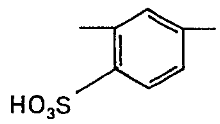 | 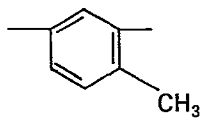 | 1-(4'-β-Sulfatoäthylsulfonyl-phenyl)-3-carboxy-pyrazolon(5) | gelb |
| 89 | 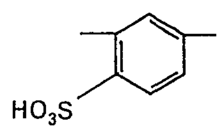 | 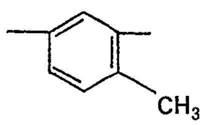 | 1-(2'-Methoxy-5'-β-thiosulfatoäthyl-sulfonyl-phenyl)-3-carbomethoxy-pyrazolon(5) | gelb |
| 90 | 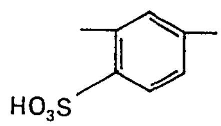 | 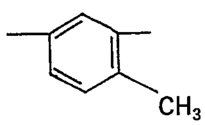 | 1-(4'-β-Sulfatoäthylsulfonyl-phenyl)-3-methyl-pyrazolon(5) | gelb |
| 91 | 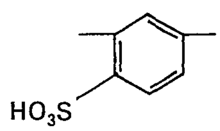 | 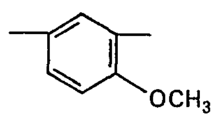 | 1-(4'-β-Sulfatoäthylsulfonyl-phenyl)-3-carboxy-pyrazolon(5) | gelb |
| 92 | 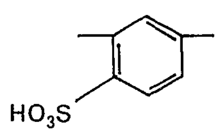 | 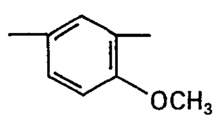 | 1-(4'-β-Sulfatoäthylsulfonyl-phenyl)-3-carboxy-pyrazolon(5) | gelb |
| 93 | 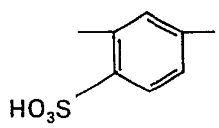 | 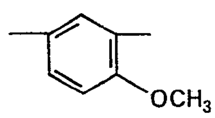 | 1-(4'-β-Sulfatoäthylsulfonyl-phenyl)-3-methyl-pyrazolon(5) | gelb |

Beispiele 94 bis 119

In den nachfolgenden Tabellenbeispielen sind weitere erfindungsgemässe Disazoverbindungen mit Hilfe ihrer Komponenten durch die allgemeine Formel (1b)

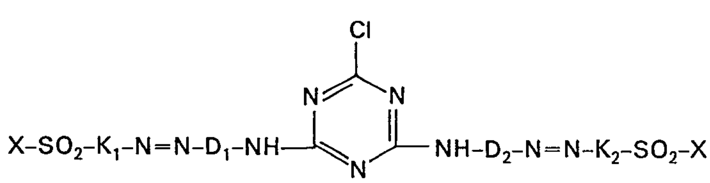

(1b)

beschrieben. Sie lassen sich in erfindungsgemässer Weise, beispielsweise analog einem der obigen Ausführungsbeispiele oder dem nachfolgenden Beispiel 135, aus ihren Komponenten (Cyanurchlorid, den Diaminoverbindungen entsprechend den allgemeinen Formeln $H_2N-D_1-NH_2$ und $H_2N-D_2-NH_2$ und den Kupplungskomponenten entsprechend den allgemeinen Formeln $-K_1-SO_2-X$ und $-K_2-SO_2-X$) herstellen. Sie besitzen sehr gute faserreaktive Farbstoffeigenschaften und liefern auf den in der Beschreibung genannten Materialien, wie insbesondere Cellulosefasermaterialien, nach den in der Technik üblichen Anwendungsmethoden in der Färberei und Druckerei, vorzugsweise nach den in der Technik üblichen Applikations- und Fixiermethoden für faserreaktive Farbstoffe, farbstarke Färbungen und Drucke mit guten Echtheiten in dem in dem jeweiligen Tabellenbeispiel angegebenen Farbton.

| Beispiel | $D_1$ | $D_2$ | $K_1$–$SO_2$–X | $K_2$–$SO_2$–X | Farbton |
|---|---|---|---|---|---|
| 94 | 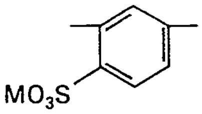 | 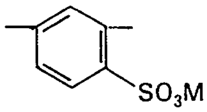 | 1-('-β-Sulfatoäthyl-sulfonyl-phenyl)-3-carboxy-pyrazolon(5) | 1-(2',5'-Dimethoxy-4'-β-sulfatoäthyl-sulfonyl-phenyl)-3-carboxy-pyrazolon(5) | grünstichig gelb |
| 95 | 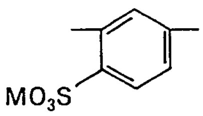 | 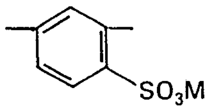 | 1-(4'-β-Sulfatoäthyl-sulfonyl-phenyl)-3-carboxy-pyrazolon(5) | 1-(4'-β-sulfatoäthyl-sulfonyl-phenyl)-3-methyl-pyrazolon(5) | grünstichig gelb |
| 96 | 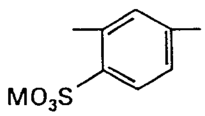 | 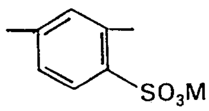 | 1-(4'-β-Sulfatoäthyl-sulfonyl-phenyl)-3-carboxy-pyrazolon(5) | 1-(2'Methoxy-4'-β-sulfatoäthylsulfonyl-phenyl)-3-methyl-pyrazolon(5) | grünstichig gelb |
| 97 | 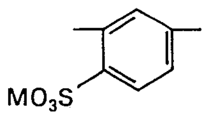 | 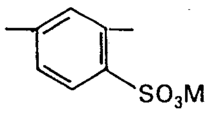 | 1-(4'-β-Sulfatoäthyl-sulfonyl-phenyl)-3-carboxy-pyrazolon(5) | 1-(2'-Methyl-5'-β-sulfatoäthylsulfonyl-phenyl)-3-methyl-pyrazolon(5) | grünstichig gelb |
| 98 | 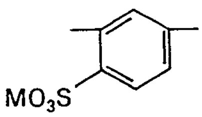 | 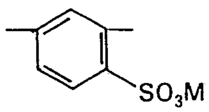 | 1-(4'-β-Sulfatoäthyl-sulfonyl-phenyl)-3-carboxy-pyrazolon(5) | 1-(4'-β-Thiosulfatoäthyl-sulfonyl-phenyl)-3-carbomethoxy-pyrazolon(5) | grünstichig gelb |
| 99 | 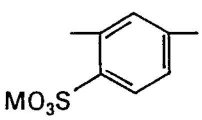 | 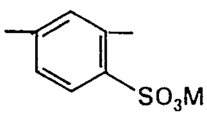 | 1-(4'-β-Sulfatoäthyl-sulfonyl-phenyl)-3-carboxy-pyrazolon(5) | 1-(4'-β-Chloräthylsulfonyl-phenyl)-3-carbomethoxy-pyrazolon(5) | grünstichig gelb |
| 100 | 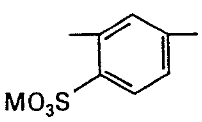 | 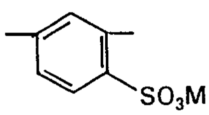 | 1-(4'-β-Sulfatoäthyl-sulfonyl-phenyl)-3-carboxy-pyrazolon(5) | 1-(4'-Vinylsulfonyl-phenyl)-3-carbomethoxy-pyrazolon(5) | grünstichig gelb |
| 101 | 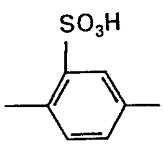 | 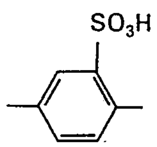 | 1-(4'-β-Sulfatoäthyl-sulfonyl-phenyl)-3-carboxy-pyrazolon(5) | 1-(3'-β-Sulfatoäthylsulfonyl-phenyl)-3-carboxy-pyrazolon(5) | rotstichig gelb |
| 102 | 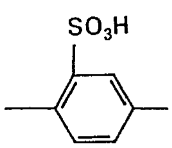 | 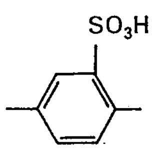 | 1-(4'-β-Sulfatoäthyl-sulfonyl-phenyl)-3-carboxy-pyrazolon(5) | 1-(2'-Methoxy-5'-β-sulfatoäthylsulfonyl-phenyl)-3-carboxy-pyrazolon(5) | rotstichig gelb |
| 103 | 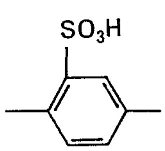 | 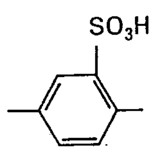 | 1-(4'-β-Sulfatoäthyl-sulfonyl-phenyl)-3-carboxy-pyrazolon(5) | 1-(4'-β-Sulfatoäthylsulfonyl-phenyl)-3-methyl-pyrazolon(5) | rotstichig gelb |
| 104 | 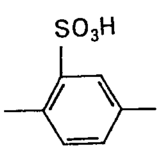 | 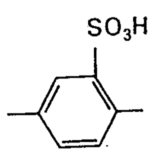 | 1-(4'-β-Sulfatoäthyl-sulfonyl-phenyl)-3-carboxy-pyrazolon(5) | 1-(2'-Methyl-5'-β-sulfatoäthylsulfonyl)-3-methyl-pyrazolon(5) | rotstichig gelb |
| 105 | 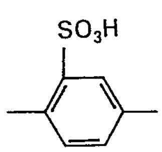 | 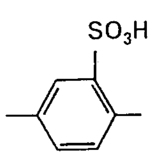 | 1-(4'-β-Sulfatoäthyl-sulfonyl-phenyl)-3-carboxy-pyrazolon(5) | 1-(3'-β-Sulfatoäthylsulfonyl-phenyl)-3-carbomethoxy-pyrazolon(5) | rotstichig gelb |

| Beispiel | $D_1$ | $D_2$ | $K_1$–$SO_2$–X | $K_2$–$SO_2$–X | Farbton |
|---|---|---|---|---|---|
| 106 | 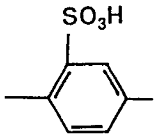 | 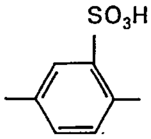 | 1-(4′-β-Sulfatoäthyl-sulfonyl-phenyl)-3-carbo-methoxy-pyrazolon(5) | 1-(3′-β-Sulfatoäthyl-sulfonyl-phenyl)-3-carbomethoxy-pyrazolon(5) | rotstichig gelb |
| 107 | 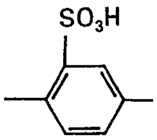 | 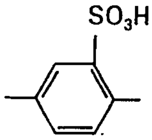 | 1-(4′-β-Sulfatoäthyl-sulfonyl-phenyl)-3-carbo-methoxy-pyrazolon(5) | 1-(2′-Methoxy-5′-β-sulfato-äthylsulfonyl-phenyl)-3-carbomethoxy-pyrazolon(5) | rotstichig gelb |
| 108 | 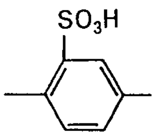 | 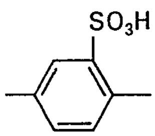 | 1-(4′-β-Sulfatoäthyl-sulfonyl-phenyl)-3-carbo-methoxy-pyrazolon(5) | 1-(2′-Methoxy-5′-methyl-4′-β-sulfatoäthylsulfonyl-phenyl)-3-carbomethoxy-pyrazolon(5) | rotstichig gelb |
| 109 | 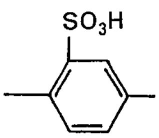 | 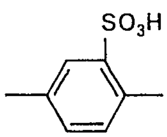 | 1-(4′-β-Sulfatoäthyl-sulfonyl-phenyl)-3-carbomethoxy-pyrazolon(5) | 1-(4′-β-Sulfatoäthylsulfonyl-phenyl)-3-methyl-pyrazolon(5) | rotstichig gelb |
| 110 | 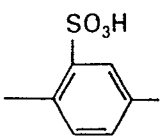 | 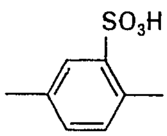 | 1-(4′-β-Sulfatoäthyl-sulfonyl-phenyl)-3-methyl-pyrazolon(5) | 1-(2′-Methyl-5′-β-sulfato-äthylsulfonyl-phenyl)-3-methyl-pyrazolon(5) | rotstichig gelb |
| 111 | 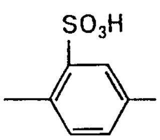 | 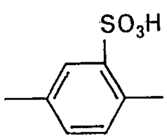 | 1-(4′-β-Sulfatoäthyl-sulfonyl-phenyl)-3-methyl-pyrazolon(5) | 1-(2′-Methoxy-5′-β-sulfato-äthylsulfonyl-phenyl)-3-methyl-pyrazolon(5) | rotstichig gelb |
| 112 | 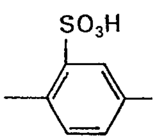 | 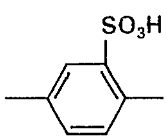 | 1-(4′-β-Sulfatoäthyl-sulfonyl-phenyl)-3-methyl-pyrazolon(5) | 1-(3′-β-Sulfatoäthylsulfonyl-phenal)-3-carbo-methoxy-pyrazolon(5) | rotstichig gelb |
| 113 | 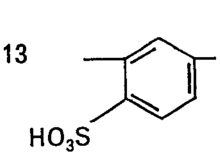 | 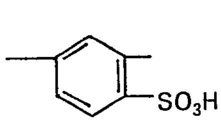 | 1-(4′-β-Sulfatoäthyl-sulfonyl-phenyl)-3-carboxy-pyrazolon(5) | 1-(2′-Methoxy-5′-β-sulfato-äthylsulfonyl-phenyl)-3-carboxy-pyrazolon(5) | grünstichig gelb |
| 114 | 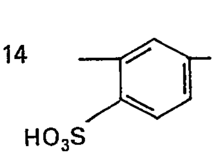 | 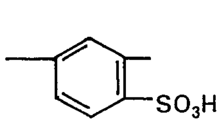 | 1-(4′-β-Sulfatoäthyl-sulfonyl-phenyl)-3-carboxy-pyrazolon(5) | 1-(2′-Methoxy-5′-methyl-4′-β-sulfatoäthyl-sulfonyl-phenyl)-3-carboxy-pyrazolon(5) | grünstichig gelb |
| 115 | 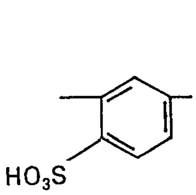 | 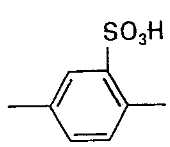 | 1-(4′-β-Sulfatoäthyl-sulfonyl-phenyl)-3-carboxy-pyrazolon(5) | 1-(4′-β-Sulfatoäthylsulfonyl-phenyl)-3-methyl-pyrazolon(5) | gelb |

| Beispiel | $D_1$ | $D_2$ | $K_1-SO_2-X$ | $K_2-SO_2-X$ | Y | Farbton |
|---|---|---|---|---|---|---|
| 116 | 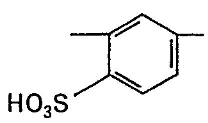 | 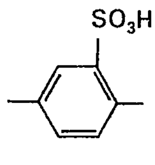 | 1-(4′-β-Thiosulfatoäthyl-sulfonyl-phenyl)-3-carbo-methoxy-pyrazolon(5) | 1-(4′-β-Sulfatoäthylsulfonyl-phenyl)-3-methyl-pyrazolon(5) | | gelb |
| 117 | 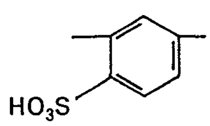 | 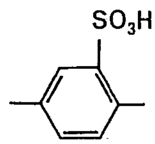 | 1-(4′-β-Sulfatoäthylsulfonyl-phenyl)-3-carbo-methoxy-pyrazolon(5) | 1-(2′-Methoxy-5′-β-sulfatoäthylsulfonyl-phenyl)-3-methyl-pyrazolon(5) | | gelb |
| 118 | 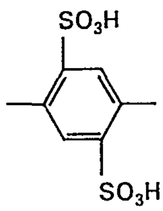 | 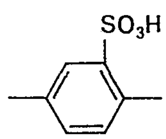 | 1-(4′-β-Sulfatoäthylsulfonyl-phenyl)-3-methyl-pyrazolon(5) | 1-(2′-Methyl-5′-β-sulfatoäthylsulfonyl-phenyl)-3-methyl-pyrazolon(5) | | rotstichig gelb |
| 119 | 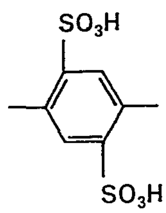 | 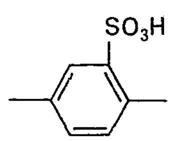 | 1-(4′-β-Sulfatoäthylsulfonyl-phenyl)-3-carbo-methoxy-pyrazolon(5) | 1-(3′-β-Sulfatoäthylsulfonyl-phenyl)-3-carbo-methoxy-pyrazolon(5) | | rotstichig gelb |

Beispiele 120 bis 126

In den nachfolgenden Tabellenbeispielen sind weitere erfindungsgemässe Disazoverbindungen mit Hilfe ihrer Komponenten durch die allgemeine Formel (1c)

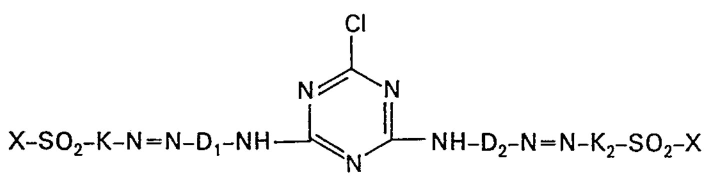 (1c)

beschrieben. Sie lassen sich in erfindungsgemässer Weise, beispielsweise analog einem der obigen Ausführungsbeispiele oder dem nachfolgenden Beispiel 135, aus ihren Komponenten (Cyanurbromid oder Cyanurfluorid oder einer Dihalogenotriazinverbindung der in der Beschreibung angegebenen allgemeinen Formel (6), den Diaminoverbindungen entsprechend den allgemeinen Formeln $H_2N-D_1-NH_2$ und $H_2N-D_2-NH_2$ und den Kupplungskomponenten entsprechend den allgemeinen Formeln $-K_1-SO_2-X$ und $-K_2-SO_2-X$) herstellen. Sie besitzen sehr gute faserreaktive Farbstoffeigenschaften und liefern auf den in der Beschreibung genannten Materialien, wie insbesondere Cellulosefasermaterialien, nach den in der Technik üblichen Anwendungsmethoden in der Färberei und Druckerei, vorzugsweise nach den in der Technik üblichen Applikations- und Fixiermethoden für faserreaktive Farbstoffe, farbstarke Färbungen und Drucke mit guten Echtheiten in dem in dem jeweiligen Tabellenbeispiel angegebenen Farbton.

| Beispiel | $D_1$ | $D_2$ | $K_1-SO_2-X$ | $K_2-SO_2-X$ | Y | Farbton |
|---|---|---|---|---|---|---|
| 120 | 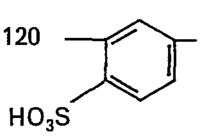 | 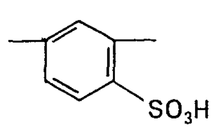 | 1-(4′-β-Sulfatoäthylsulfonyl-phenyl)-3-carboxy-pyrazolon(5) | 1-(4′-β-Sulfatoäthylsulfonyl-phenyl)-3-carboxy-pyrazolon(5) | Brom | grünst. gelb |

| Beispiel | $D_1$ | $D_2$ | $K_1$-$SO_2$-X | $K_2$-$SO_2$-X | Y | Farbton |
|---|---|---|---|---|---|---|
| 121 | 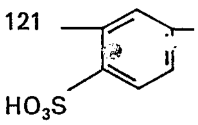 | 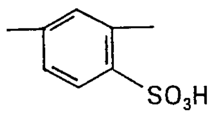 | 1-(4′-β-Sulfatoäthyl-sulfonyl-phenyl)-3-carboxy-pyrazolon(5) | 1-(4′-β-Sulfatoäthyl-sulfonyl-phenyl)-3-carboxy-pyrazolon(5) | Fluor | grünst. gelb |
| 122 | 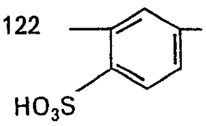 | 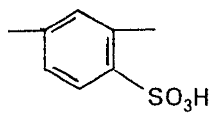 | 1-(4′-β-Sulfatoäthyl-sulfonyl-phenyl)-3-carboxy-pyrazolon(5) | 1-(4′-β-Sulfatoäthyl-sulfonyl-phenyl)-3-carboxy-pyrazolon(5) | N-Methyl-phenyl-amino | grünst. gelb |
| 123 | 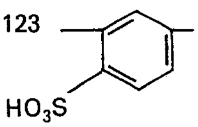 | 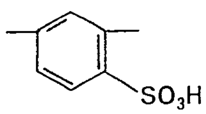 | 1-(4′-β-Sulfatoäthyl-sulfonyl-phenyl)-3-carboxy-pyrazolon(5) | 1-(4′-β-Sulfatoäthyl-sulfonyl-phenyl)-3-carboxy-pyrazolon(5) | p-Sulfo-phenoxy | grünst. gelb |
| 124 | 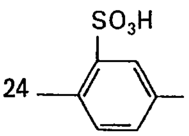 | 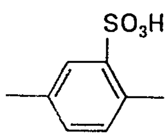 | 1-(4′-β-Sulfatoäthyl-sulfonyl-phenyl)-3-carboxy-pyrazolon(5) | 1-(4′-β-Sulfatoäthyl-sulfonyl-phenyl)-3-carboxy-pyrazolon(5) | Fluor | rotst. gelb |
| 125 | 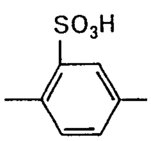 | 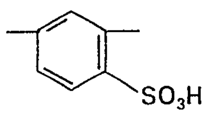 | 1-(4′-β-Sulfatoäthyl-sulfonyl-phenyl)-3-carboxy-pyrazolon(5) | 1-(4′-β-Thiosulfato-äthylsulfonyl-phenyl)-3-carbomethoxy-pyrazolon(5) | N-Äthyl-phenyl-amino | gelb |
| 126 | 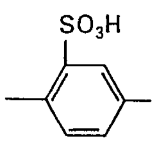 | 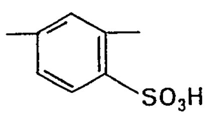 | 1-(4′-β-Sulfatoäthyl-sulfonyl-phenyl)-3-carboxy-pyrazolon(5) | 1-(4′-β-Sulfatoäthyl-sulfonyl-phenyl)-3-carbomethoxy-pyrazolon(5) | m-Sulfo-phenyl-amino | gelb |

Beispiel 127

Man stellt gemäss der Verfahrensweise des Beispieles 1a) das sekundäre Kondensationsprodukt aus 188 Teilen 1,3-Diaminobenzol-4-sulfonsäure und 101,9 Teilen Cyanurchlorid her und tetrazotiert es, wie im Beispiel 1 b) beschrieben.

Dieses Tetrazoniumsalz wird sodann in wässriger Lösung bei einem pH-Wert von 6,0 bis 6,7 und bei einer Temperatur von 18 bis 20°C unter mehrstündigem Rühren mit 362 Teilen 1-(4′-β-Sulfatoäthylsulfonyl-phenyl)-3-methyl-5-aminopyrazol gekuppelt.

Die hergestellte erfindungsgemässe Disazoverbindung wird durch Zugabe von Kaliumchlorid aus der Syntheselösung ausgesalzen, abgesaugt, getrocknet und gemahlen. Es wird ein gelbes, Elektrolytsalze (vorwiegend Kaliumchlorid) enthaltendes Pulver des Alkalimetallsalzes, vorwiegend Kaliumsalzes, der Disazoverbindung der Formel

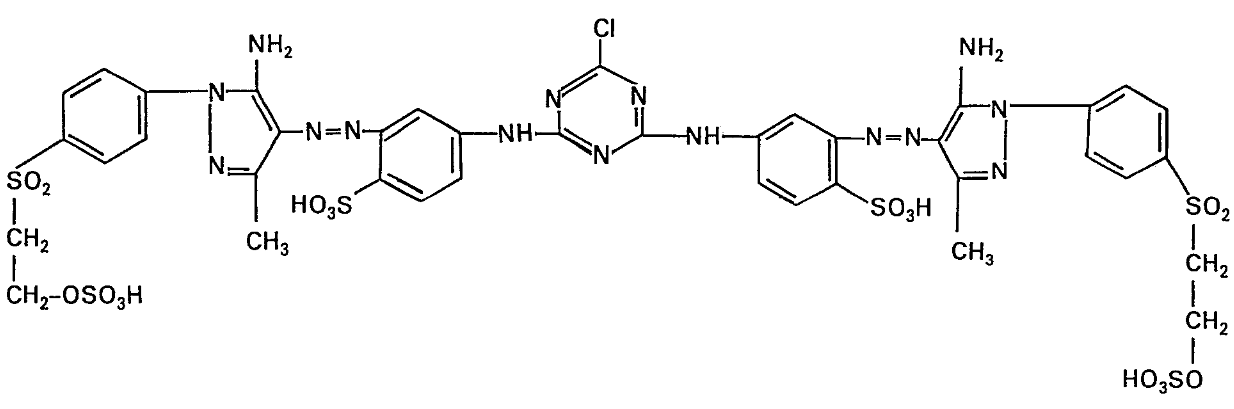

erhalten. Diese erfindungsgemässe Disazoverbindung zeigt sehr gute faserreaktive Farbstoffeigenschaften und färbt die in der Beschreibung genannten Materialien, wie insbesondere Cellulosefasermaterialien, nach den in der Technik für faserreaktive Farbstoffe üblichen Applikations- und Fixiermethoden in gelben Tönen von ausgezeichneten Echtheiten, von denen insbesondere die ausgezeichnete Waschechtheit, Schweiss-, Licht-, Reib-, Wasser- und Meerwasserechtheit sowie die sehr gute Beständigkeit gegen gechlortes Trinkwasser (Chlorbadewasser) hervorgehoben werden können. Die als Kupplungskomponente eingesetzte Aminopyrazol-Verbindung ist aus der Deutschen Patentschrift 2 161 698 bekannt.

Beispiel 128

Zur Herstellung einer erfindungsgemässen Disazoverbindung verfährt man analog der Verfahrensweise des Beispieles 127, verwendet jedoch als Kupplungskomponente 392 Teile 1-(2'-Methoxy-5'-β-sulfatoäthylsulfonyl-phenyl)-3-methyl-5-amino-pyrazol. Nach üblicher Aufarbeitung, beispielsweise gemäss der Verfahrensweise des Beispieles 127, erhält man das Alkalimetallsalz, wie Kaliumsalz, der Verbindung der Formel

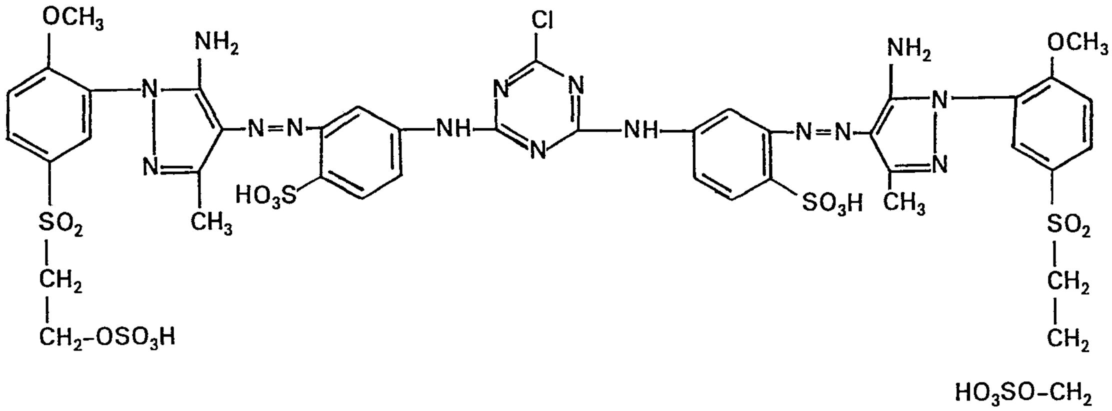

die sehr gute faserreaktive Farbstoffeigenschaften zeigt und coloristische Eigenschaften aufweist, die in der Güte mit denen der erfindungsgemässen Disazoverbindung des Beispieles 127 ähnlich sind.

Die hier verwendete Aminopyrazol-Verbindung ist aus der Deutschen Offenlegungsschrift 2 161 761 bekannt.

Beispiele 129 bis 134

In den nachfolgenden Tabellenbeispielen sind weitere erfindungsgemässe Disazoverbindungen mit Hilfe ihrer Komponenten durch die früher angegebene allgemeine Formel (1a)

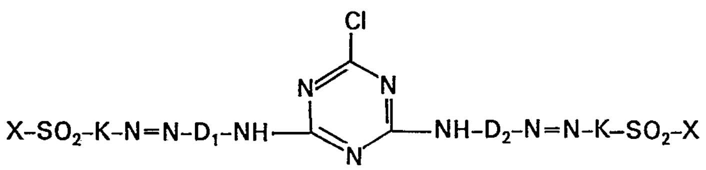

(1a)

beschrieben. Sie lassen sich in erfindungsgemässer Weise, beispielsweise analog einem der obigen Ausführungsbeispiele, aus ihren Komponenten (Cyanurchlorid, den Diaminoverbindungen entsprechend den allgemeinen Formeln $H_2N-D_1-NH_2$ und $H_2N-D_2-NH_2$ und der Kupplungskomponente entsprechend der allgemeinen Formel $-K-SO_2-X$) herstellen. Sie besitzen sehr gute faserreaktive Farbstoffeigenschaften und liefern auf den in der Beschreibung genannten Materialien, wie insbesondere Cellulosefasermaterialien nach den in der Technik üblichen Anwendungsmethoden in der Färberei und Druckerei, vorzugsweise nach den in der Technik üblichen Applikations- und Fixiermethoden für faserreaktive Farbstoffe, farbstarke Färbungen und Drucke mit guten Echtheiten in dem in dem jeweiligen Tabellenbeispiel angegebenen Farbton.

| Beispiel | $D_1$ | $D_2$ | $K-SO_2-X$ | Farbton |
|---|---|---|---|---|
| 129 | 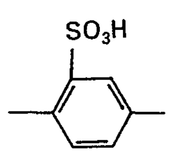 | 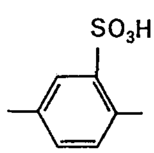 | 1-(4'-β-Sulfatoäthylsulfonyl-phenyl)-3-methyl-5-amino-pyrazol | gelb |

| Beispiel | $D_1$ | $D_2$ | K–$SO_2$–X | Farbton |
|---|---|---|---|---|
| 130 | 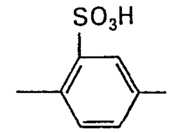 | 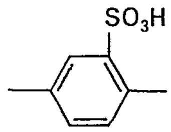 | 1-(2′-Methoxy-5′-β-sulfatoäthylsulfonyl-phenyl)-3-methyl-5-amino-pyrazol | gelb |
| 131 | 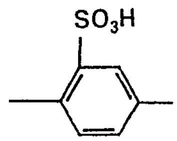 | 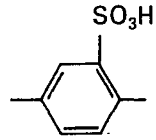 | 1-(2′,5′-Dimethoxy-4′-β-sulfatoäthyl-sulfonyl-phenyl)-3-methyl-5-amino-pyrazol | gelb |
| 132 | 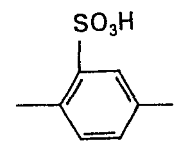 | 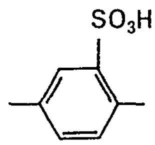 | 1-(2′-Methoxy-5′-methyl-4′-β-sulfa-toäthylsulfonyl-phenyl)-3-methyl-5-amino-pyrazol | gelb |
| 133 | 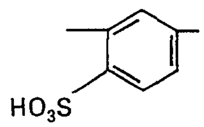 | 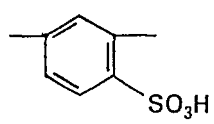 | 1-(2′-Methoxy-5′-β-sulfatoäthylsulfo-nyl-phenyl)-3-methyl-5-amino-pyrazol | gelb |
| 134 | 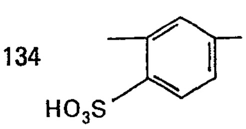 | 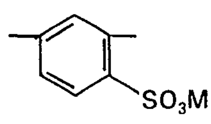 | 1-(2′-Methoxy-5′-methyl-4′-β-sulfato-äthylsulfonyl-phenyl)-3-methyl-5-amino-pyrazol | gelb |

Beispiel 135

a) Eine Lösung mit einem pH von 7,2 bis 7,6 von 188 Teilen 1,4-Diaminobenzol-2-sulfonsäure in 200 Teilen Wasser wird mit 1000 Teilen zerkleinertem Eis und 500 Volumenteilen Aceton versetzt. Unter guter Rührung trägt man bei einer Temperatur von −5°C bis 0°C innerhalb von 50 Minuten 100 Teile Cyanurchlorid portionsweise ein und hält hierbei den pH-Wert zwischen 5,5 und 6,3 durch langsame Zugabe von 260 Volumenteilen einer 19%igen wässrigen Natriumcarbonatlösung. Man rührt 3 Stunden weiter und erwärmt sodann den Ansatz auf 25°C, klärt die Lösung, kühlt das Filtrat auf 10°C ab, setzt 139 Volumenteile einer 40%igen wässrigen Natriumnitritlösung hinzu und lässt diese Mischung unter Rühren in ein Gemisch aus 500 Volumenteilen einer 31%igen wässrigen Salzsäure und 2250 Teilen Eis einlaufen. Man rührt eine Stunde bei einer Temperatur von 2 bis 6°C weiter und zerstört in üblicher Weise überschüssige salpetrige Säure mittels Amidosulfonsäure.

b) Getrennt hiervon stellt man die Lösung einer Kupplungskomponente her: 312 Teile 1-(4′-β-Hydroxyäthylsulfonylphenyl)-pyrazol-5-on-3-carbonsäure werden im Verlauf von 5 Stunden bei 15 bis 20°C in 598 Volumenteile einer 95,5%igen wässrigen Schwefelsäure eingetragen und 10 Stunden bei 18 bis 20°C verrührt. Dieses Reaktionsgemisch wird sodann unter Rühren auf ein Gemisch aus 3500 Teilen Eis und 1000 Teilen Wasser gegeben und im Verlaufe von 4 Stunden durch Einstreuen von etwa 1160 Teilen Calciumcarbonat auf einen pH-Wert von 5,2 bis 6,0 eingestellt, wobei die Temperatur unterhalb von 10°C gehalten wird. Anschliessend erwärmt man den Ansatz durch Einleiten von Wasserdampf auf 70°C, saugt das ausgefallene Calciumsulfat ab, wäscht diesen Rückstand in mehreren Portionen mit insgesamt 3000 Teilen Wasser, vereinigt Filtrat und Waschwasser und kühlt es auf etwa 25°C ab.

c) Zu diesem vereinigten Filtrat von b) gibt man die unter a) beschriebene Tetrazoniumsalzlösung, versetzt mit 250 Teilen kristallisiertem Natriumacetat und sodann unter Rühren langsam mit etwa 930 Volumenteilen einer wässrigen 19%igen Natriumcarbonatlösung, bis ein pH-Wert zwischen 5,6 und 6,0 eingestellt ist. Die Kupplungsreaktion wird noch einige Stunden unter Rühren bei 18 bis 20°C zu Ende geführt. Anschliessend wird das Reaktionsgemisch auf 65°C erwärmt und durch Zugabe von Kieselgur und Filtration geklärt. Das Filtrat wird mit 1500 Teilen Kaliumchlorid versetzt und die ausgefallene erfindungsgemässe Disazoverbindung nach 3-stündigem Rühren abgesaugt, getrocknet und gemahlen. Es wird ein gelbes Pulver erhalten, das etwa 677 Teile des Kaliumsalzes der Verbindung der Formel

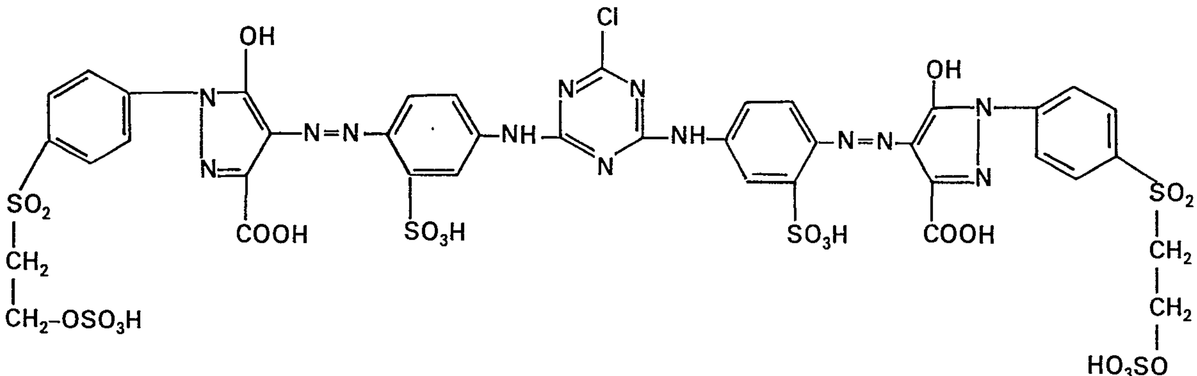

enthält. Diese erfindungsgemässe Disazoverbindung färbt nach den für faserreaktive Farbstoff üblichen Verfahren beispielsweise Cellulosefasermaterialien in gelbstichig orangen Tönen von ausgezeichneten Echtheiten, unter denen die Wasch-, Schweiss-, Licht-, Reib-, Wasser- und Meerwasserechtheiten besonders hervorgehoben werden können. Die beim Färben und Bedrucken von Cellulosefasermaterialien erreichten Fixiergrade sind sehr hoch.

**Patentansprüche**

1. Wasserlösliche Disazoverbindungen der allgemeinen Formel (1)

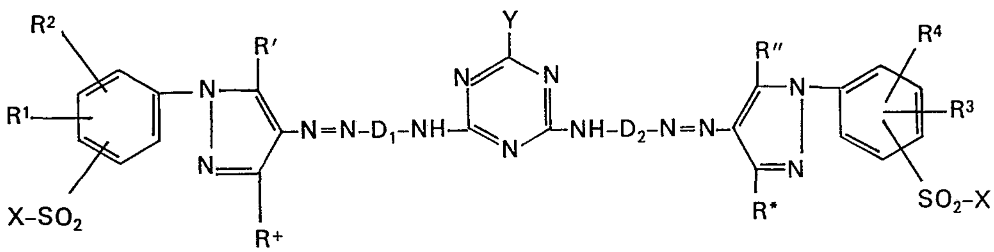

(1)

in welcher bedeuten:

$D_1$ und $D_2$ sind jedes ein Phenylenrest oder ein Napthylenrest, die durch einen oder zwei Substituenten substituiert sein können, die aus der Menge von einem Chloratom, einem Bromatom, zwei Sulfogruppen, zwei Carboxygruppen, zwei Alkylgruppen von 1 bis 4 C-Atomen und zwei Alkoxygruppen von 1 bis 4 C-Atomen ausgewählt sind;

R′ und R″ sind jedes die Aminogruppe oder die Hydroxygruppe;

$R^+$ und $R^*$ sind jedes die Methylgruppe oder eine Carboxygruppe oder eine Carbalkoxygruppe von 2 bis 5 C-Atomen, wie die Carbäthoxygruppe und die Carbomethoxygruppe;

$R^1$ und $R^3$ sind jedes ein Wasserstoffatom, eine Alkylgruppe von 1 bis 4 C-Atomen, eine Alkoxygruppe von 1 bis 4 C-Atomen, ein Chloratom oder ein Bromatom;

$R^2$ und $R^4$ sind jedes ein Wasserstoffatom, eine Alkylgruppe von 1 bis 4 C-Atomen, eine Alkoxygruppe von 1 bis 4 C-Atomen oder ein Chloratom;

X ist die Vinylgruppe oder eine β-Sulfatoäthyl-, eine β-Thiosulfatoäthyl- oder die β-Chloräthyl-Gruppe;

Y ist ein Chlor-, Fluor- oder Bromatom oder eine Sulfogruppe oder eine Gruppe der Formel (2a), (2b) oder (2c)

$-O-R^5$ (2a) $-S-R^6$ (2b) 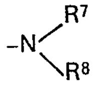 (2c)

in welchen bedeuten:

$R^5$ ist ein Wasserstoffatom, ein gegebenenfalls substituierter aliphatischer Rest oder ein gegebenenfalls substituierter Arylrest;

$R^6$ ist ein gegebenenfalls substituierter aliphatischer Rest oder ein gegebenenfalls substituierter Arylrest oder ein aromatischer heterocyclischer Rest;

$R^7$ ist ein Wasserstoffatom, ein gegebenenfalls substituierter aliphatischer Rest oder ein gegebenenfalls substituierter cycloaliphatischer Rest;

$R^8$ ist ein Wasserstoffatom, ein gegebenenfalls substituierter aliphatischer Rest oder ein gegebenenfalls substituierter Arylrest, oder

$R^7$ und $R^8$ bilden zusammen mit dem Stickstoffatom einen 5-, 6- oder 7-gliedrigen gesättigten heterocyclischen Ring mit gegebenenfalls einem oder zwei weiteren Heteroatomen, wie beispielsweise einem Stickstoff-, Sauerstoff- oder Schwefelatom,

wobei die Formelglieder $D_1$, $D_2$, $R^+$, $R^*$, $R^1$, $R^2$, $R^3$, $R^4$, X, Y, $R^5$, $R^6$, $R^7$, $R^8$, R′ und R″ zueinander gleiche oder voneinander verschiedene Bedeutungen besitzen können.

2. Disazoverbindungen nach Anspruch 1 der allgemeinen Formel (1), dadurch gekennzeichnet, dass hier $R^5$ ein Wasserstoffatom oder eine Alkylgruppe von 1 bis 4 C-Atomen ist, die durch einen oder zwei Substituenten substituiert sein kann, die der Gruppe Alkoxy von 1 bis 4 C-Atomen, Sulfo, Carboxy, Hydroxy, Sulfato, Phenyl, durch Alkyl von 1 bis 4 C-Atomen, Alkoxy von 1 bis 4

C-Atomen, Nitro, Sulfo, Carboxy und/oder Chlor substituiertes Phenyl, Naphthyl und durch Alkyl von 1 bis 4 C-Atomen, Alkoxy von 1 bis 4 C-Atomen, Nitro, Sulfo, Carboxy und/oder Chlor substituiertes Naphthyl angehören, oder der Phenylrest oder ein Naphthylrest ist oder ein durch Alkyl von 1 bis 4 C-Atomen, Alkoxy von 1 bis 4 C-Atomen, Nitro, Sulfo, Carboxy und/oder Chlor substituierter Phenylrest oder ein durch Alkyl von 1 bis 4 C-Atomen, Alkoxy von 1 bis 4 C-Atomen, Sulfo, Carboxy und/oder Chlor substituierter Naphthylrest ist,

$R^6$ eine Alkylgruppe von 1 bis 4 C-Atomen ist, die durch einen oder zwei Substituenten substituiert sein kann, die der Gruppe Alkoxy von 1 bis 4 C-Atomen, Sulfo, Carboxy, Hydroxy, Sulfato, Phenyl, durch Alkyl von 1 bis 4 C-Atomen, Alkoxy von 1 bis 4 C-Atomen, Nitro, Sulfo, Carboxy und/oder Chlor substituiertes Phenyl, Naphthyl und durch Alkyl von 1 bis 4 C-Atomen, Alkoxy von 1 bis 4 C-Atomen, Nitro, Sulfo, Carboxy und/oder Chlor substituiertes Naphthyl angehören, oder der Phenylrest oder ein Naphthylrest ist oder ein durch Alkyl von 1 bis 4 C-Atomen, Alkoxy von 1 bis 4 C-Atomen, Nitro, Sulfo, Carboxy und/oder Chlor substituierter Phenylrest oder ein durch Alkyl von 1 bis 4 C-Atomen, Alkoxy von 1 bis 4 C-Atomen, Sulfo, Carboxy und/oder Chlor substituierter Naphthylrest ist oder der Benzthiazol-2-yl-Rest ist, der im carbocyclischen Teil durch eine Alkylgruppe von 1 bis 4 C-Atomen eine Alkoxygruppe von 1 bis 4 C-Atomen, ein Chloratom oder eine Sulfogruppe substituiert sein kann;

$R^7$ ein Wasserstoffatom oder eine Alkylgruppe von 1 bis 4 C-Atomen bedeutet, die durch einen oder zwei Substituenten substituiert sein kann, die der Gruppe Alkoxy von 1 bis 4 C-Atomen, Sulfo, Carboxy, Hydroxy, Sulfato, Phenyl und durch Alkyl von 1 bis 4 C-Atomen, Alkoxy von 1 bis 4 C-Atomen, Sulfo, Carboxy und/oder Chlor substituiertes Phenyl angehören, oder ein gegebenenfalls durch 1 bis 3 Methylgruppen substituierter Cyclopentyl- oder Cyclohexylrest ist und

$R^8$ ein Wasserstoffatom oder eine Alkylgruppe ist, die durch einen oder zwei Substituenten substituiert sein kann, die der Gruppe Alkoxy von 1 bis 4 C-Atomen, Sulfo, Carboxy, Hydroxy, Sulfato, Phenyl und durch Alkyl von 1 bis 4 C-Atomen, Alkoxy von 1 bis 4 C-Atomen, Sulfo, Carboxy und/oder Chlor substituiertes Phenyl angehören, oder der Phenylrest ist, der durch einen oder zwei Substituenten substituiert sein kann, die der Gruppe Hydroxy, Carboxy, Sulfo, Alkyl von 1 bis 4 C-Atomen, Alkoxy von 1 bis 4 C-Atomen und Chlor angehören, oder ein Naphthylrest ist, der durch einen, zwei oder drei Substituenten aus der Gruppe Hydroxy, Carboxy, Sulfo, Alkyl von 1 bis 4 C-Atomen, Alkoxy von 1 bis 4 C-Atomen und Chlor substituiert sein kann, oder die Hydroxygruppe oder die Aminogruppe, die Phenylaminogruppe oder eine Alkylaminogruppe mit einem Alkylrest von 1 bis 4-C-Atomen ist, wobei $R^7$ und $R^8$ zueinander gleiche oder voneinander verschiedene Bedeutungen besitzen können, oder $R^7$ und $R^8$ bilden zusammen mit dem Stickstoffatom den Rest des Morpholin-, Piperidin- oder Piperazinringes.

3. Disazoverbindungen nach Anspruch 1 oder 2, dadurch gekennzeichnet, dass $R^+$ und $R^*$, zueinander gleich oder voneinander verschieden, jedes die Methylgruppe, die Carboxygruppe oder die Carbomethoxygruppe bedeuten.

4. Disazoverbindungen nach Anspruch 1, 2 oder 3, dadurch gekennzeichnet, dass $R^1$ und $R^3$ jedes ein Wasserstoffatom, eine Alkoxygruppe von 1 bis 4 C-Atomen oder ein Chlor- oder ein Bromatom und $R^2$ und $R^4$ jedes ein Wasserstoffatom, eine Alkylgruppe von 1 bis 4 C-Atomen oder eine Alkoxygruppe von 1 bis 4 C-Atomen bedeuten, wobei die $R^1$, $R^2$, $R^3$ und $R^4$ zueinander gleich oder voneinander verschieden sein können.

5. Disazoverbindungen nach Anspruch 1, 2, 3 oder 4, dadurch gekennzeichnet, dass $D_1$ und $D_2$, zueinander gleich oder voneinander verschieden, jedes ein meta- oder para-Phenylenrest ist, die durch einen oder zwei Substituenten substituiert sein können, die aus der Menge von einem Chloratom, einer Carboxygruppe, zwei Alkylgruppen von 1 bis 4 C-Atomen, zwei Alkoxygruppen von 1 bis 4 C-Atomen und zwei Sulfogruppen ausgewählt sind, oder ein Naphthylenrest ist, der durch eine oder zwei Sulfogruppen substituiert sein kann.

6. Disazoverbindungen nach einem der Ansprüche 1 bis 5, dadurch gekennezeichnet, dass die beiden Gruppen $-SO^2-X$ meta- oder paraständig an den Benzolkern gebunden sind.

7. Disazoverbindungen nach Anspruch 1 oder 2, dadurch gekennzeichnet, dass die beiden Gruppen $-SO_2-X$ meta-oder para-ständig zu dem Stickstoffatom des Pyrazolringes an den Benzolkern gebunden sind, $R^1$ und $R^3$ beide für ein Wasserstoffatom oder die Methoxygruppe stehen, wobei $R^1$ und $R^3$ zueinander gleich oder voneinander verschieden sein können, $R^2$ und $R^4$ beide ein Wasserstoffatom sind, $R'$ und $R''$ beide für die Hydroxygruppe stehen, $R^+$ und $R^*$ beide die Methylgruppe bedeuten und $D_1$ einen Rest der Formel (8a) oder (8b) und $D_2$ einen Rest der Formel (8c) oder (8d)

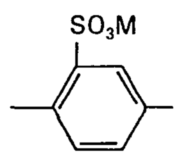
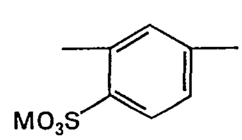

(8a) (8b)

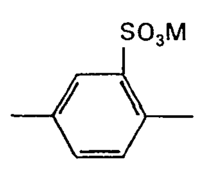
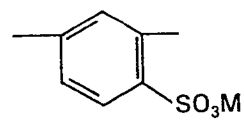

(8c) (8d)

in welchen M ein Wasserstoffatom oder ein Alkalimetall ist oder für das Äquivalent eines Erdalkalimetalls steht, darstellen.

8. Disazoverbindungen nach Anspruch 1 der allgemeinen Formel (9)

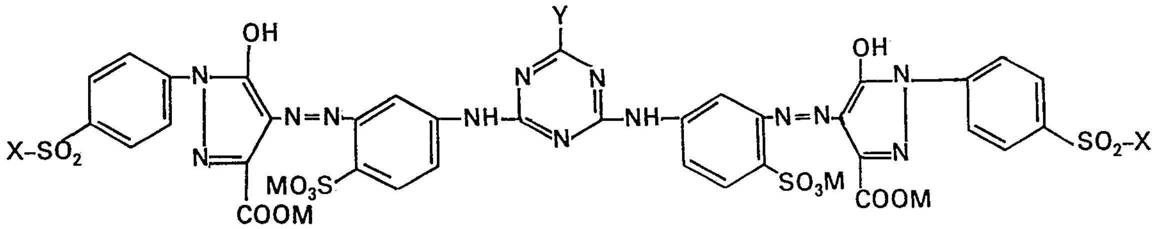

(9)

in welcher M ein Wasserstoffatom oder ein Alkalimetall ist oder für das Äquivalent eines Erdalkalimetalls steht und X und Y die in Anspruch 1 oder 2 genannten Bedeutungen haben.

9. Disazoverbindungen nach Anspruch 1 der allgemeinen Formel (10)

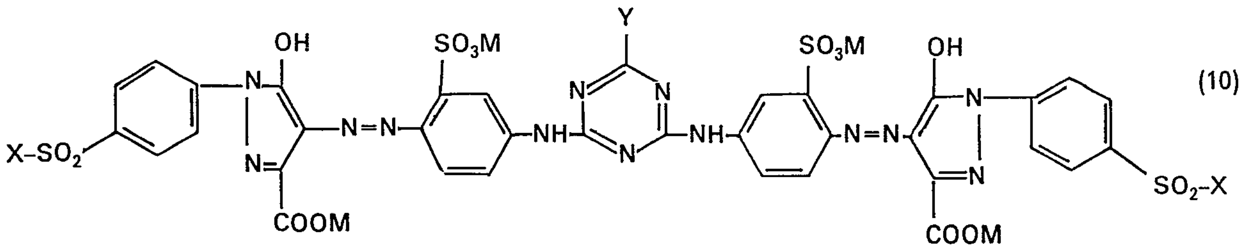

(10)

in welcher M ein Wasserstoffatom oder ein Alkalimetall ist oder für das Äquivalent eines Erdalkalimetalls steht und X und Y die in Anspruch 1 oder 2 genannten Bedeutungen haben.

10. Disazoverbindungen nach Anspruch 1 der allgemeinen Formel (11)

(11)

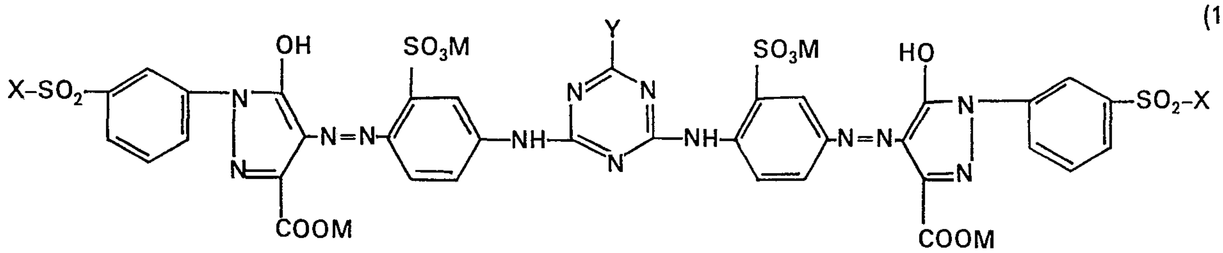

in welcher M ein Wasserstoffatom oder ein Alkalimetall ist oder für das Äquivalent eines Erdalkalimetalls steht und X und Y die in Anspruch 1 oder 2 genannten Bedeutungen haben.

11. Disazoverbindungen nach Anspruch 1 der allgemeinen Formel (12)

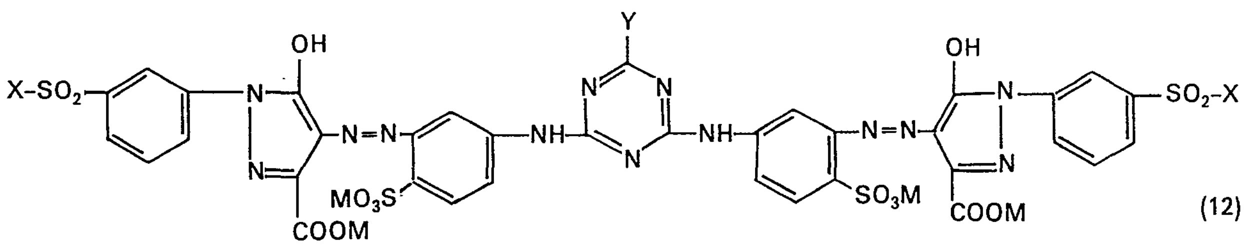

(12)

in welcher M ein Wasserstoffatom oder ein Alkalimetall ist oder für das Äquivalent eines Erdalkalimetalls steht und Y und Y die in Anspruch 1 oder 2 genannten Bedeutungen haben.

12. Disazoverbindungen nach Anspruch 1 der allgemeinen Formel (13)

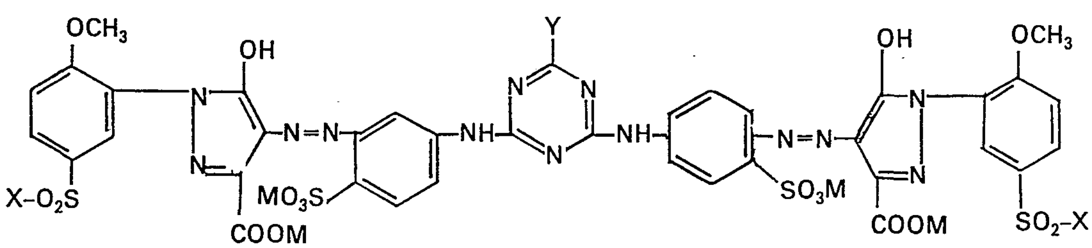

(13)

in welcher M ein Wasserstoffatom oder ein Alkalimetall ist oder für das Äquivalent eines Erdalkalimetalls steht und X und Y die in Anspruch 1 oder 2 genannten Bedeutungen haben.

13. Disazoverbindungen nach Anspruch 1 der allgemeinen Formel (14)

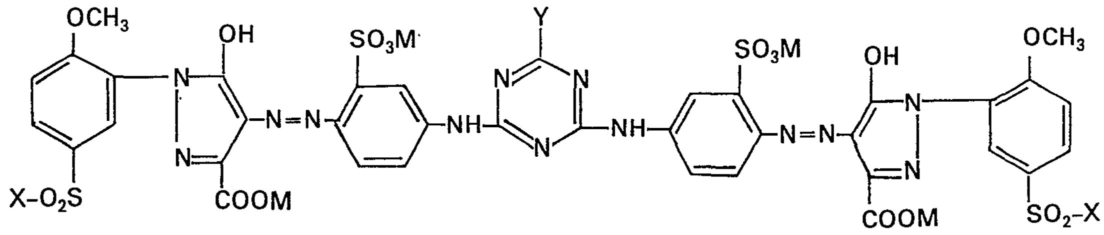

(14)

in welcher M ein Wasserstoffatom oder ein Alkalimetall ist oder für das Äquivalent eines Erdalkalimetalls steht und X und Y die in Anspruch 1 oder 2 genannten Bedeutungen haben.

14. Disazoverbindungen nach einem der Ansprüche 1 bis 7, dadurch gekennzeichnet, dass R+ und R* beide hier eine Carboxygruppe bedeuten.

15. Disazoverbindungen nach einem der Ansprüche 1 bis 6, dadurch gekennzeichnet, dass R′ und R″ beide hier die Hydroxygruppe bedeuten.

16. Disazoverbindungen nach einem der Ansprüche 1 bis 7, dadurch gekennzeichnet, dass Y hier ein Chloratom ist.

17. Disazoverbindungen nach einem der Ansprüche 10 bis 13, dadurch gekennzeichnet, dass Y hier ein Chloratom ist.

18. Disazoverbindungen nach Anspruch 8 oder 9, dadurch gekennzeichnet, dass Y hier ein Chloratom ist.

19. Disazoverbindungen nach einem der Ansprüche 1 bis 18, dadurch gekennzeichnet, dass X hier die β-Sulfatoäthyl-Gruppe ist.

20.Disazoverbindungen nach einem der Ansprüche 1 bis 13, dadurch gekennzeichnet, dass M ein Wasserstoff-, Natrium- oder Kaliumatom ist.

21. Verfahren zur Herstellung der Disazoverbindungen von Anspruch 1, dadurch gekennzeichnet, dass man eine Diaminoverbindung der allgemeinen Formel (3)

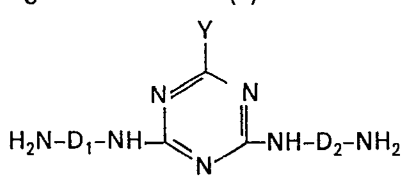

(3)

in welcher $D_1$, $D_2$ und Y die Anspruch 1 genannten Bedeutungen haben, tetrazotiert und mit einer als Kupplungskomponente dienenden Verbindung der allgemeinen Formel (4a) und einer als Kupplungskomponente dienenden Verbindung der allgemeinen Formel (4b)

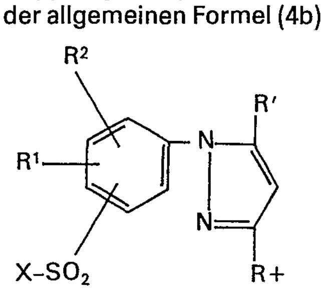

(4a)

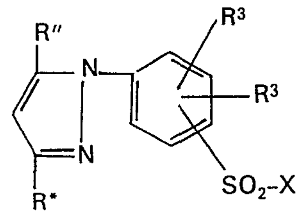

(4b)

in welchen R+, R*, R′, R″, $R^1$, $R^2$, $R^3$, $R^4$ und die beiden X die in Anspruch 1 genannten Bedeutungen haben und hierbei zueinander gleiche oder voneinander verschiedene Bedeutungen besitzen können, in äquivalenten Mengen umsetzt (kuppelt),

oder dass an eine Aminoazoverbindung der allgemeinen Formel (5a) und eine Aminoazoverbindung der allgemeinen Formel (5b)

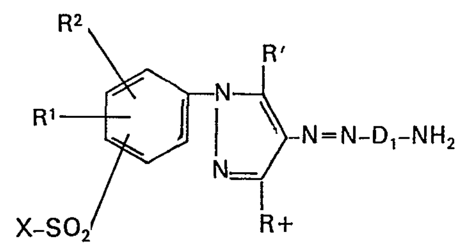

(5a)

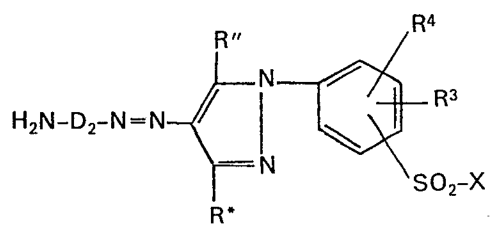

(5b)

in welchen $D_1$, $D_2$, R′, R″, R+, R*, $R^1$, $R^2$, $R^3$ und $R^4$ sowie die beiden X die in Anspruch 1 genannten Bedeutungen haben und zueinander gleiche oder voneinander verschiedene Bedeutungen besitzen können, in äquivalenten Mengen mit Cyanurchlorid, Cyanurbromid oder Cyanurfluorid oder mit einer Dihalogenotriazin-Verbindung der allgemeinen Formel (6)

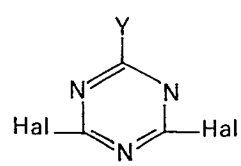

(6)

in welcher Y die in Anspruch 1 genannte Bedeutung besitzt und Hal jeweils ein Chlor-, Brom- oder Fluoratom bedeuten, umsetzt (kondensiert),

oder dass man eine Aminoazoverbindung der allgemeinen Formel (7)

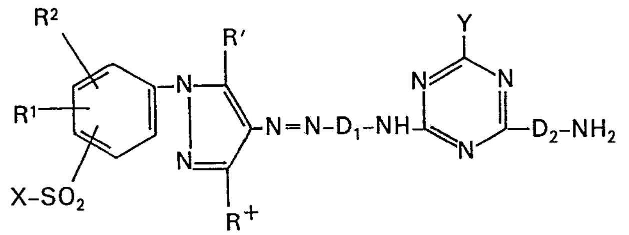

(7)

in welcher $D_1$, $D_2$, R′, $R^+$, $R^1$, $R^2$, Y und X die in Anspruch 1 genannten Bedeutungen haben, diazotiert und mit einer Verbindung der oben genannten und definierten allgemeinen Formel (4b), in welcher die Formelglieder $R^*$, R″, $R^3$, $R^4$ und X jeweils zu den entsprechenden Formelgliedern in Formel (7) gleiche oder voneinander verschiedene Bedeutungen besitzen können, kuppelt.

22. Verwendung der in Anspruch 1 genannten und definierten Disazoverbindungen der allgemeinen Formel (1) als Farbstoffe zum Färben von hydroxy- und/oder carbonamidgruppenhaltigem Material, insbesondere Fasermaterial.

**Claims**

1. Water-soluble disazo compounds of the general formula (1)

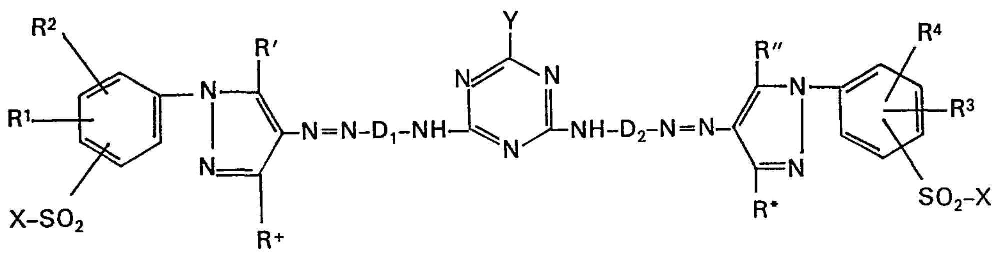

(1)

in which:

$D_1$ and $D_2$ are each a phenylene radical or a naphthylene radical, which can be substituted by one or two substituents selected from the group consisting of a chlorine atom, a bromine atom, two sulfo groups, two carboxy groups, two alkyl groups of 1 to 4 C-atoms and two alkoxy groups of 1 to 4 C-atoms;

R′ and R″ are each the amino group or the hydroxy group;

$R^+$ and $R^*$ are each the methyl group or a carboxy group or a carbalkoxy group of 2 to 5 C-atoms, such as the carbethoxy group or the carbomethoxy group;

$R^1$ and $R^3$ are each a hydrogen atom, an alkyl group of 1 to 4 C-atoms, an alkoxy group of 1 to 4 C-atoms,a chlorine atom or a bromine atom;

$R^2$ and $R^4$ are each a hydrogen atom, an alkyl group of 1 to 4 C-atoms, an alkoxy group of 1 to 4 C-atoms or a chlorine atom;

X is the vinyl group or a β-sulfatoethyl, a β-thiosulfatoethyl or a β-chloroethyl group;

Y is a chlorine, fluorine or bromine atom or a sulfo group of the formula (2a), (2b) or (2c)

$-O-R^5$ (2a)  $-S-R^6$ (2b)  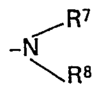 (2c)

in which

$R^5$ is a hydrogen atom, an optionally substituted aliphatic radical or an optionally substituted aryl radical,

$R^6$ is an optionally substituted aliphatic radical or an optionally substituted aryl radical or an aromatic heterocyclic radical,

$R^7$ is a hydrogen atom, an optionally substituted aliphatic radical or an optionally substituted cycloaliphatic radical,

$R^8$ is a hydrogen atom, an optionally substituted-aliphatic radical or an optionally substituted aryl radical, or

$R^7$ and $R^8$, together with the nitrogen atom, form a 5-, 6- or 7-membered saturated heterocyclic ring which optionally contains one or two further heteroatoms, such as, for example, a nitrogen, oxygen or sulfur atom;

and the moieties $D_1$, $D_2$, $R^+$, $R^*$, $R^1$, $R^2$, $R^3$, $R^4$, X, Y, $R^5$, $R^6$, $R^7$, $R^8$, R′ and R″ can have meanings which are identical to or different from one another.

2. Disazo compounds according to claim 1 of the general formula (1), characterized by that $R^5$ is a hydrogen atom or an alkyl group of 1 to 4 C-atoms which can be substituted by one or two substituents which belong to the group consisting of alkoxy of 1 to 4 C-atoms, sulfo, carboxy, hydroxy, sulfato, phenyl, phenyl substituted by alkyl of 1 to 4 carbon atoms, alkoxy of 1 to 4 C-atoms, nitro, sulfo, carboxy and/or chlorine, naphthyl and naphthyl substituted by alkyl of 1 to 4 C-atoms, alkoxy of 1 to 4 C-atoms, nitro, sulfo, carboxy and/or chlorine, or is the phenyl radical or a

naphthyl radical or a phenyl radical substituted by alkyl of 1 to 4 C-atoms, alkoxy of 1 to 4 C-atoms, nitro, sulfo, carboxy and/or chlorine, or a naphthyl radical substituted by alkyl of 1 to 4 C-atoms, alkoxy of 1 to 4 C-atoms, sulfo, carboxy and/or chlorine,

$R^6$ is an alkyl group of 1 to 4 C-atoms which can be substituted by one or two substituents which belong to the group consisting of alkoxy of 1 to 4 C-atoms, sulfo, carboxy, hydroxy, sulfato, phenyl, phenyl substituted by alkyl of 1 to 4 C-atoms, alkoxy of 1 to 4 C-atoms, nitro, sulfo, carboxy and/or chlorine, naphthyl and naphthyl substituted by alkyl of 1 to 4 C-atoms, alkoxy of 1 to 4 C-atoms, nitro, sulfo, carboxy and/or chlorine, or is the phenyl radical or a naphthyl radical or a phenyl radical substituted by alkyl of 1 to 4 C-atoms, alkoxy of 1 to 4 C-atoms, nitro, sulfo, carboxy and/or chlorine, or a naphthyl radical substituted by alkyl of 1 to 4 C-atoms, alkoxy of 1 to 4 C-atoms, sulfo, carboxy and/or chlorine, or is the benzothiazol-2-yl radical which can be substituted in the carbocyclic part by an alkyl group of 1 to 4 C-atoms, an alkoxy group of 1 to 4 C-atoms, a chlorine atom or a sulfo group,

$R^7$ denotes a hydrogen atom or an alkyl group of 1 to 4 C-atoms which can be substituted by one or two substituents which belong to the group consisting of alkoxy of 1 to 4 C-atoms, sulfo, carboxy, hydroxy, sulfato, phenyl and phenyl substituted by alkyl of 1 to 4 C-atoms, alkoxy of 1 to 4 C-atoms, sulfo, carboxy and/or chlorine, or is a cyclopentyl or cyclohexyl radical which are optionally substituted by 1 to 3 methyl groups, and

$R^8$ is a hydrogen atom or an alkyl group which can be substituted by one or two substituents which belong to the group consisting of alkoxy of 1 to 4 C-atoms, sulfo, carboxy, hydroxy, sulfato, phenyl and phenyl substituted by alkyl of 1 to 4 C-atoms, alkoxy of 1 to 4 C-atoms, sulfo, carboxy and/or chlorine, or is the phenyl radical which can be substituted by one or two substituents which belong to the group consisting of hydroxy, carboxy, sulfo, alkyl of 1 to 4 C-atoms, alkoxy of 1 to 4 C-atoms and chlorine, or is a naphthyl radical which can be substituted by one, two or three substituents from the group consisting of hydroxy, carboxy, sulfo, alkyl of 1 to 4 C-atoms, alkoxy of 1 to 4 C-atoms and chlorine, or is the hydroxy group or the amino group, the phenylamino group or an alkylmino group having an alkyl radical or 1 to 4 C-atoms, and $R^7$ and $R^8$ can be identical or different from each other, or $R^7$ and $R^8$, together with the nitrogen atom, form the radical of a morpholine, piperidine or piperazine ring.

3. Disazo compounds according to claim 1 or 2, characterized by that $R^+$ and $R^*$, identical to or different from each other, each denote the methyl group, the carboxy group or the carbomethoxy group.

4. Disazo compounds according to claim 1, 2 or 3, characterized by that $R^1$ and $R^3$ each denote a hydrogen atom, an alkoxy group of 1 to 4 C-atoms or a chlorine or a bromine atom, and $R^2$ and $R^4$ each denote a hydrogen atom, an alkyl group of 1 to 4 C-atoms or an alkoxy group of 1 to 4 C-atoms, and $R^1$, $R^2$, $R^3$ and $R^4$ can be identical to or different from one another.

5. Disazo compounds according to claim 1, 2, 3 or 4, characterized by that $D_1$ and $D_2$, identical to or different from each other, each is a meta- or para-phenylene radical which can be substituted by one or two substituents selected from the group consisting of one chlorine atom, one carboxy group, two alkyl groups of 1 to 4 C-atoms, two alkoxy groups of 1 to 4 C-atoms and two sulfo groups, or is a naphthyl radical which can be substituted by one or two sulfo groups.

6. Disazo compounds according to any of claims 1 to 5, characterized by that the two $-SO_2-X$ groups are bonded to the benzene nucleus in meta- or para-position.

7. Disazo compounds according to claim 1 or 2, characterized by that the two $-SO_2-X$ groups are bonded to the benzene nucleus in meta- or para-position relative to the nitrogen atom of the pyrazole ring, $R^1$ and $R^3$ both represent a hydrogen atom or a methoxy group, where $R^1$ and $R^3$ can be identical to or different from each other, $R^2$ and $R^4$ both are hydrogen atom, $R'$ and $R''$ both represent a hydroxy group, $R^+$ and $R^*$ both denote a methyl group, and $D_1$ represents a radical of the formula (8a) or (8b) and $D_2$ represents a radical of the formula (8c) or (8d)

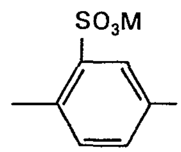
(8a)

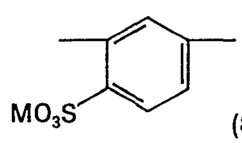
(8b)

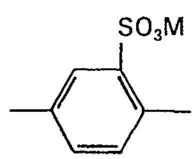
(8c)

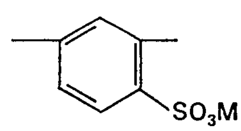
(8d)

in which M is a hydrogen atom or an alkali metal or represents the equivalent of an alkaline earth metal.

8. Disazo compounds according to claim 1 of the general formula (9)

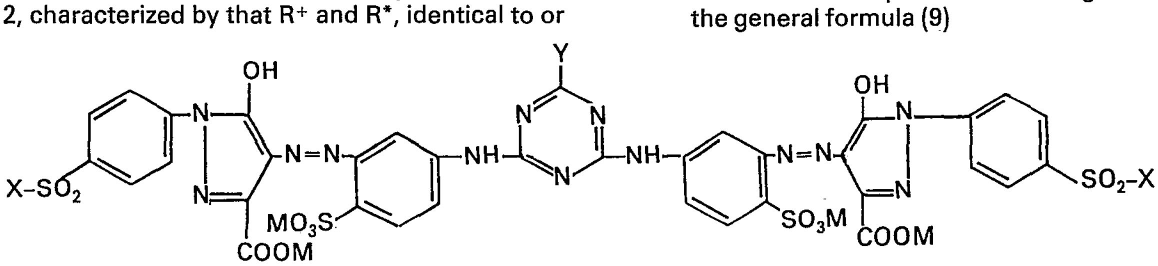
(9)

in which M is a hydrogen atom or an alkali metal or represents the equivalent of an alkaline earth metal, and X and Y have the meanings mentioned in claim 1 or 2.

9. Disazo compounds according to claim 1 of the general formula (10)

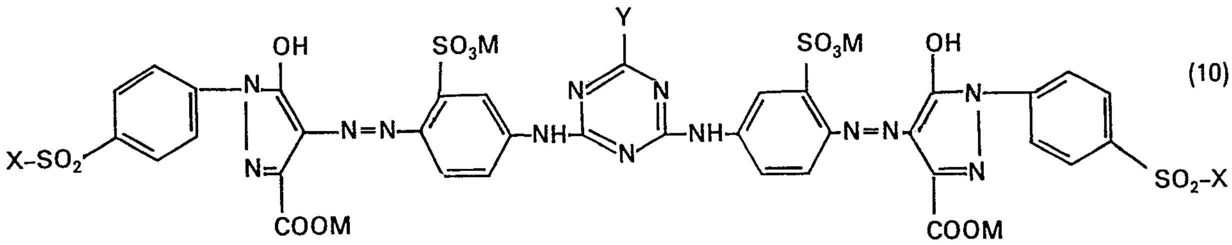

(10)

in which M is a hydrogen atom or an alkali metal or represents the equivalent of an alkaline earth metal, and X and Y have the meanings mentioned in claim 1 or 2.

10. Disazo compounds according to claim 1 of the general formula (11)

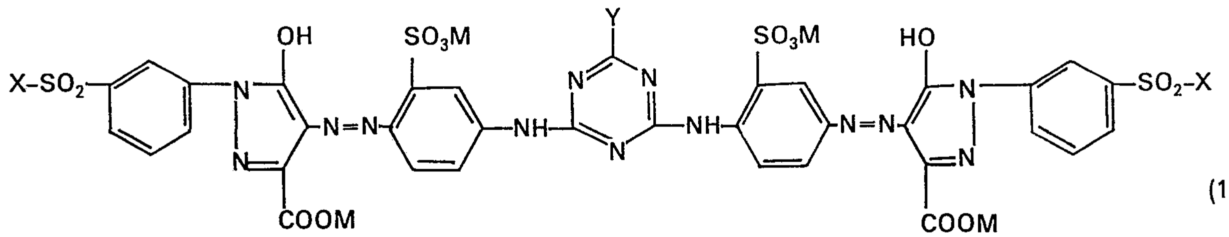

(11)

in which M is a hydrogen atom or an alkali metal or represents the equivalent of an alkaline earth metal, and X and Y have the meanings mentioned in claim 1 or 2.

11. Disazo compounds according to claim 1 of the general formula (12)

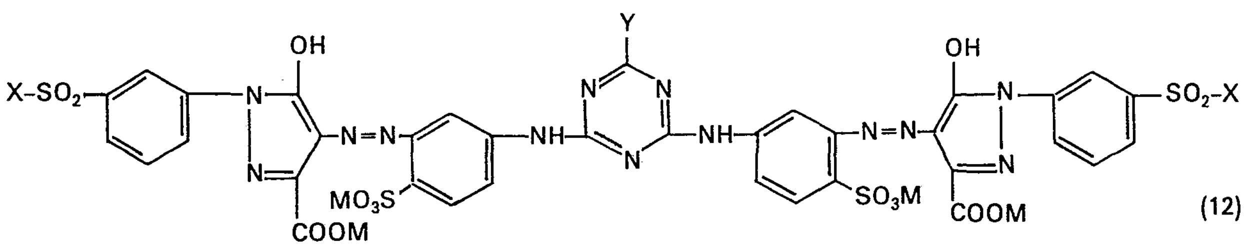

(12)

in which M is a hydrogen atom or an alkali metal or represents the equivalent of an alkaline earth metal, and X and Y have the meanings mentioned in claim 1 or 2.

12. Disazo compounds according to claim 1 of the general formula (13)

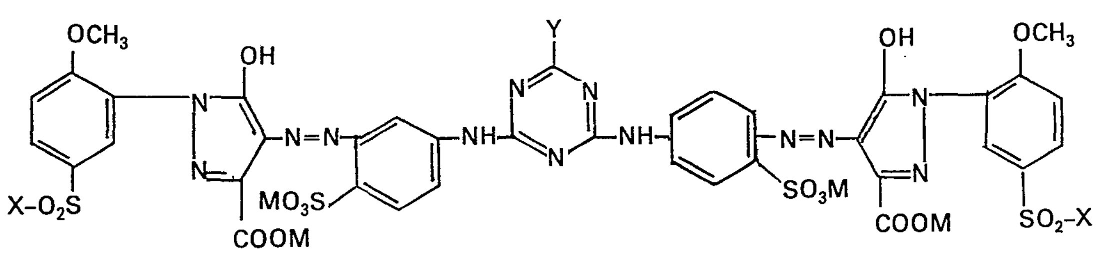

(13)

in which M is a hydrogen atom or an alkali metal or represents the equivalent of an alkaline earth metal, and X and Y have the meanings mentioned in claim 1 or 2.

13. Disazo compounds according to claim 1 of the general formula (14)

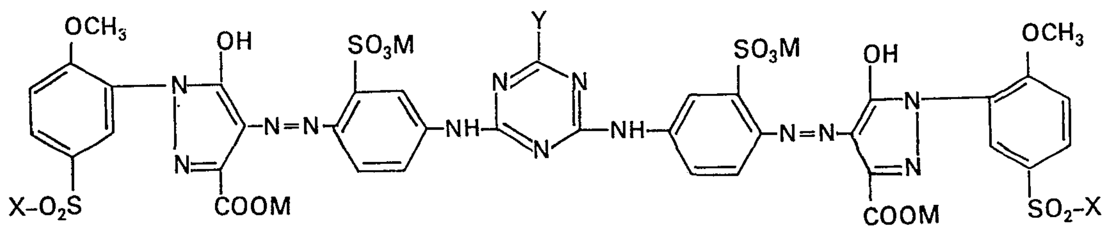

(14)

in which M is a hydrogen atom or an alkali metal or represents the equivalent of an alkaline earth metal, and X and Y have the meanings mentioned in claim 1 or 2.

14. Disazo compounds according to any of claims 1 to 7, characterized by that R+ and R* both denote a carboxy group.

15. Disazo compounds according to any of claims 1 to 6, characterized by that R′ and R″ both denote a hydroxy group.

16. Disazo compounds according to any of claims 1 to 7, characterized by that Y is a chlorine atom.

17. Disazo compounds according to any of claims 10 to 13, characterized by that Y is a chlorine atom.

18. Disazo compounds according to claim 8 or 9, characterized by that Y is a chlorine atom.

19. Disazo compounds according to any of claims 1 to 18, characterized by that X is a β-sulfato group.

20. Disazo compounds according to any of claims 1 to 13, characterized by that M is a hydrogen, sodium or potassium atom.

21. Processes for the preparation of the disazo compounds of claim 1, characterized by that a diamino compound of the general formula (3)

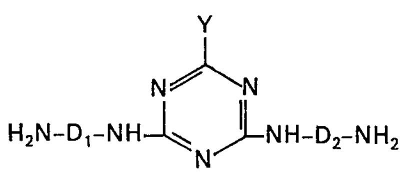

(3)

in which $D_1$, $D_2$ and Y have the meanings mentioned in claim 1, is tetrazotized and reacted (coupled) in equivalent amounts with a compound of the general formula (4a) serving as a coupling component and a compound of the general formula (4b) serving as a coupling component

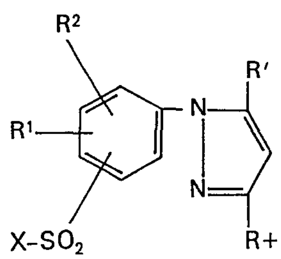

(4a)

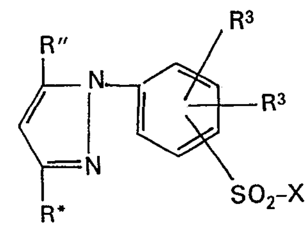

(4b)

in which R+, R*, R′, R″, $R^1$, $R^2$, $R^3$, $R^4$ and the two Xs have the meanings mentioned in claim 1 and can be identical to or different from one another, or that an aminoazo compound of the general formula (5a) and an aminoazo compound of the general formula (5b)

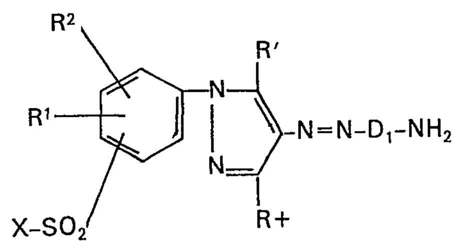

(5a)

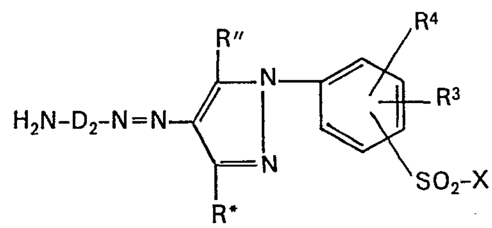

(5b)

in which $D_1$, $D_2$, R′, R″, R+, R*, $R^1$, $R^2$, $R^3$ and $R^4$ and the two Xs have the meanings mentioned in claim 1 and can be identical to or different from one another, are reacted (condensed) in equivalent amounts with cyanuric chloride, cyanuric bromide or cyanuric fluoride or with a dihalogenotriazine compound of the general formula (6)

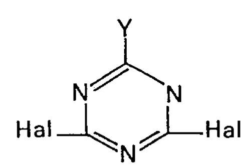

(6)

in which Y has the meaning mentioned in claim 1 and each Hal denotes a chlorine, bromine or fluorine atom, or that an aminoazo compound of the general formula (7)

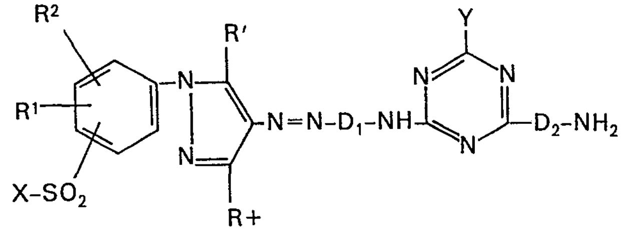

(7)

in which $D_1$, $D_2$, R′, $R^+$, $R^1$, $R^2$, Y and X have the meanings mentioned in claim 1, is diazotized and coupled with a compound of the general formula (4b) mentioned and defined above and in which the moieties R*, R″, $R^3$, $R^4$ and X are in each case identical to or different from the corresponding moieties in the general formula (7).

22. Use of the disazo compounds of the general formula (1) mentioned and defined in claim 1, as dyestuffs for dyeing hydroxy- and/or carboxamine-containing material, in particular fiber material.

## Revendications

1. Composés disazoïques solubles dans l'eau qui répondent à la formule générale 1:

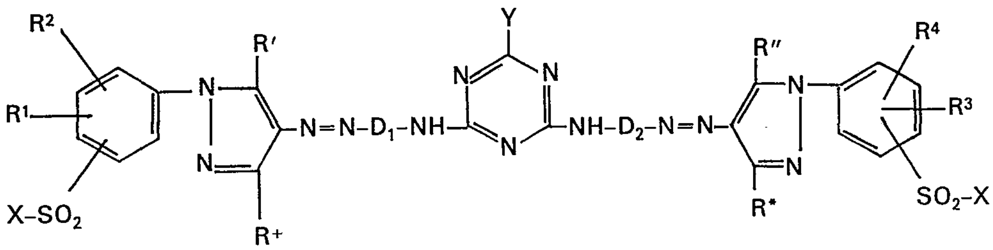

(1)

dans laquelle
$D_1$ et $D_2$ représentent chacun, indépendamment l'un de l'autre, un radical phénylène ou un radical naphtylène, qui peuvent porter chacun un ou deux substituants, plus précisement un atome de chlore, un atome de brome, deux radicaux sulfo, deux radicaux carboxy, deux radicaux alkyles en $C_1$–$C_4$ ou deux radicaux alcoxy en $C_1$–$C_4$,
R′ et R″ représentent chacun le radical amino ou le radical hydroxy, de l'autre,
$R^+$ et R* représentent chacun le radical méthyle, un radical carboxy ou un radical alcoxycarbonyle contenant de 2 à 5 atomes de carbone, tel que le radical éthoxycarbonyle ou le radical méthoxycarbonyle,
$R^1$ et $R^3$ représentent chacun un atome d'hydrogène, un radical alkyle en $C_1$–$C_4$, un radical alcoxy en $C_1$–$C_4$, un atome de chlore ou un atome de brome,
$R^2$ et $R^4$ représentent chacun un atome d'hydrogène, un radical alkyle en $C_1$–$C_4$, un radical alcoxy en $C_1$–$C_4$ ou un atome de chlore,
X représente le radical vinyle ou un radical sulfato-2 éthyle, thiosulfato-2 éthyle ou chloro-2 éthyle, et
Y représente un atome de chlore, de fluor ou de brome, un radical sulfo ou un radical répondant à l'une des formules 2a, 2b et 2c suivantes:

$-O-R^5$ (2a) $-S-R^6$ (2b)

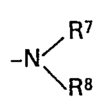

(2c)

dans lesquelles:
$R^5$ représente un atome d'hydrogène, un radical aliphatique éventuellement substitué ou un radical aryle éventuellement substitué,
$R^6$ représente un radical aliphatique éventuellement substitué, un radical aryle éventuellement substitué, ou un radical hétérocyclique aromatique,
$R^7$ représente un atome d'hydrogène, un radical aliphatique éventuellement substitué ou un radical cycloaliphatique éventuellement substitué,
$R^8$ représente un atome d'hydrogène, un radical aliphatique éventuellement substitué ou un radical aryle éventuellement substitué, ou
$R^7$ et $R^8$ forment ensemble et avec l'atome d'azote un noyau hétérocyclique saturé comportant cinq, six ou sept maillons et renfermant éventuellement un ou deux hétéroatomes supplémentaires, par exemple un atome d'azote, d'oxygène ou de soufre,
les symboles $D_1$, $D_2$, $R^+$, R*, $R^1$, $R^2$, $R^3$, $R^4$, X, Y, $R^5$, $R^6$, $R^7$, $R^8$, R′ et R″ qui se correspondent pouvant être identiques l'un à l'autre ou différents l'un de l'autre.

2. Composés disazoïques de formule générale 1 selon la revendication 1 caractérisés en ce que:
$R^5$ représente: un atome d'hydrogène, un radical alkyle en $C_1$–$C_4$ éventuellement porteur d'un ou de deux substituants pris dans l'ensemble constitué par les radicaux alcoxy en $C_1$–$C_4$, sulfo, carboxy, hydroxy, sulfato, phényle, phényles porteurs d'un alkyle en $C_1$–$C_4$, d'un alcoxy en $C_1$–$C_4$, d'un nitro, d'un sulfo, d'un carboxy et/ou d'un chlore naphtyles et naphtyles porteurs d'un alkyle en $C_1$–$C_4$, d'un alcoxy en $C_1$–$C_4$, d'un nitro, d'un

sulfo, d'un carboxy et/ou d'un chlore, un radical phényle, un radical naphtyle, un radical phényle porteur d'un alkyle en $C_1$-$C_4$, d'un alcoxy en $C_1$-$C_4$, d'un nitro, d'un sulfo, d'un carboxy et/ou d'un chlore, ou un radical naphtyle porteur d'un alkyle en $C_1$-$C_4$, d'un alcoxy en $C_1$-$C_4$, d'un sulfo, d'un carboxy et/ou d'un chlore,

$R^6$ représente: un radical alkyle en $C_1$-$C_4$ éventuellement porteur d'un ou de deux substituants pris dans l'ensemble constitué par les radicaux alcoxy en $C_1$-$C_4$, sulfo, carboxy, hydroxy, sulfato, phényle, phényles porteurs d'un alkyle en $C_1$-$C_4$, d'un alcoxy en $C_1$-$C_4$, d'un nitro, d'un sulfo, d'un carboxy et/ou d'un chlore, naphtyles et naphtyles porteurs d'un alkyle en $C_1$-$C_4$, d'un alcoxy en $C_1$-$C_4$, d'un nitro, d'un sulfo, d'un carboxy et/ou d'un chlore, un radical phényle, un radical naphtyle, un radical phényle porteur d'un alkyle en $C_1$-$C_4$, d'un alcoxy en $C_1$-$C_4$, d'un nitro, d'un sulfo, d'un carboxy et/ou d'un chlore, un radical naphtyle porteur d'un alkyle en $C_1$-$C_4$, d'un alcoxy en $C_1$-$C_4$, d'un sulfo, d'un carboxy et/ou d'un chlore, ou un radical benzothiazolyle-2 éventuellement porteur, sur sa partie carbocyclique, d'un alkyle en $C_1$-$C_4$, d'un alcoxy en $C_1$-$C_4$, d'un atome de chlore ou d'un radical sulfo,

$R^7$ représente: un atome d'hydrogène, un radical alkyle en $C_1$-$C_4$ éventuellement porteur d'un ou de deux substituants pris dans l'ensemble constitué par les radicaux alcoxy en $C_1$-$C_4$, sulfo, carboxy, hydroxy, sulfato, phényle et phényles porteurs d'un alkyle en $C_1$-$C_4$, d'un alcoxy en $C_1$-$C_4$, d'un sulfo, d'un carboxy et/ou d'un chlore, ou un radical cyclopentyle ou cyclohexyle éventuellement porteur d'un à trois radicaux méthyles, et

$R^8$ représente: un atome d'hydrogène, un radical alkyle éventuellement porteur d'un ou de deux substituants pris dans l'ensemble constitué par les radicaux alcoxy en $C_1$-$C_4$, sulfo, carboxy, hydroxy, sulfato, phényle et phényles porteurs d'un alkyle en $C_1$-$C_4$, d'un alcoxy en $C_1$-$C_4$, d'un sulfo, d'un carboxy et/ou d'un chlore, un radical phényle éventuellement porteur d'un ou de deux substituants pris dans l'ensemble constitué par les radicaux hydroxy, carboxy, sulfo, alkyles en $C_1$-$C_4$, alcoxy en $C_1$-$C_4$ et le chlore, un radical naphtyle éventuellement porteur d'un, de deux ou de trois substituants pris dans l'ensemble constitué par le radicaux hydroxy, carboxy, sulfo, alkyles en $C_1$-$C_4$, alcoxy en $C_1$-$C_4$ et le chlore, le radical hydroxy, le radical amino, le radical phénylamino ou un radical alkylamino dont le radical alkyle contient de 1 à 4 atomes de carbone,

$R^7$ et $R^8$ pouvant avoir la même signification ou avoir des significations différentes, ou $R^7$ et $R^8$ forment ensemble, et avec l'atome d'azote, un radical provenant du cycle de la morpholine, de la pipéridine ou de la pipérazine.

3. Composés disazoïques selon l'une des revendications 1 et 2, caractérisés en ce que $R^+$ et $R^*$ représentent chacun, indépendamment l'un de l'autre, un radical méthyle, carboxy ou méthoxycarbonyle.

4. Composés disazoïques selon l'une quelconque des revendications 1, 2 et 3, caractérisés en ce que $R^1$ et $R^3$ représentent chacun un atome d'hydrogène, un alcoxy en $C_1$-$C_4$ ou un atome de chlore ou de brome, et $R^2$ et $R^4$ représentent chacun un atome d'hydrogène, un alkyle en $C_1$-$C_4$ ou un alcoxy en $C_1$-$C_4$, les symboles $R^1$, $R^2$, $R^3$ et $R^4$ pouvant avoir, les uns par rapport aux autres, des significations identiques ou différentes.

5. Composés disazoïques selon l'une quelconque des revendications 1, 2, 3 et 4, caractérisés en ce que $D_1$ et $D_2$ représentent chacun, indépendamment l'un de l'autre, un radical m- ou p-phénylène éventuellement porteur d'un ou de deux substituants, plus précisément d'un atome de chlore, d'un radical carboxy, de deux radicaux alkyles en $C_1$-$C_4$, de deux radicaux alcoxy en $C_1$-$C_4$ ou de deux radicaux sulfo, ou un radical naphtylène éventuellement porteur d'un ou de deux radicaux sulfo.

6. Composés disazoïques selon l'une quelconque des revendications 1 à 5, caractérisés en ce que les deux radicaux $-SO_2-X$ se trouvent chacun en une position méta ou en la position para sur le noyau benzénique correspondant.

7. Composés disazoïques selon l'une des revendications 1 et 2, caractérisés en ce que chacun des deux radicaux $-SO_2-X$ se trouvent, sur son noyau benzénique, en position méta ou para relativement à l'atome d'azote du cycle pyrazolique, $R^1$ et $R^3$ représentent chacun un atome d'hydrogène ou le radical méthoxy, $R^1$ et $R^3$ ayant la même signification ou des significations différentes, $R^2$ et $R^4$ représentent chacun un atome d'hydrogène, $R'$ et $R''$ représentent chacun le radical hydroxy, $R^+$ et $R^*$ représentent chacun le radical méthyle, $D_1$ représente un radical de formule 8a ou 8b et $D_2$ un radical de formule 8c ou 8d:

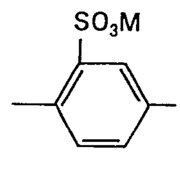
(8a)

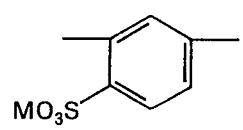
(8b)

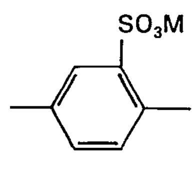
(8c)

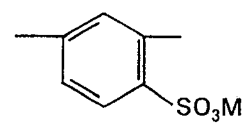
(8d)

formules dans lesquelles M représente un atome d'hydrogène, un métal alcalin ou l'équivalent d'un métal alcalino-terreux.

8. Composés disazoïques selon la revendication 1 qui répondent à la formule générale 9:

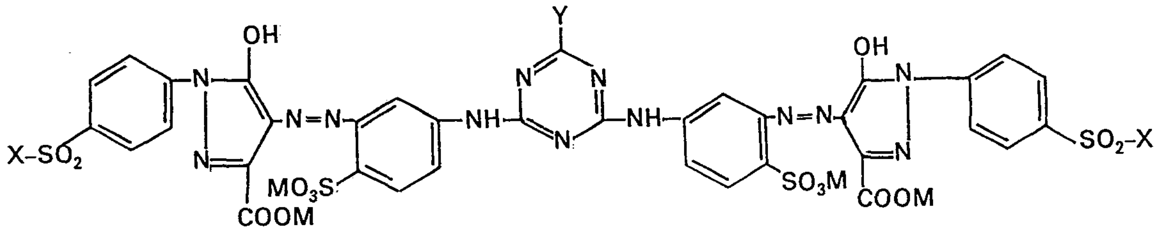

(9)

dans laquelle M représente un atome d'hydrogène, un métal alcalin ou l'équivalent d'un métal alcalino-terreux, tandis que X et Y ont les significations qui leur ont été données à la revendication 1 ou à la revendication 2.

9. Composés disazoïques selon la revendication 1 qui répondent à la formule générale 10:

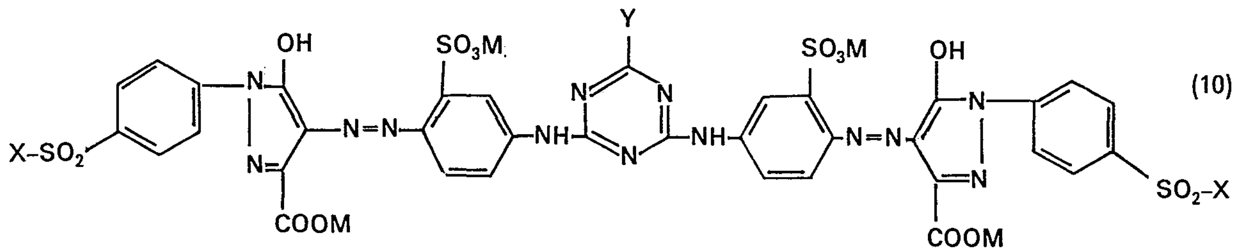

(10)

dans laquelle M représente un atome d'hydrogène, un métal alcalin ou l'équivalent d'un métal alcalino-terreux, tandis que X et Y ont les significations qui leur ont été données à la revendication 1 ou à la revendication 2.

10. Composés disazoïques selon la revendication 1 qui répondent à la formule générale 11:

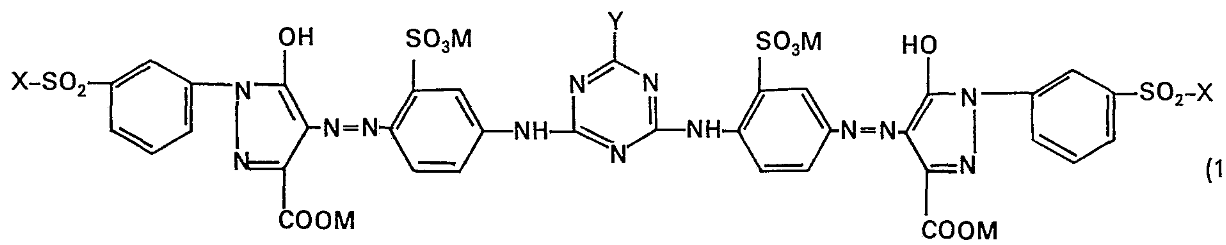

(11)

dans laquelle M représente un atome d'hydrogène, un métal alcalin ou l'équivalent d'un métal alcalino-terreux, tandis que X et Y ont les significations qui leur ont été données à la revendication 1 ou à la revendication 2.

11. Composés disazoïques selon la revendication 1 qui répondent à la formule générale 12:

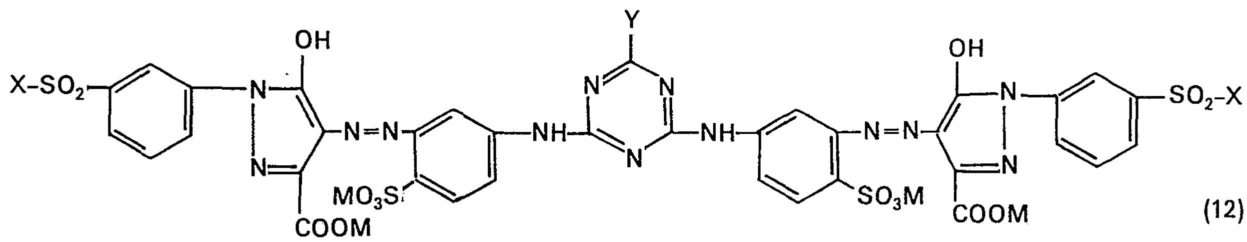

(12)

dans laquelle M représente un atome d'hydrogène, un métal alcalin ou l'équivalent d'un métal alcalino-terreux, tandis que X et Y ont les significations qui leur ont été données à la revendication 1 ou à la revendication 2.

12. Composés disazoïques selon la revendication 1 qui répondent à la formule générale 13:

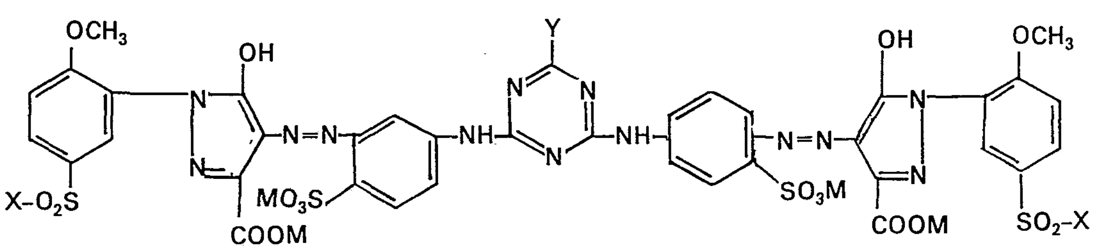

(13)

dans laquelle M représente un atome d'hydrogène, un métal alcalin ou l'équivalent d'un métal alcalino-terreux, tandis que X et Y ont les significations qui leur ont été données à la revendication 1 ou à la revendication 2.

13. Composés disazoïques selon la revendication 1 qui répondent à la formule générale 14:

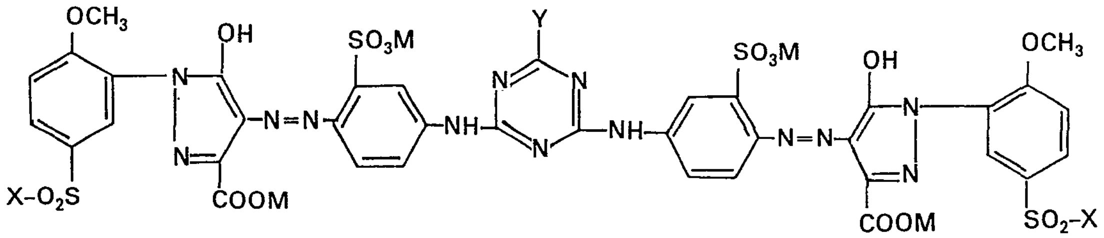

(14)

dans laquelle M représente un atome d'hydrogène, un métal alcalin ou l'équivalent d'un métal alcalino-terreux, tandis que X et Y ont les significations qui leur ont été données à la revendication 1 ou à la revendication 2.

14. Composés disazoïques selon l'une quelconque des revendications 1 à 7, caractérisés en ce que $R^+$ et $R^*$ représentent chacun un radical carboxy.

15. Composés disazoïques selon l'une quelconque des revendications 1 à 6, caractérisés en ce que R′ et R″ représentent chacun le radical hydroxy.

16. Composés disazoïques selon l'une quelconque des revendications 1 à 7, caractérisés en ce que Y représente un atome de chlore.

17. Composés disazoïques selon l'une quelconque des revendications 10 à 13, caractérisés en ce que Y représente un atome de chlore.

18. Composés disazoïques selon l'une des revendications 8 et 9, caractérisés en ce que Y représente un atome de chlore.

19. Composés disazoïques selon l'une quelconque des revendications 1 à 18, caractérisés en ce que Y représente le radical sulfato-2 éthyle.

20. Composés disazoïques selon l'une quelconque des revendications 1 à 13, caractérisés en ce que M représente un atome d'hydrogène, de sodium ou de potassium.

21. Procédé de préparation des composés disazoïques selon la revendication 1, procédé caractérisé en ce qu'on tétrazote un composé diaminé répondant à la formule générale 3:

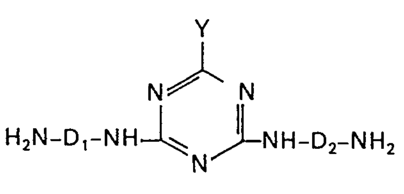

(3)

dans laquelle $D_1$, $D_2$ et Y ont les significations données à la revendication 1, et on fait réagir (copulation) le tétrazoïque avec, comme copulant, un composé de formule générale 4a et avec, également comme copulant, un composé de formule générale 4b:

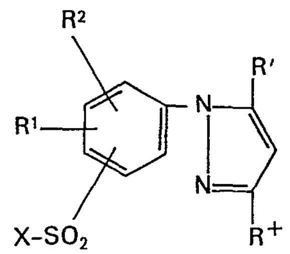

(4a)

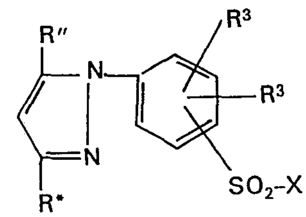

(4b)

formules dans lesquelles $R^+$, $R^*$, R′, R″, $R^1$, $R^2$, $R^3$, $R^4$ et les deux X ont les significations données à la revendication 1, les symboles qui se correspondent pouvant avoir la même signification ou des significations différentes, en des quantités équivalentes, ou en ce qu'on fait réagir (condensation) un composé aminoazoïque de formule générale 5a et un composé amino-azoïque de formule générale 5b:

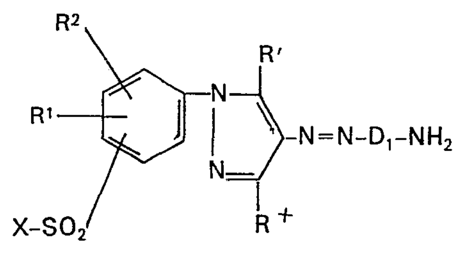

(5a)

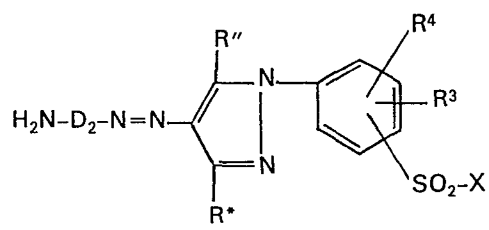

(5b)

formules dans lequelles $D_1$, $D_2$, R′, R″, $R^+$, $R^*$, $R^1$, $R^2$, $R^3$, et $R^4$ ainsi que les deux X ont les significations données à la revendication 1, et peuvent avoir, lorsqu'ils se correspondent, la même signification ou des significations différentes, en des quantités équivalentes, avec le chlorure de cyanuryle, le bromure de cyanuryle ou le fluorure de cyanuryle ou avec un composé dihalogéno-triazinique répondant à la formule générale 6:

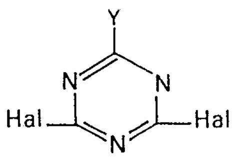

(6)

dans laquelle Y a la signification donnée à la revendication 1 et chacun des symboles Hal représente un atome de chlore, de brome ou de fluor, ou en ce qu'on diazote un composé aminoazoïque répondant à la formule générale 7:

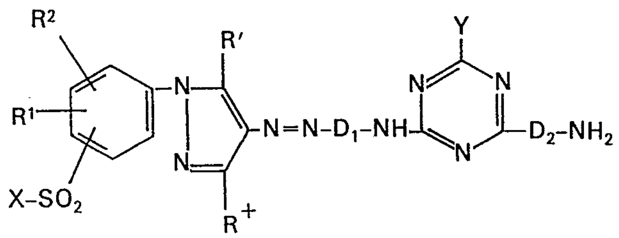

(7)

dans laquelle $D_1$, $D_2$, R′, $R^+$, $R^1$, $R^2$, Y et X ont les significations données à la revendication 1, et on copule le diazoïque avec un composé répondant à la formule générale 4b qui a été représentée et définie ci-dessus et dans laquelle les symbole $R^*$, R″, $R^3$, $R^4$ et X peuvent avoir chacun, par rapport aux symboles correspondants présents dans la formule 7, la même signification ou une signification différente.

22. Application des composés disazoïques répondant à la formule générale 1 qui a été représentée et définie à la revendication 1, comme colorants pour la teinture de matières fibreuses contenant des radicaux hydroxy et/ou des radicaux carbamoyles, plus particulièrement de matières fibreuses de ce genre.